# EUROPEAN PATENT SPECIFICATION

(11) **EP 1 659 148 B1**
(45) Date of publication and mention of the grant of the patent: **18.09.2013**
(21) Application number: 04719605.0
(22) Date of filing: 11.03.2004
(51) Int. Cl.: C08K 5/52, C08K 5/5399, C09K 21/12

(54) **REACTIVE FLAME RETARDANT AND FLAME-RETARDANT PROCESSED RESIN OBTAINED WITH THE SAME**
REAKTIVES FLAMMSCHUTZMITTEL UND DAMIT ERHALTENES FLAMMWIDRIGES VERARBEITETES HARZ
IGNIFUGEANT REACTIF ET RESINE TRAITEE PAR IGNIFUGEANT OBTENUE A L'AIDE DE CE DERNIER

(30) Priority: 01.08.2003 JP 2003285152; 01.08.2003 JP 2003285156; 01.08.2003 JP 2003285167; 01.08.2003 JP 2003285173
(43) Date of publication of application: 24.05.2006
(73) Proprietor: Fuji Electric Co., Ltd., Kawasaki-shi, Kanagawa 210-0856 (JP); Shigehara, Kiyotaka, Tokyo 166-0003 (JP)
(72) Inventor: KANNO, Toshiyuki, Yokosuka-shi, Kanagawa 240-0194 (JP); ONITSUKA, Asuka, Tokyo 191-8502 (JP); YANASE, Hironori, Yokosuka-shi, Kanagawa 240-0194 (JP); SHIGEHARA, Kiyotaka, Suginami-ku, Tokyo 166-0003 (JP)
(74) Representative: Beacham, Annabel Rose
(86) International application number: PCT/JP2004/003160
(87) International publication number: WO 2005/012415

(56) References cited:
- JP-A- 8 059 887
- JP-A- 8 060 026
- JP-A- 2002 146 073
- JP-A- 2003 535 182
- JP-A- 2004 123 823

## Description

### TECHNICAL FIELD

The present invention relates to a flame retardant for use in a resin molded product or the like and a product made of flame-retarded resin obtained with the same. More specifically, the present invention relates to a non-halogen-based flame retardant containing no halogen.

### BACKGROUND ART

Thermoplastic resins such as polyester and polyamide, and thermosetting resins such as epoxy each have excellent moldability, excellent mechanical strength, and excellent electrical characteristics for a general-purpose resin and an engineering plastic, so they have been used in various fields including the fields of electricity and electronics. In addition, products such as those obtained by molding those resins are requested to be flame retardant in terms of safety for the purpose of preventing a fire at a high temperature. For example, the standards such as UL94 have been provided as flame retardancy grades.

It is generally known that the addition of a halogen substance is particularly effective in imparting flame retardancy to such resin material. In view of this, a halogen substance is added to a resin before use. The mechanism of the halogen-based flame retardant is considered to be as follows. A halogenated radical is generated mainly by heat decomposition, and the halogenated radical captures an organic radical serving as a burning source, so a chain reaction of combustion is stopped and high flame retardancy is exerted.

However, a flame retardant containing a large amount of halogen compound may generate dioxin and the like depending on combustion conditions, so there has been a growing demand for reducing the amount of halogen in recent years from the viewpoint of reducing a load to the environment. Therefore, various kinds of non-halogen-based flame retardants each containing no halogen-based compound have been examined.

Inorganic flame retardants such as a metal hydrate and red phosphorus, organophosphorus-based flame retardants such as a phosphoric ester, and the like have been examined as such non-halogen-based flame retardants. However, a metal hydrate such as aluminum hydroxide or magnesium hydroxide does not have a very high flame retardancy imparting effect, so a resin must be blended with a large amount of the metal hydrate. Therefore, the moldability of a resin is apt to deteriorate and the mechanical strength of a molded product to be obtained or the like is apt to reduce, thereby causing a problem in that applications of a usable molded product or the like are limited. In addition, red phosphorus is apt to inhibit electrical characteristics owing to insufficient dispersion, to generate a dangerous gas, to reduce moldability, and to cause bleeding, although it has a high flame retardancy effect.

On the other hand, as a phosphorus-based flame retardant such as a phosphoric ester, for example, JP-A-2002-20394 discloses that a piperazine salt, an acidic phosphoric ester having a phosphorinane structure, or alkylenediamine salt having 1 to 6 carbon atoms, is used as a flame retardant.

In addition, JP-A-2002-80633 discloses a flame retardant for a resin mainly composed of a salt composed of an aromatic phosphoric ester such as monophenyl phosphate or monotolyl phosphate and an aliphatic amine such as piperazine.

Furthermore, JP-A-2002-138096 discloses that a phosphorus-containing phenol compound is used as a flame retardant for providing a flame-retardant epoxy resin which exerts an excellent flame retardancy effect as a halogen-free flame-retardant prescription and which is excellent in physical properties, such as heat resistance and water resistance, of a molded product, and in adhesiveness in application for an electrical laminated plate.

Furthermore, JP-A-05-331179 discloses an organic cyclic phosphorus compound having a bifunctional hydroxyl group particularly useful as a stabilizer for a polymer compound or as a flame retardant.

However, phosphoric ester compounds used in JP-A-2002-20394, JP-A-2002-80633, and JP-A-2002-138096 described above must be blended at high concentrations because of their insufficient flame retardancy.

In addition, none of the compounds has a reactive group in a molecule for reacting with a resin component, so a flame retardant component is apt to migrate in a resin, thereby causing a problem in that the flame retardant component volatilizes at the time of molding to contaminate a die, or a flame retardant bleeds out to the surface of the resin. The problem is responsible for reductions in, for example, thermal, mechanical, and electrical characteristics of a product made of the resin.

An organic cyclic phosphorus compound described in JP-A-05-331179 functions as a reactive flame retardant in a resin having a reactive group capable of binding to a hydroxyl group such as an epoxy resin. However, crosslinkage cannot be formed in a resin having no reactive group capable of binding to a hydroxyl group such as a typical olefin resin. In this case as well, a flame retardant component is apt to migrate in a resin, thereby causing a problem in that the flame retardant component volatilizes at the time of molding to contaminate a die or a flame retardant bleeds out to the surface of the resin.

Therefore, an object of the present invention is to provide: a reactive flame retardant which is excellent in flame retardancy and heat resistance when added to a resin in a small amount, can be prevented from bleeding out or the like, and is excellent in the mechanical characteristics, electrical characteristics, dimensional stability, and moldability of a molded product; and a product made of flame-retarded resin.

### DISCLOSURE OF THE INVENTION

That is, according to one aspect of the present invention, there is provided a reactive flame retardant that has reactivity with a resin and binds with the resin by virtue of the reactivity to impart flame retardancy, the reactive flame retardant being characterized by comprising an organophosphorus compound represented by the following general formula (Ia) or (Ib).

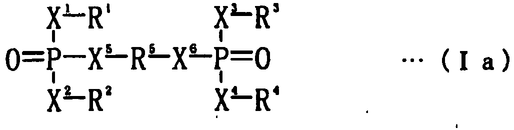

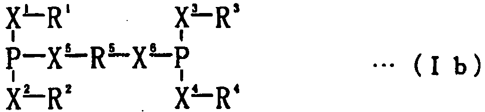

In the general formula (Ia) or (Ib) : R¹ to R⁴ each represent CH₂=CY¹-Y²- or a monofunctional aromatic hydrocarbon-based group which may contain a hetero atom; R⁵ represents a bifunctional aromatic hydrocarbon-based group which may contain a hetero atom; X¹ to X⁴ each represent a group selected from -O-, -NH-, and -(CH₂=CY¹-Y²)N- and at least one of X¹ to X⁴ contains -NH- or -(CH₂=CY¹-Y²)N-; X⁵ and X⁶ each represent -NH- or -(CH₂=CY¹-Y²)N-; at least one of R¹ to R⁴ and X¹ to X⁶ contains CH₂=CY¹-Y²-; Y¹ represents hydrogen or a methyl group; Y² represents an alkylene group having 1 to 5 carbon atom(s) or -COO-Y³-; and Y³ represents an alkylene group having 2 to 5 carbon atoms.

According to another aspect of the present invention, there is provided a reactive flame retardant that has reactivity with a resin and binds with the resin by virtue of the reactivity to impart flame retardancy, the reactive flame retardant being characterized by comprising an organophosphorus compound represented by the following general formula (IIa) or (IIb). 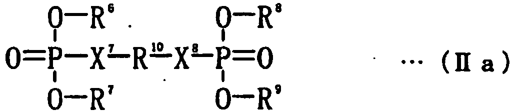 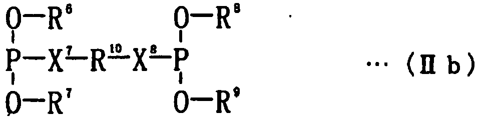 In the general formula (IIa) or (IIb): R⁶ to R⁹ each represent CH₂=CY⁴-Y⁵- or a monofunctional aromatic hydrocarbon-based group which may contain a hetero atom; R¹⁰ represents a bifunctional aromatic hydrocarbon-based group which may contain a hetero atom; X⁷ and X⁸ each represent -NH- or -(CH₂=CY⁴-Y⁵)N-; at least one of R⁶ to R⁹ and X⁷ and X⁸ contains CH₂=CY⁴-Y⁵-; Y⁴ represents hydrogen or a methyl group; Y⁵ represents an alkylene group having 1 to 5 carbon atom(s) or -COO-Y⁶-; and Y⁶ represents an alkylene group having 2 to 5 carbon atoms.

According to another aspect of the present invention, there is provided a reactive flame retardant that has reactivity with a resin and binds with the resin by virtue of the reactivity to impart flame retardancy, the reactive flame retardant being characterized by comprising an organophosphorus compound represented by the following general formula (IIIa) or (IIIb). 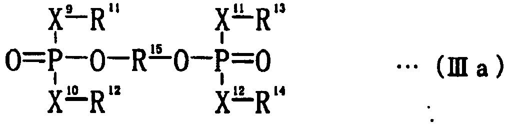 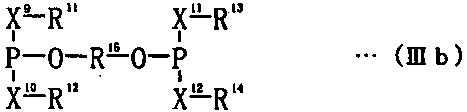 In the general formula (IIIa) or (IIIb) : R¹¹ to R¹⁴ each represent CH₂=CY⁷-Y⁸- or a monofunctional aromatic hydrocarbon-based group which may contain a hetero atom; R¹⁵ represents a bifunctional aromatic hydrocarbon-based group which may contain a hetero atom; X⁹ to X¹² each represent a group selected from -O-, -NH-, and -(CH₂=CY⁷-Y⁸)N- and at least one of X⁹ to X¹² contains -NH- or -(CH₂=CY⁷-Y⁸)N-; at least one of R¹¹ to R¹⁴ and X⁹ to X¹² contains CH₂=CY⁷-Y⁸-; Y⁷ represents hydrogen or a methyl group; Y⁸ represents an alkylene group having 1 to 5 carbon atom(s) or -COO-Y⁹-; and Y⁹ represents an alkylene group having 2 to 5 carbon atoms.

According to another aspect of the present invention, there is provided a reactive flame retardant that has reactivity with a resin and binds with the resin by virtue of the reactivity to impart flame retardancy, the reactive flame retardant being characterized by comprising an organophosphorus compound represented by the following general formula (IVa) or (IVb). 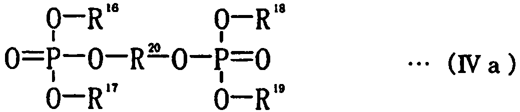 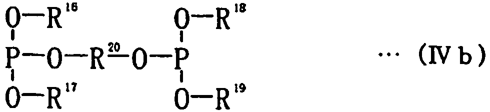 In the general formula (IVa) or (IVb): R¹⁶ to R¹⁹ each represent CH₂=CY¹⁰-Y¹¹- or a monofunctional aromatic hydrocarbon-based group which may contain a hetero atom; at least one of R¹⁶ to R¹⁹ contains CH₂=CY¹⁰-Y¹¹-; R²⁰ represents a bifunctional aromatic hydrocarbon-based group which may contain a hetero atom; Y¹⁰ represents hydrogen or a methyl group; Y¹¹ represents an alkylene group having 1 to 5 carbon atom(s) or -COO-Y¹²-; and Y¹² represents an alkylene group having 2 to 5 carbon atoms.

Hereinafter, the general formulae (Ia) and (Ib) may be collectively referred to as general formulae (I), the general formulae (IIa) and (IIb) may be collectively referred to as general formulae (II), the general formulae (IIIa) and (IIIb) may be collectively referred to as general formulae (III), and the general formulae (IVa) and (IVb) may be collectively referred to as general formulae (IV).

According to the reactive flame retardant of any one of the general formulae (I) to (IV), an organophosphorus compound having at least one unsaturated bond at the end thereof in one molecule is used, so a reaction in which the unsaturated bond at the end binds to a resin by means of heat or a radiation for a reaction can be performed. Thus, since a component of flame retardant can be stably present in the resin, the flame retardant can be prevented from bleeding out and flame retardancy can be imparted for a long time period even when the flame retardant is added in a small amount.

In addition, the reactive flame retardant contains two phosphorus atoms in one molecule, so the phosphorus content is high and flame retardancy can be improved.

Furthermore, since the reactive flame retardant contains an aromatic hydrocarbon-based group which may contain a hetero atom, the molecular weight increases and the reactive flame retardant becomes stable in terms of energy. The heat decomposition temperature increases owing to the foregoing, so the evaporation of the flame retardant at the time of kneading with a resin or molding as well as the decomposition of the flame retardant due to heat or shear at the time of molding can be prevented, thereby moldability is improved. In addition, since the reactive flame retardant contains a large amount of carbon, a so-called char effect is obtained, in which flame retardancy is improved through the generation and deposition of soot at the time of decomposition of a resin.

According to another aspect of the present invention, there is provided a product made of flame-retarded resin obtained by solidifying a resin composition which contains the reactive flame retardant and a resin and then reacting the resin with the reactive flame retardant by heating or irradiation with a radiation, the product made of flame-retarded resin being characterized by comprising 1 to 20 mass% of the reactive flame retardant with respect to an entirety of the product made of flame-retarded resin. According to the product made of flame-retarded resin of the present invention, since the unsaturated bond at the end of the organophosphorus compound is caused to react with the resin by heating or irradiation with a radiation, a component of flame retardant is stably present in the resin. As a result, the flame retardant can be prevented from bleeding out and a flame retardancy effect can be improved. Therefore, flame retardancy can be imparted for a long time period even when the amount of the reactive flame retardant to be added is as small as 1 to 20 mass% with respect to the entirety of the product made of flame-retarded resin.

In addition, through bonding between the flame retardant and the resin, the resin crosslinks to provide a three-dimensional network structure. Therefore, a resin can be molded, so that the resin product obtained can be excellent in all of chemical stability, heat resistance, mechanical characteristics, electrical characteristics, dimensional stability, flame retardancy, and moldability can be obtained. In particular, heat resistance and mechanical strength can be improved. Furthermore, the resin can be molded into a thin shape.

In further aspect of the product made of flame-retarded resin, the resin composition preferably contains two or more kinds of the reactive flame retardants at least one kind of which is multifunctional.

According to this aspect, since the reaction rate accompanied by crosslinking can be in control through combinational use of flame retardants different from each other in reactivity, the contraction, and the like of the resin due to the abrupt advancement of a crosslinking reaction can be prevented. In addition, the incorporation of a multifunctional flame retardant results in the formation of a uniform three-dimensional network structure with the organophosphorus compound, so heat resistance and flame retardancy are improved and more stable physical properties of resin are obtained.

In further aspect of the product made of flame-retarded resin, the resin composition preferably further contains a flame retardant other than the aforementioned reactive flame retardant, and the flame retardant other than the aforementioned reactive flame retardant is preferably a cyclic nitrogen-containing compound having at least one unsaturated group at an end thereof.

According to this aspect, with the cyclic nitrogen-containing compound having at least one unsaturated group at the end thereof, bonding between the flame retardant and the resin causes the resin to crosslink to provide a three-dimensional network structure as well. Therefore, while the entire cost of the flame retardants can be reduced owing to the combined use of the flame retardants, a resin can be molded, so that the resin product obtained can be excellent in all of chemical stability, heat resistance, mechanical characteristics, electrical characteristics, dimensional stability, flame retardancy, and moldability can be obtained. In addition, the incorporation of nitrogen additionally improves compatibility with the resin particularly in the case where a polyamide-based resin is used as the resin.

In further aspect of the product made of flame-retarded resin, the resin composition preferably further contains a flame retardant other than the aforementioned reactive flame retardant, and the flame retardant other than the aforementioned reactive flame retardant is preferably an additive-type flame retardant having no reactivity. The combined use of the reactive flame retardant with an additive-type flame retardant having no reactivity such as a phosphoric ester-based, melamine-based, metal hydroxide, or silicon-based flame retardant can additionally improve flame retardancy owing to a synergistic effect as compared to that in the case where the reactive flame retardant is used alone, and can reduce the cost of the flame retardant.

In further aspect of the product made of flame-retarded resin, the resin composition preferably further contains a crosslinking agent having no flame retardancy but having reactivity with the resin, and the crosslinking agent is preferably a multifunctional monomer or oligomer having an unsaturated group at an end of main skeleton thereof.

According to this aspect as well, bonding between the crosslinking agent and the resin causes the resin to crosslink to provide a three-dimensional network structure. Therefore, a resin can be molded, so that the resin product obtained can be excellent in all of chemical stability, heat resistance, mechanical characteristics, electrical characteristics, dimensional stability, flame retardancy, and moldability can be obtained.

In further aspect of the product made of flame-retarded resin, the product made of flame-retarded resin preferably contains 1 to 35 mass% of an inorganic filler with respect to the entirety of the product made of flame-retarded resin. Inparticular, the product made of flame-retarded resin preferably contains, as the inorganic filler, 1 to 10 mass% of a laminar clay composed of laminating silicate layers with respect to the entirety of the product made of flame-retarded resin. According to this aspect, a resin product, the contraction and decomposition thereof due to crosslinking being suppressed, which is excellent in dimensional stability, can be obtained. In addition, when laminar clay obtained by laminating silicate layers is incorporated as the inorganic filler, the laminar clay is dispersed into the resin in a nano order to form a hybrid structure with the resin. This leads to an improvement in the heat resistance, mechanical strength, and the like, of the product made of flame-retarded resin to be obtained.

In further aspect of the product made of flame-retarded resin, the product made of flame-retarded resin preferably contains 5 to 40 mass% of reinforced fibers with respect to the entirety of the product made of flame-retarded resin. According to this aspect, the incorporation of the reinforced fibers can improve the mechanical strength of the resin product such as tensile strength, compressive strength, bending strength, or impact strength. Furthermore, it can prevent reductions in physical properties due to moisture and temperature.

In further aspect of the product made of flame-retarded resin, the product made of flame-retarded resin is preferably obtained by a reaction between the resin and the reactive flame retardant through irradiation with an electron beam or γ ray at a dose of 10 kGy or more. According to this aspect, after having been solidified by molding or the like, the resin can be crosslinked by a radiation, so a resin product can be produced with high productivity. In addition, at a dose in the above range, uneven formation of a three-dimensional network structure due to an insufficient dose can be prevented as well as bleeding out due to the remaining of an unreacted crosslinking agent. In particular, at an irradiation dose of 10 to 45 kGy, deformation due to the internal strain of the resin product, contraction, and the like, resulting from an oxidation decomposition product generated by an excessive dose, can be prevented as well.

In further aspect of the product made of flame-retarded resin, the product made of flame-retarded resin is also preferably obtained by a reaction between the resin and the reactive flame retardant at a temperature higher than a temperature at which the resin composition is molded by 5°C or higher. According to this aspect, a radiation irradiator or the like is not needed. In particular the product made of flame-retarded resin can be suitably used for a resin composition containing a thermosetting resin.

In further aspect of the product made of flame-retarded resin, the product made of flame-retarded resin is preferably one selected from a molded product, a coating film, and a sealing compound. As described above, the product made of flame-retarded resin of the present invention has excellent flame retardancy and can be prevented from bleeding out. Therefore, in addition to the use as a typical resin molded product, it can be formed into a coating film as a coating agent or the like or can be suitably used as a sealing compound for a semiconductor, a liquid crystal material, or the like.

In further aspect of the product made of flame-retarded resin, the product made of flame-retarded resin is preferably used as an electrical component or an electronic component. As described above, the product made of flame-retarded resin of the present invention is excellent in all of heat resistance, mechanical characteristics, electrical characteristics, dimensional stability, flame retardancy, and moldability, so it can be particularly suitably used as an electrical component or an electronic component in which the above physical properties are particularly stringently demanded.

### BEST MODE FOR CARRYING OUT THE INVENTION

Hereinafter, the present invention will be described in detail. At first, the reactive flame retardant of the present invention will be described.

The reactive flame retardant of the present invention is a reactive flame retardant that has reactivity with a resin and binds with the resin by virtue of the reactivity to impart flame retardancy. Specifically, the reactive flame retardant is characterized by being an organophosphorus compound represented by any one of the following general formulae (Ia) to (IVb). 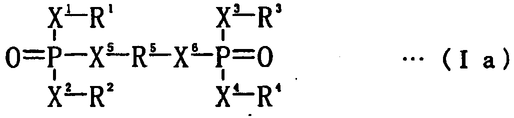 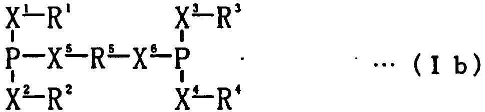 In the general formula (Ia) or (Ib) : R¹ to R⁴ each represent CH₂=CY¹-Y²- or a monofunctional aromatic hydrocarbon-based group which may contain a hetero atom; R⁵ represents a bifunctional aromatic hydrocarbon-based group which may contain a hetero atom; X¹ to X⁴ each represent a group selected from -O-, -NH-, and -(CH₂=CY¹-Y²)N- and at least one of X¹ to X⁴ contains -NH- or -(CH₂=CY¹=Y²)N-; X⁵ and X⁶ each represent -NH- or -(CH₂=CY¹-Y²)N-; at least one of R¹ to R⁴ and X¹ to X⁶ contains CH₂=CY¹-Y²-; Y¹ represents hydrogen or a methyl group; Y² represents an alkylene group having 1 to 5 carbon atom(s) or -COO-Y³-; and Y³ represents an alkylene group having 2 to 5 carbon atoms.

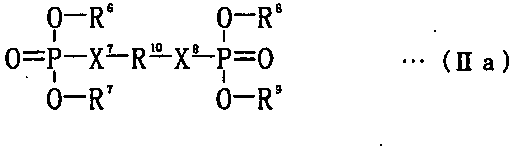

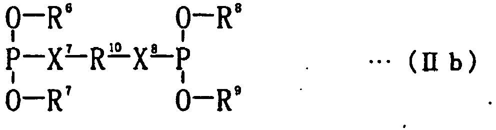

In the general formula (IIa) or (IIb): R⁶ to R⁹ each represent CH₂=CY⁴-Y⁵- or a monofunctional aromatic hydrocarbon-based group whichmay contain a hetero atom; R¹⁰ represents a bifunctional aromatic hydrocarbon-based group which may contain a hetero atom; X⁷ and X⁸ each represent -NH- or -(CH₂=CY⁴-Y⁵)N-; at least one of R⁶ to R⁹ and X⁷ and X⁸ contains CH₂=CY⁴-Y⁵-; Y⁴ represents hydrogen or a methyl group; Y⁵ represents an alkylene group having 1 to 5 carbon atom(s) or -COO-Y⁶-; and Y⁶ represents an alkylene group having 2 to 5 carbon atoms.

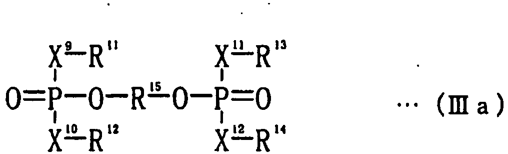

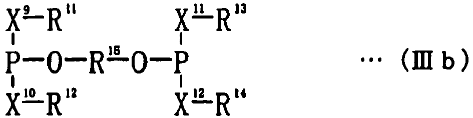

In the general formula (IIIa) or (IIIb): R¹¹ to R¹⁴ each represent CH₂=CY⁷-Y⁸- or a monofunctional aromatic hydrocarbon-based group whichmaycontainaheteroatom; R¹⁵ represents a bifunctional aromatic hydrocarbon-based group which may contain a hetero atom; X⁹ to X¹² each represent a group selected from -O-, -NH-, and -(CH₂=CY⁷-Y⁸)N- and at least one of X⁹ to X¹² contains -NH- or -(CH₂=CY⁷-Y⁸)N-; at least one of R¹¹ to R¹⁴ and X⁹ to X¹² contains CH₂=CY⁷-Y⁸-; Y⁷ represents hydrogen or a methyl group; Y⁸ represents an alkylene group having 1 to 5 carbon atom(s) or -COO-Y⁹-; and Y⁹ represents an alkylene group having 2 to 5 carbon atoms.

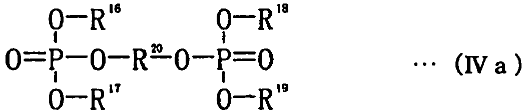

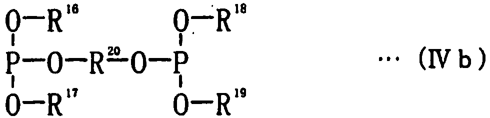

In the general formula (IVa) or (IVb): R¹⁶ to R¹⁹ each represent CH₂=CY¹⁰-Y¹¹- or a monofunctional aromatic hydrocarbon-based group which may contain a hetero atom; at least one of R¹⁶ to R¹⁹ contains CH₂=CY¹⁰-Y¹¹-; R²⁰ represents a bifunctional aromatic hydrocarbon-based group which may contain a hetero atom; Y¹⁰ represents hydrogen or a methyl group; Y¹¹ represents an alkylene group having 1 to 5 carbon atom(s) or -COO-Y¹²-; and Y¹² represents an alkylene group having 2 to 5 carbon atoms.

Out of the above organophosphorus compounds, the compounds represented by the general formulae (Ia), (IIa), (IIIa), and (IVa) are each a compound in which phosphorus is pentavalent, and the compounds represented by the general formulae (Ib), (IIb), (IIIb), and (IVb) are each a compound in which phosphorus is trivalent.

The above organophosphorus compounds each have at least one endunsaturatedbondat the end thereof such as CH₂=CY¹-Y²-, CH₂=CY⁴-Y⁵, CH₂=CY⁷-Y⁸-, or CH₂=CY¹⁰-Y¹¹. The term "end unsaturated bond" as used herein refers to a functional group to be bound to a resin by heating or irradiation with a radiation or the like to be described later. It should be noted that each of the compounds preferably has two or more of end unsaturated bonds in one molecule.

Specific examples of the end unsaturated bond such as a CH₂=CY¹-Y²- described above include CH₂=CH-CH₂-, CH₂=CH-CH₂CH₂CH₂-, CH₂=C(CH₃)-CH₂-, CH₂=CHCOO-CH₂CH₂-, and CH₂=C(CH₃)COO-CH₂CH₂-.

A monofunctional aromatic hydrocarbon-based group which may contain a hetero atom represented by any one of R¹ to R⁴, R⁶ to R⁹, R¹¹ to R¹⁴, and R¹⁶ to R¹⁹ described above is preferably an aromatic hydrocarbon-based group having 6 to 14 carbon atoms. Specific examples of such monofunctional aromatic hydrocarbon-based group which may contain a hetero atom include -C₆H₅ (a phenyl group), -C₆H₅OH (a hydroxyphenyl group), -C₆H₅-C₆H₅OH (a hydroxybiphenyl group), -CH₂C₆H₅ (a benzyl group), -α-C₁₀H₇ (an α-naphthyl group), and -β-C₁₀H₇ (a β-naphthyl group).

A bifunctional aromatic hydrocarbon-based group which may contain a hetero atom represented by any one of R⁵, R¹⁰, R¹⁵, and R²⁰ is preferably an aromatic hydrocarbon-based group having 10 to 14 carbon atoms. Specific examples of such aromatic hydrocarbon-based group having 10 to 14 carbon atoms include -p-C₆H₄-p-C₆H₄-, -p-C₆H₄-CH₂-p-C₆H₄-, -p-C₆H₄-C(CH₃)₂-p-C₆H₄-, -p-C₆H₄-C(=O)-p-C₆H₄-, -p-C₆H₄-SO₂-p-C₆H₄-, and 2, 6-C₁₀H₆< (a 2,6-naphthylene group).

In the present invention, the term "aromatic hydrocarbon-based group" means not only an aromatic hydrocarbon group such as a phenyl group or -p-C₆H₄-p-C₆H₄- described above but also a group obtained by incorporating a hetero atom such as oxygen or sulfur into an aromatic hydrocarbon group such as a hydroxyphenyl group or -p-C₆H₄-SO₂-p-C₆H₄- described above.

Specific examples of the organophosphorus compound represented by the general formula (Ia) include compounds represented by the following structural formulae (Ia-1) to (Ia-21). Examples of the compound represented by the general formula (Ib) include those having the same structures as those represented by the structural formulae (Ia-1) to (Ia-21) except that the phosphorus atom is trivalent without carrying an oxygen atom bound via a double bond.

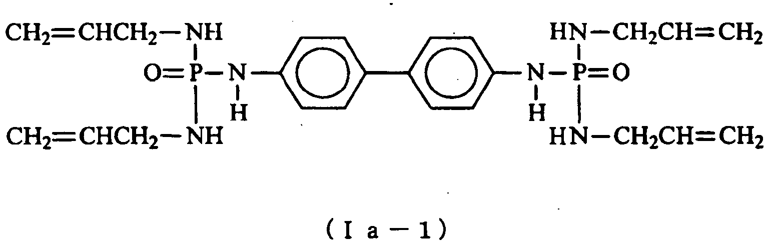

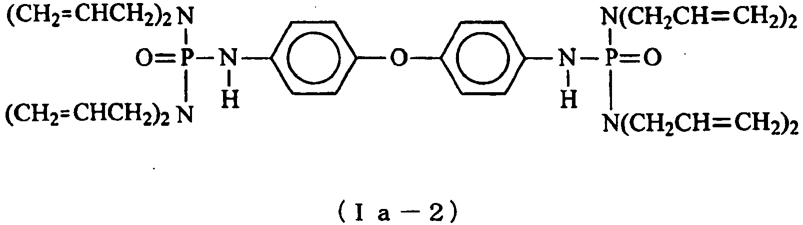

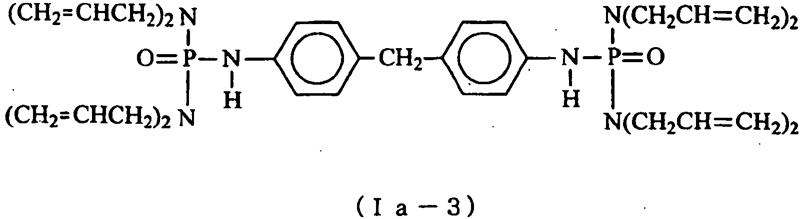

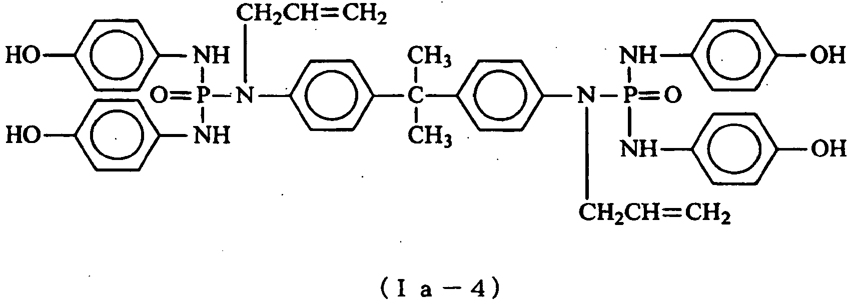

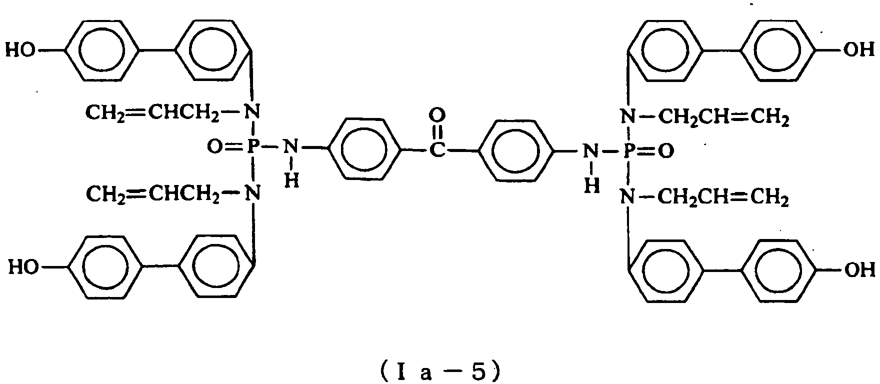

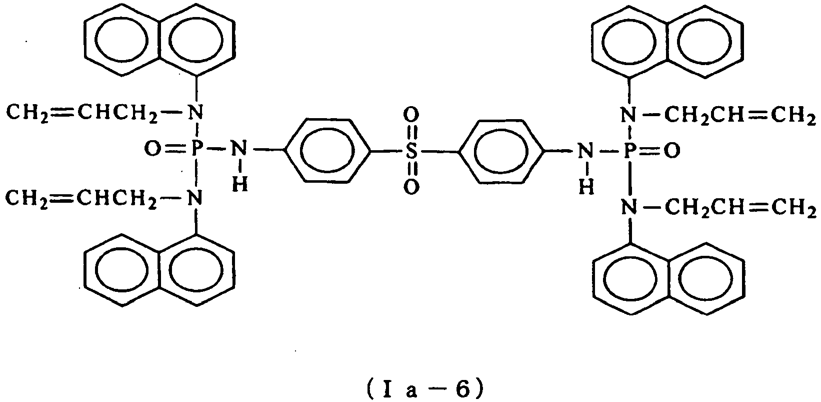

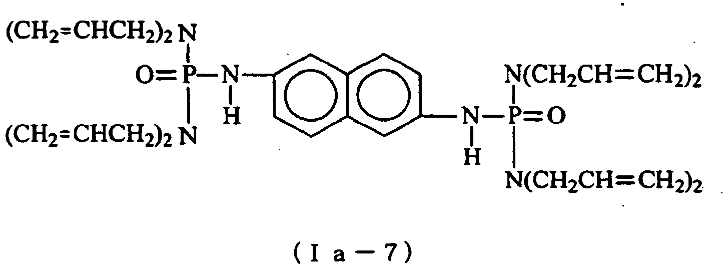

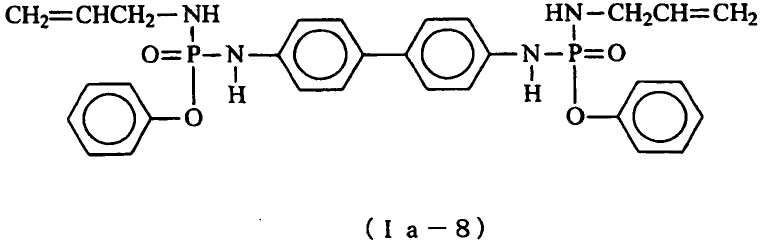

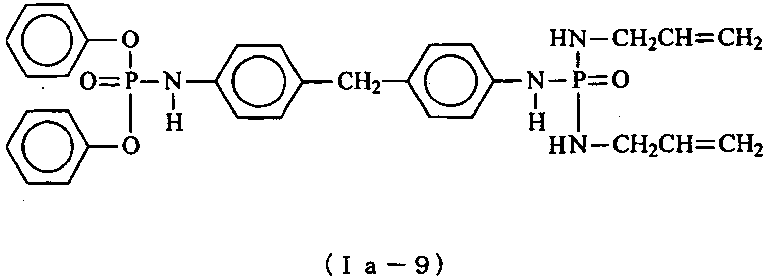

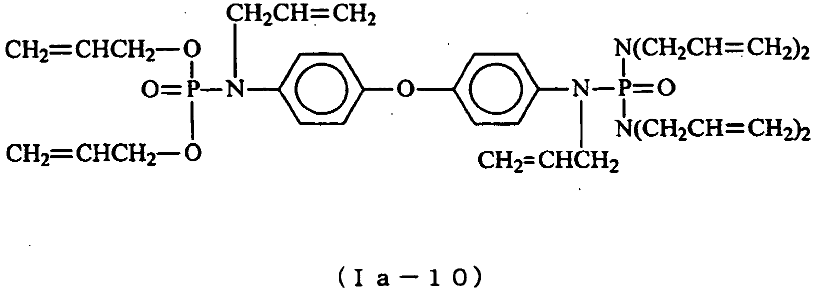

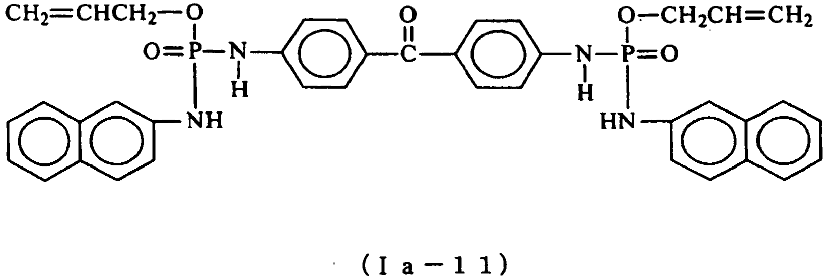

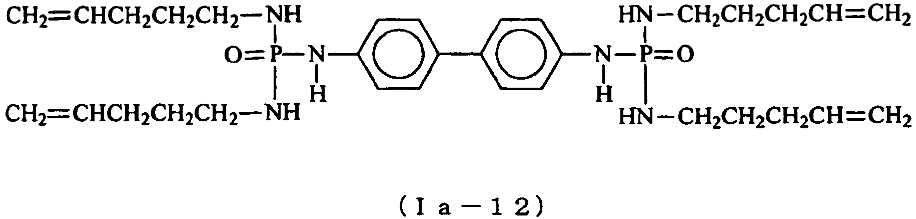

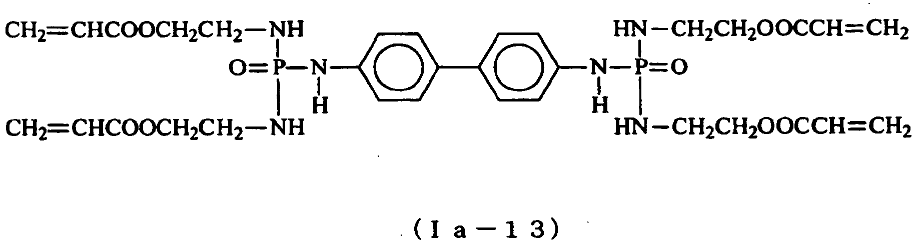

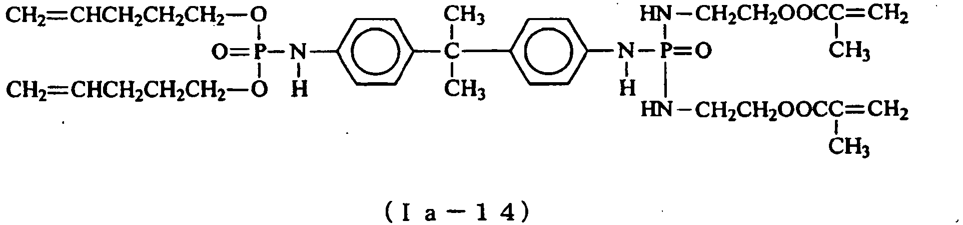

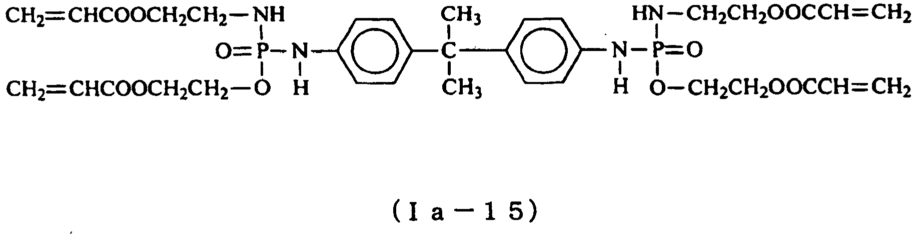

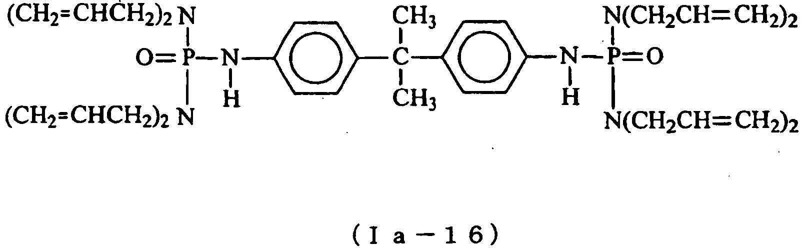

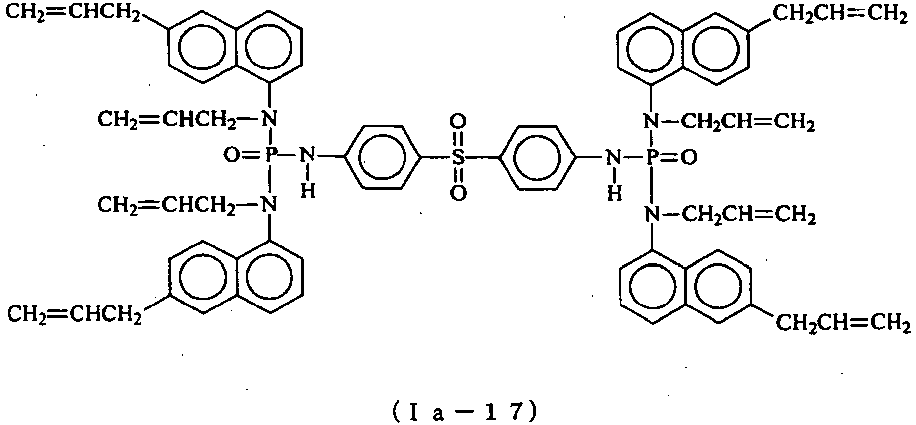

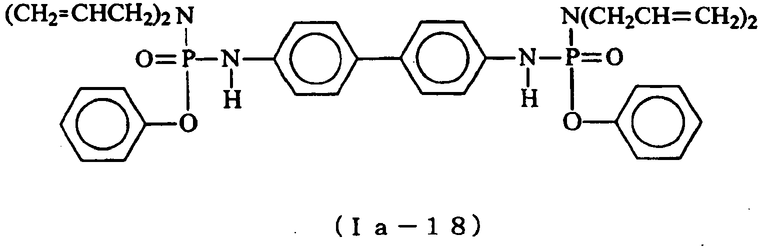

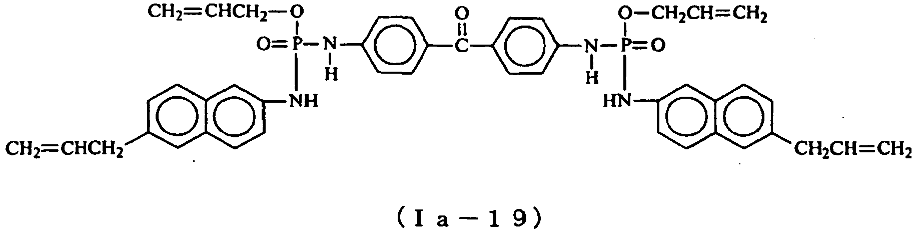

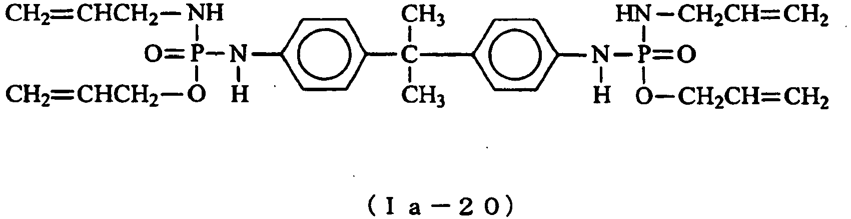

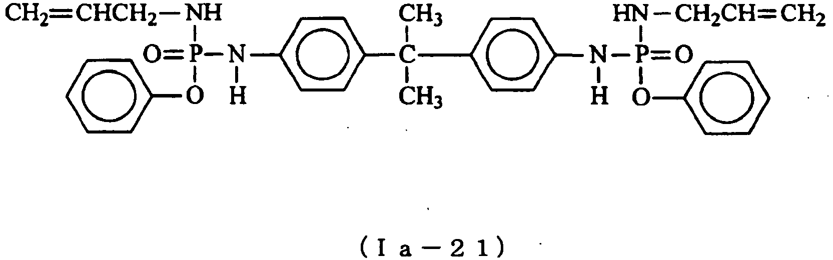

Specific examples of the organophosphorus compound represented by the general formula (IIa) include compounds represented by the following structural formulae (IIa-1) to (IIa-12). Examples of the compound represented by the general formula (IIb) include those having the same structures as those represented by the structural formulae (IIa-1) to (IIa-12) except that the phosphorus atom is trivalent without carrying an oxygen atom bound via a double bond.

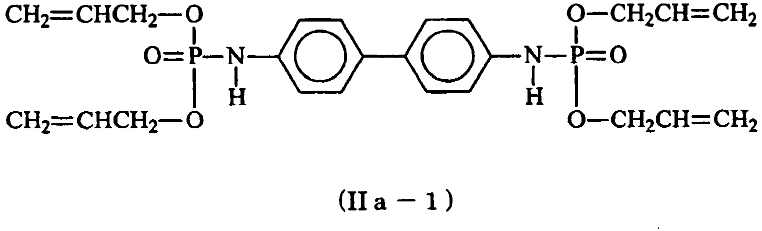

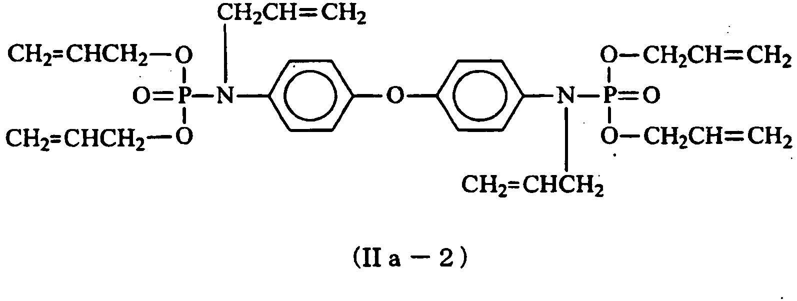

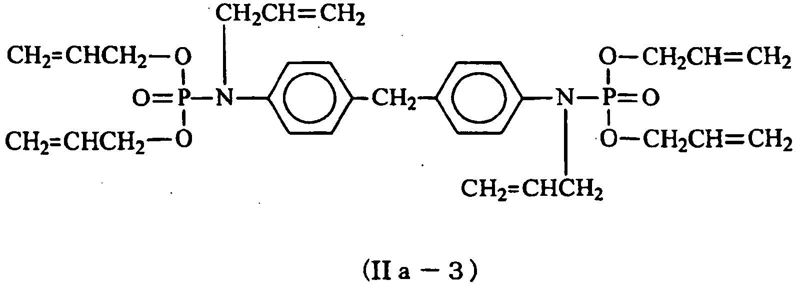

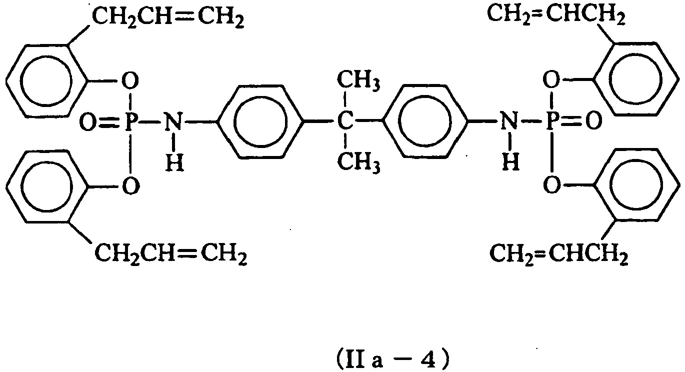

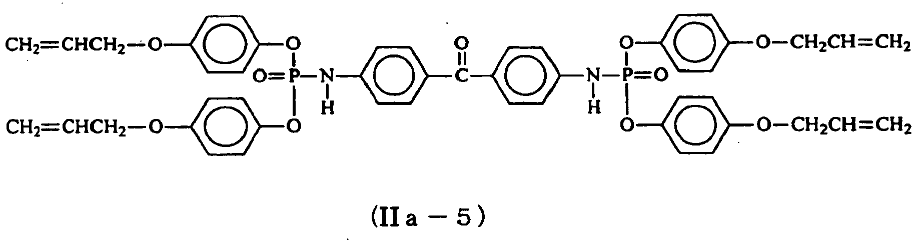

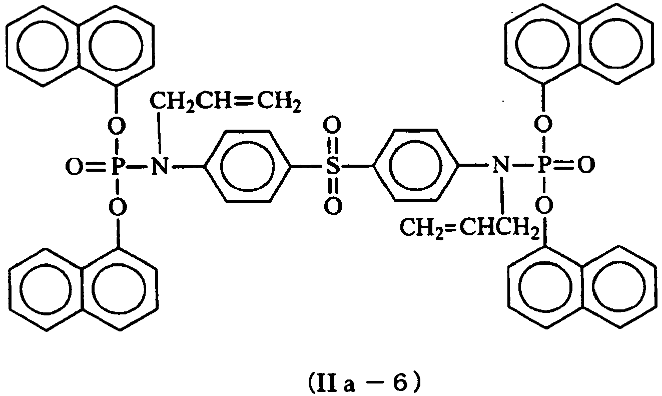

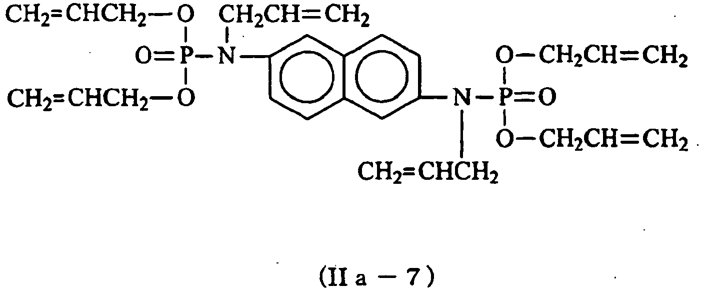

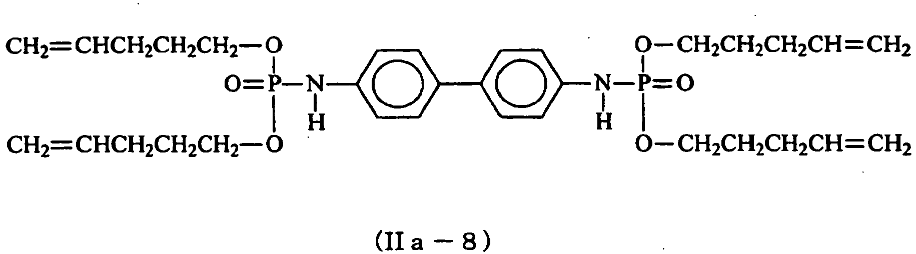

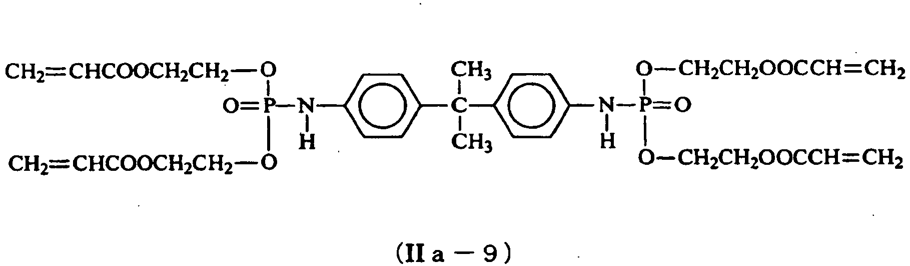

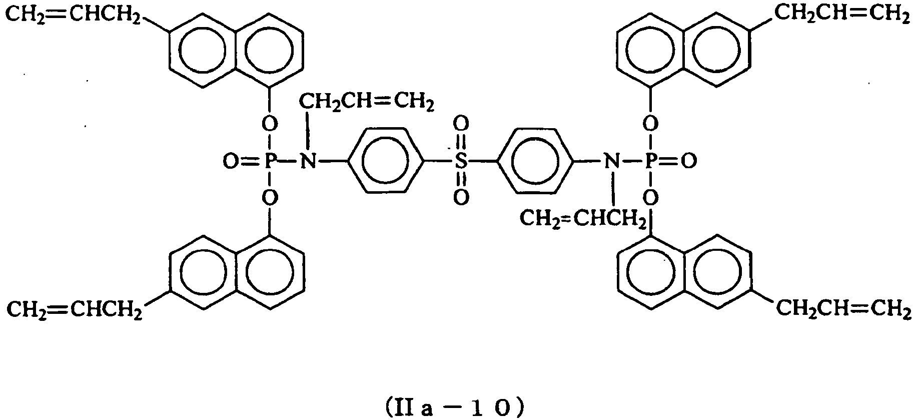

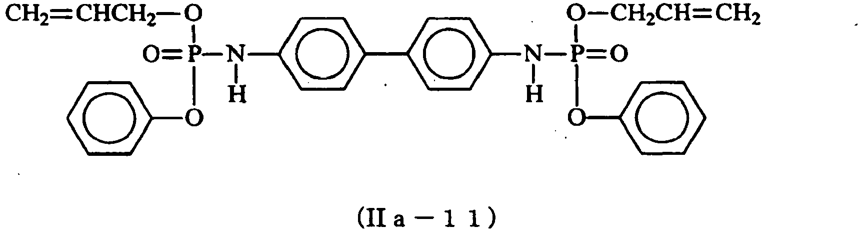

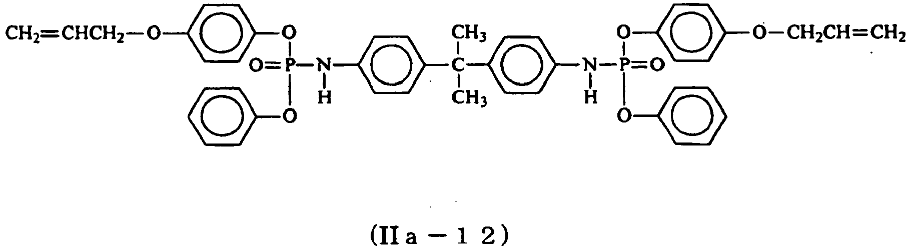

Specific examples of the organophosphorus compound represented by the general formula (IIIa) include compounds represented by the following structural formulae (IIIa-1) to (IIIa-17). Examples of the compound represented by the general formula (IIIb) include those having the same structures as those represented by the structural formulae (IIIa-1) to (IIIa-17) except that the phosphorus atom is trivalent without carrying an oxygen atom bound via a double bond.

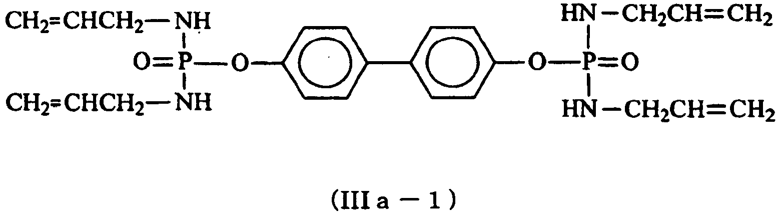

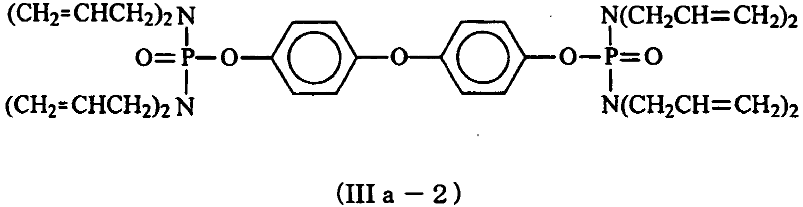

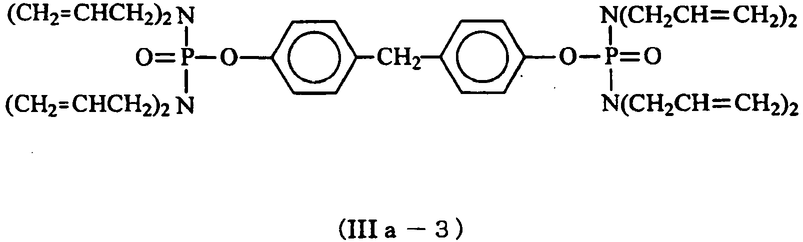

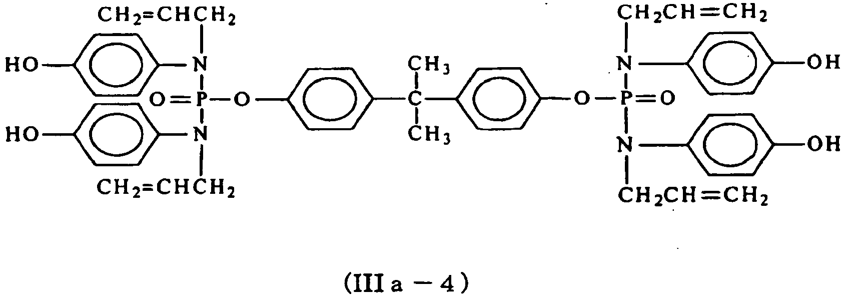

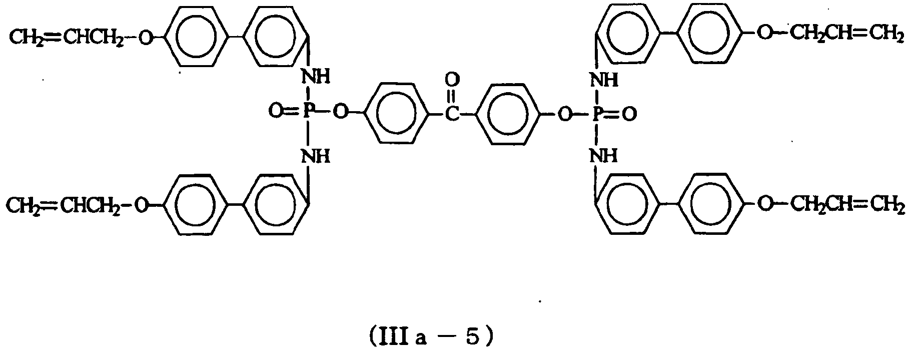

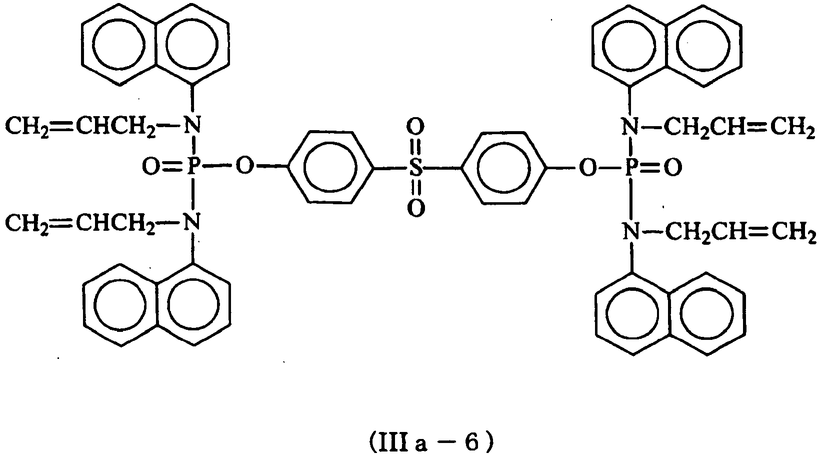

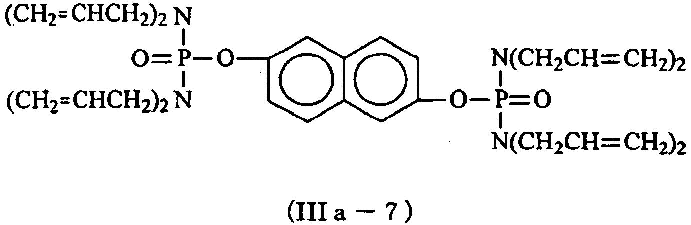

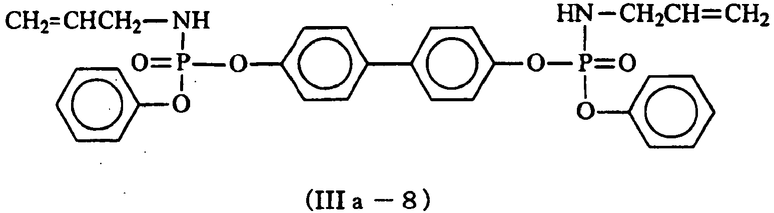

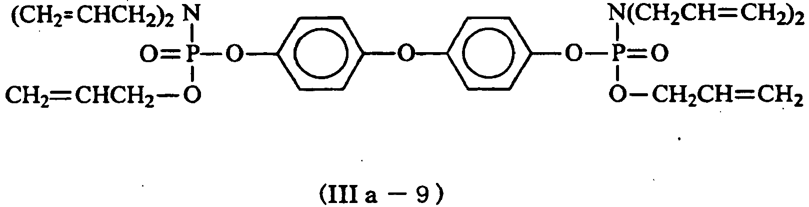

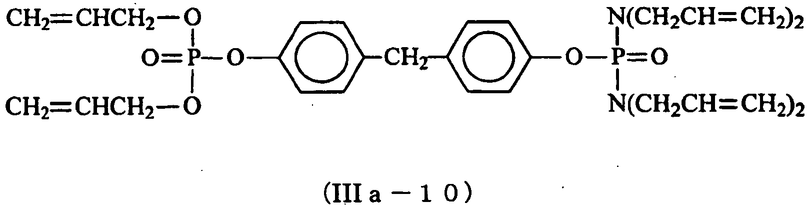

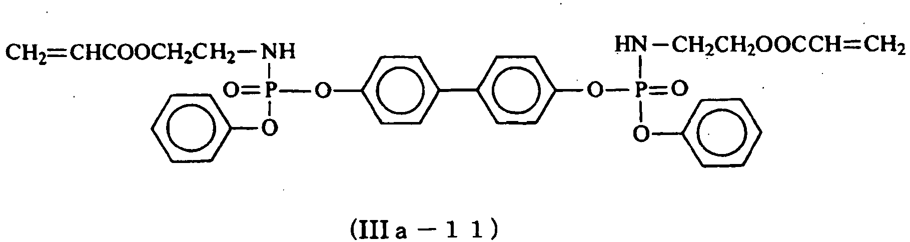

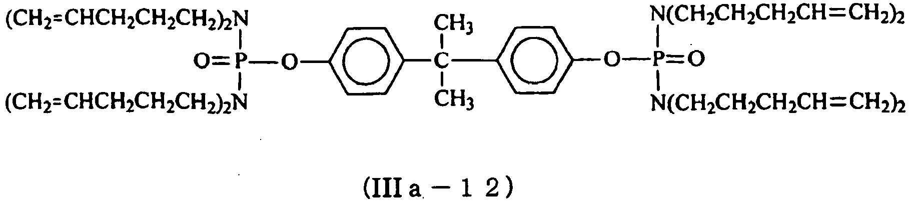

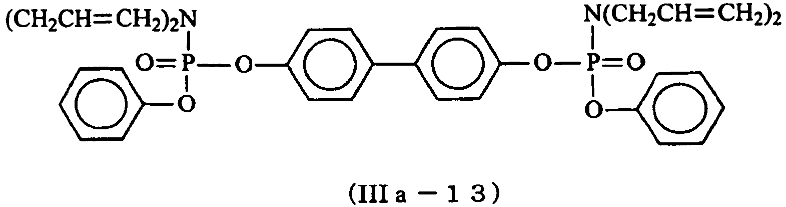

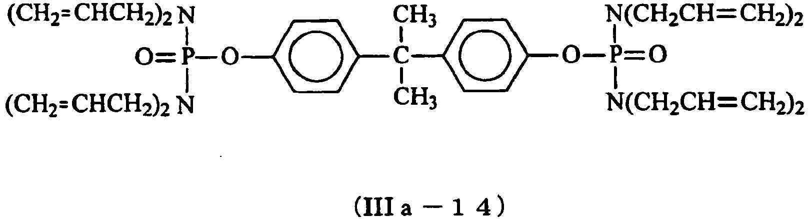

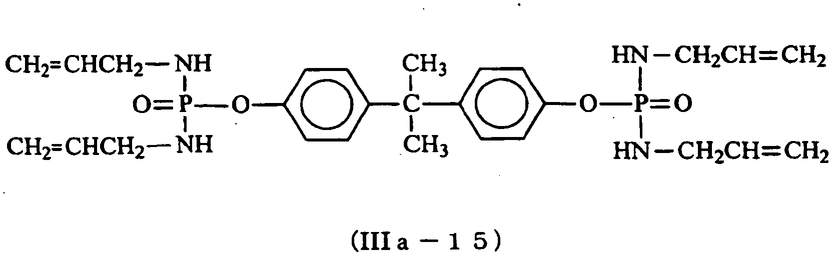

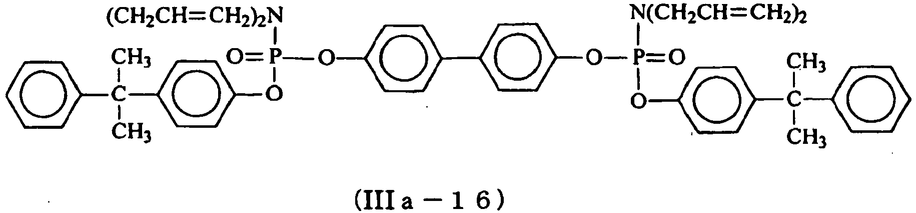

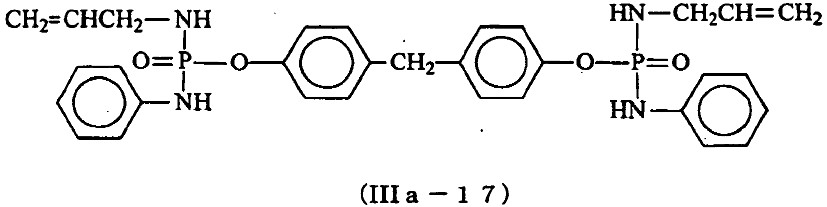

Specific examples of the organophosphorus compound represented by the general formula (IVa) include compounds represented by the following structural formulae (IVa-1) to (IVa-11). Examples of the compound represented by the general formula (IVb) include those having the same structures as those represented by the structural formulae (IVa-1) to (IVa-11) except that the phosphorus atom is trivalent without carrying an oxygen atom bound via a double bond.

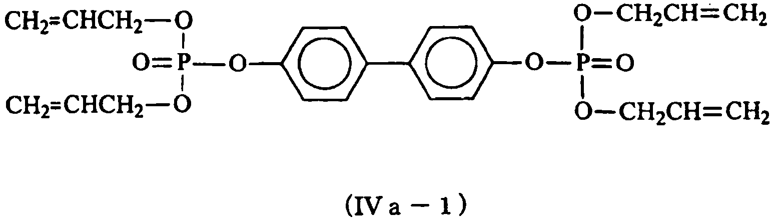

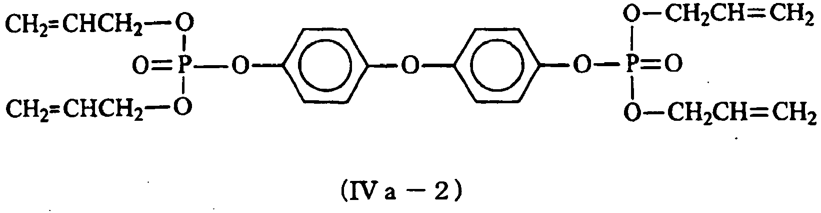

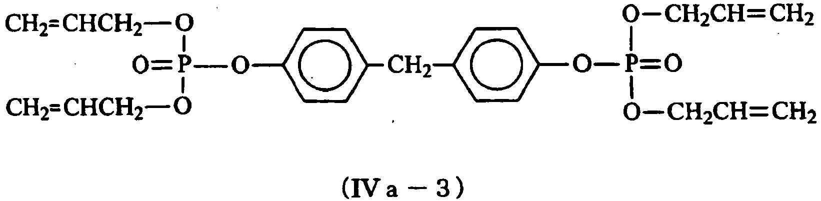

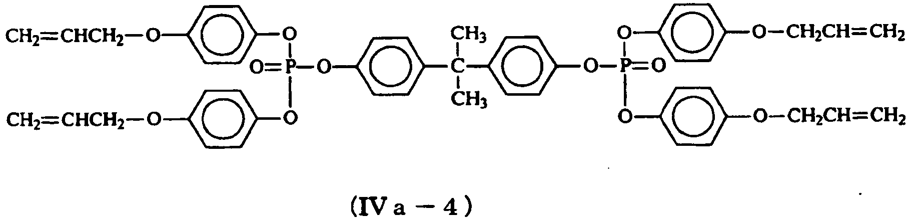

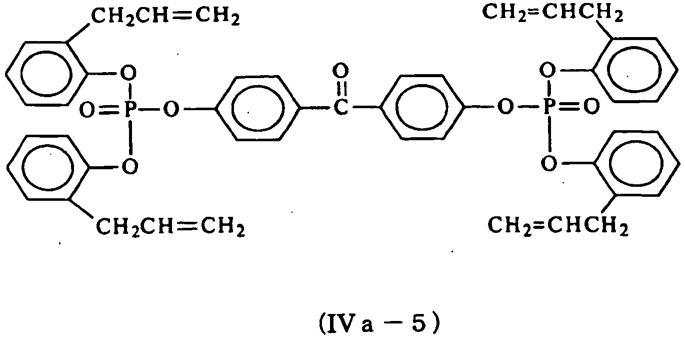

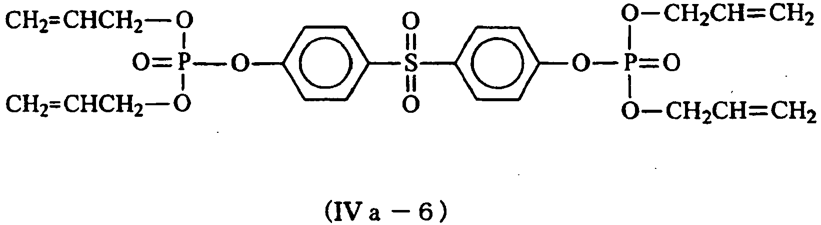

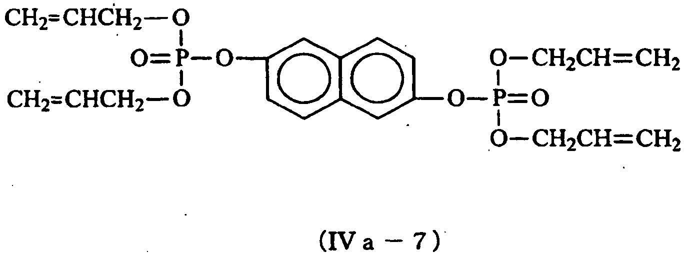

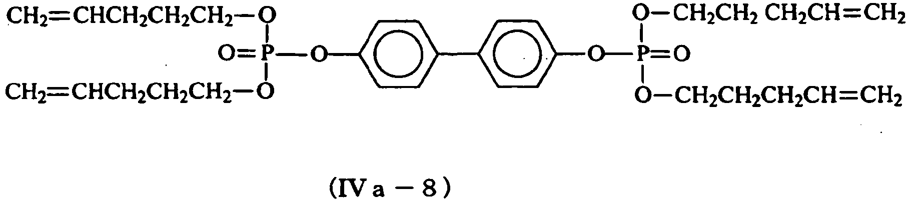

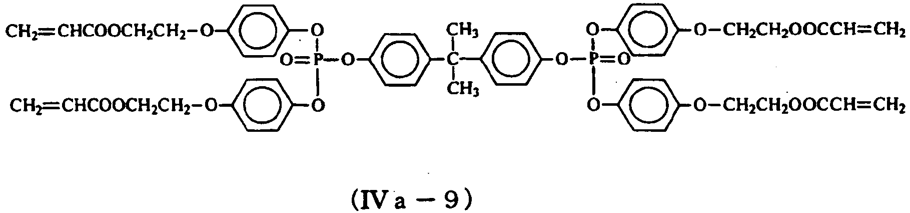

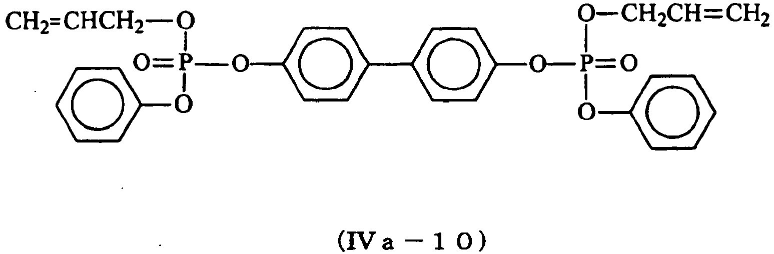

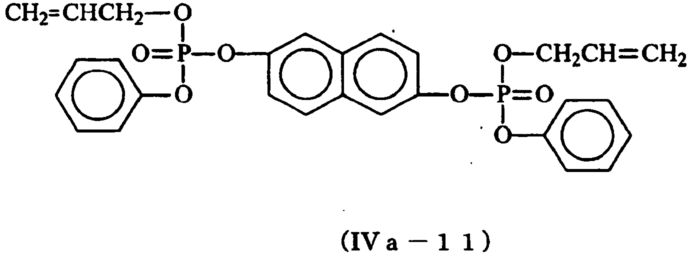

As described above, each of the compounds represented by the general formulae (I) to (IV) has a bridge-type structure in which R⁵, R¹⁰, R¹⁵, or R²⁰ at the center and a phosphorus atom on each side thereof are bound to each other via an oxygen atom or a nitrogen atom. Furthermore, the phosphorus atom on each side is bound to an end group as a side chain via another oxygen atom or nitrogen atom. In addition, the compound contains at least one end unsaturated bond as an end group.

To be specific, the general formulae (I) each represent a structure in which R⁵ and a phosphorus atom on each side thereof are bound to each other via a nitrogen atom, and the phosphorus atom on each side is bound to an end group as a side chain in which at least one bond thereof is mediated via another nitrogen atom.

In addition, the general formulae (II) each represent a structure in which R¹⁰ and a phosphorus atom on each side thereof are bound to each other via a nitrogen atom, and the phosphorus atom on each side is bound to an end group as a side chain in which all bonds thereof are mediated via an oxygen atom.

In addition, the general formulae (III) each represent a structure in which R¹⁵ and a phosphorus atom on each side thereof are bound to each other via an oxygen atom, and the phosphorus atom on each side is bound to an end group as a side chain in which at least one bond thereof is mediated via a nitrogen atom.

In addition, the general formulae (IV) each represent a structure in which R²⁰ and a phosphorus atom on each side thereof are bound to each other via an oxygen atom, and the phosphorus atom on each side is bound to an end group as a side chain in which all bonds thereof are mediated via an oxygen atom.

A compound represented by each of the general formulae (I), for example, Compound of (Ia-1) can be synthesized by: adding phosphorus oxychloride to dimethylacetamide (DMAc); adding benzidine (4,4'-diaminobiphenyl) and triethylamine dissolved in DMAc in drops to the resultant solution for a reaction; and causing a mixed liquid of allylamine and triethylamine to react with the resultant. Compound represented by the general formula (Ib-1) can be obtained by using phosphorus trichloride instead of phosphorus oxychloride.

In addition, R⁵, X⁵, or X⁶ in the general formulae (I) can be changed by using 4,4'-diaminodiphenylether, bis(4-aminophenyl)methane, 2,2-bis[4-(N-allylamino)phenyl]propane, 4,4'-diaminobenzophenone, bis(p-aminophenyl)sulfone, 2,6-diaminonaphthalene, or the like instead of benzidine.

In addition, R¹ to R⁴ and X¹ to X⁴ in the general formulae (I) can be changed by using diallylamine, p-hydroxyaniline, N-allyl-4-(4'-hydroxyphenyl)aniline, or the like instead of allylamine.

In addition, a group selected from -O-, -NH-, and -(CH₂=CY¹-Y²)N- can be introduced to each of X¹ to X⁴ by using phenoxyphosphoryldichloride, diphenoxyphosphorylchloride, diallyloxyphosphorylchloride, allyloxyphosphoryldichloride, or the like instead of phosphorus oxychloride.

A compound represented by each of the general formulae (II), for example, Compound of (IIa-1) can be synthesized by: adding phosphorus oxychloride to dimethylacetamide (DMAc); adding benzidine (4,4'-diaminobiphenyl) and triethylamine dissolved in DMAc in drops to the resultant solution for a reaction; and causing a mixed liquid of allyl alcohol and triethylamine to react with the resultant. Compound represented by the general formula (IIb-1) can be obtained by using phosphorus trichloride instead of phosphorus oxychloride.

In addition, R¹⁰, X⁷, or X⁸ in the general formulae (II) can be changed by using 4,4'-diaminodiphenylether, bis(4-aminophenyl)methane, 2,2-bis[4-(N-allylamino)phenyl]propane, 4,4'-diaminobenzophenone, bis(p-aminophenyl)sulfone, 2,6-diaminonaphthalene, or the like instead of benzidine.

In addition, R⁶ to R⁹ in the general formulae (II) can be changed by using o-allylphenol, p-allyloxyphenol, α-naphthol, or the like instead of allyl alcohol.

A compound represented by each of the general formulae (III), for example, Compound of (IIIa-1) can be synthesized by: adding phosphorus oxychloride to dimethylacetamide (DMAc); adding 4,4'-biphenyl alcohol and triethylamine dissolved in DMAc in drops to the resultant solution for a reaction; and causing a mixed liquid of allylamine and triethylamine to react with the resultant. Compound represented by the general formula (IIIb-1) can be obtained by using phosphorus trichloride instead of phosphorus oxychloride.

In addition, R¹⁵ in the general formulae (III) can be changed by using bis(4-hydroxyphenyl)ether, bis(4-hydroxyphenyl)methane, 2,2-bis(4-hydroxyphenyl)propane, 4,4'-dihydroxybenzophenone, bis(p-hydroxyphenyl)sulfone, naphthalene-2,6-diol, or the like instead of 4,4'-biphenyl alcohol.

In addition, R¹¹ to R¹⁴ and X⁹ to X¹² in the general formulae (III) can be changed by using diallylamine, p-hydroxy-N-allylaniline, 4-(4'-allyloxyphenoxy)aniline, N-allyl-α-naphthylamine, or the like instead of allylamine.

In addition, a group selected from -O-, -NH-, and -(CH₂=CY¹-Y²)N- can be introduced to each of X⁹ to X¹² by using phenoxyphosphoryldichloride, allylphosphoryldichloride, or the like instead of phosphorus oxychloride.

A compound represented by each of the general formulae (IV), for example, Compound of (IVa-1) can be synthesized by: adding phosphorus oxychloride to dimethylacetamide (DMAc); adding 4,4'-biphenyl alcohol and triethylamine dissolved in DMAc in drops to the resultant solution for a reaction; and causing a mixed liquid of allyl alcohol and triethylamine to react with the resultant. Compound represented by the general formula (IVb-1) can be obtained by using phosphorus trichloride instead of phosphorus oxychloride.

In addition, R²⁰ in the general formulae (IV) can be changed by using bis(4-hydroxyphenyl)ether, bis(4-hydroxyphenyl)methane, 2,2-bis(4-hydroxyphenyl)propane, 4,4'-dihydroxybenzophenone, bis(p-hydroxyphenyl)sulfone, naphthalene-2,6-diol, or the like instead of 4,4'-biphenyl alcohol.

In addition, R¹⁶ to R¹⁹ in the general formulae (IV) can be changed by using p-allyloxyphenol, o-allylphenol, or the like instead of allyl alcohol.

In the present invention, out of the organophosphorus compounds represented by the general formulae (I) to (IV), it is preferable to use in combination of two or more kinds of compounds different from each other in reactivity, that is, two or more kinds of compounds different from each other in number of the above functional groups in one molecule. Since the reaction rate accompanied by crosslinking can be in control through the combinational use, the contraction of a resin composition due to the abrupt advancement of a crosslinking reaction can be prevented.

It is also preferable to incorporate at least a multifunctional reactive flame retardant out of the organophosphorus compounds represented by the general formulae (I) to (IV). The incorporation leads to the formation of a uniform three-dimensional network structure by the organophosphorus compound.

Next, a product made of flame-retarded resin using any one of the above reactive flame retardants will be described.

The product made of flame-retarded resin of the present invention is obtained by solidifying a resin composition which contains a resin and an organophosphorus compound represented by any one of the general formulae (I) to (IV) and then reacting the resin by heating or irradiation with a radiation with the above-described reactive flame retardant, and is characterized by containing 1 to 20 mass% of the reactive flame retardant with respect to the entirety of the resin composition.

Each of a thermoplastic resin and a thermosetting resin can be used without any particular limitation as a resin to be used in the present invention.

Examples of the thermoplastic resin include: a polyamide-based resin; a polyester-based resin such as a polybutylene terephthalate resin or polyethylene terephthalate; a polyacryl-based resin; a polyimide-based resin; a polycarbonate resin; a polyurethane-based resin; a polystyrene-based resin such as polystyrene, an acrylonitrile-styrene copolymer, or an acrylonitrile-butadiene-styrene copolymer; a polyacetal-based resin; a polyolefin-based resin; a polyphenylene oxide resin; a polyphenylene sulfide resin; and a polybutadiene resin. Of those, in terms of mechanical characteristics, heat resistance, and the like, a polyamide-based resin, a polybutylene terephthalate resin, a polyethylene terephthalate resin, a polycarbonate resin, a polyacryl-based resin, a polyacetal-based resin, or a polyphenylene oxide resin is preferably used.

Examples of the thermosetting resin include an epoxy resin, a urethane resin, an unsaturated polyester resin, a phenol resin, a urea resin, a melamine resin, an alkyd resin, and a silicone resin. Of those, in terms of mechanical characteristics, heat resistance, and the like, an epoxy resin, a phenol resin, an unsaturated polyester resin, or a urea resin is preferably used.

The content of the reactive flame retardant is preferably 1 to 20 mass%, or more preferably 1 to 15 mass% with respect to the entirety of the resin composition. When the content of the reactive flame retardant is less than 1 mass%, a crosslinking reaction is insufficient, and the mechanical, thermal, and electrical physical properties of a resin product to be obtained are not preferable. It is not preferable that the content of the reactive flame retardant is in excess of 20 mass%. In such resin product, because the amount of the reactive flame retardant is excessive, an un-reacted monomer of the reactive flame retardant or a cracked gas is generated, an oligomerized product bleeds out, and the mechanical characteristics of a resin product deteriorate.

In the present invention, an additive-type flame retardant having no reactivity other than the above reactive flame retardant may be incorporated. As such flame retardant, a non-halogen-based flame retardant is preferable. Examples of such flame retardant include: metal hydrates typified by aluminum hydroxide and magnesium hydroxide; mono-phosphoric esters such as triphenyl phosphate and tricresyl phosphate; condensed-phosphoric esters such as bisphenol A bis (diphenyl) phosphate and resorcinol bis (diphenyl) phosphate; ammonium polyphosphate; polyphosphoric amide; red phosphorus; guanidine phosphate; derivatives of cyanuric acid or isocyanuric acid; melamine derivatives; and silicon-based flame retardants.

Each of those flame retardants may be used alone, or two or more of them may be used in combination. The content of the flame retardant other than the reactive flame retardant is preferably 1 to 20 mass%, or more preferably 3 to 15 mass% with respect to the entirety of the resin composition in order to avoid bleeding out and reductions in mechanical characteristics.

It is more preferable to incorporate, as a flame retardant having reactivity other than the aforementioned reactive flame retardant, 0.5 to 10 parts by mass of a cyclic nitrogen-containing compound having at least one unsaturated group at the end thereof with respect to 1 part by mass of the aforementioned reactive flame retardant.

Preferable examples of the group having an unsaturated group at the end thereof include a diacrylate, a dimethacrylate, a diallylate, a triacrylate, a trimethacrylate, a triallylate, a tetraacrylate, a tetramethacrylate, and a tetraallylate. Of those, an acrylate such as a diacrylate, a triacrylate, or a tetraacrylate is more preferable in terms of reactivity.

Examples of the cyclic nitrogen-containing compound include an isocyanuric ring and a cyanuric ring.

Specific examples of the cyclic nitrogen-containing compound having at least one unsaturated group at the end thereof include derivatives of the above-described cyanuric acid or isocyanuric acid such as isocyanuric acid EO-modified diacrylate, isocyanuric acid EO-modified triacrylate, and triisocyanuric triacrylate.

In the present invention, a crosslinking agent having no flame retardancy but having reactivity with the resin may be additionally incorporated. A multifunctional monomer or oligomer having an unsaturated group at the end of its main skeleton can be used as such crosslinking agent.

The term "crosslinking agent having no flame retardancy but having reactivity with the resin" as used herein refers to a crosslinking agent which is capable of crosslink (reactivity) but which itself does not have flame retardancy. A reactive flame retardant in such case as the cyclic nitrogen-containing compound having at least one unsaturated group at an end thereof is excluded from the scope of the term, since it brings capability of crosslink together with flame retardancy.

Examples of such crosslinking agent include bifunctional to tetrafunctional compounds represented by the following general formulae (a) to (c). Here, X represents a main skeleton and R²¹ to R²⁴ each represent a functional group having an unsaturated group at the end thereof. The formula (a) represents a bifunctional compound, the formula (b) represents a trifunctional compound, and the formula (c) represents a tetrafunctional compound.

R²¹-X-R²² (a)

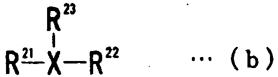

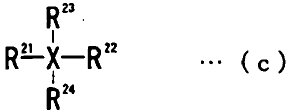

Specific examples thereof include structures represented by the following general formulae in each of which the main skeleton X is an aliphatic alkyl such as a glycerin derivative or a pentaerythritol derivative, an aromatic ring such as trimellitic acid, pyromellitic acid, tetrahydrofuran, or trimethylene trioxane, or bisphenol.

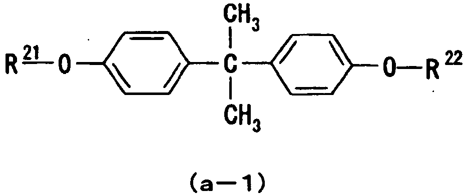

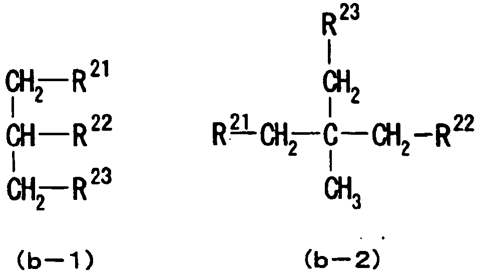

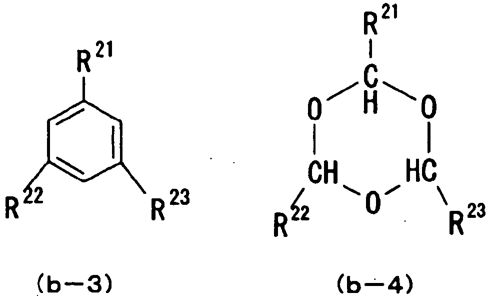

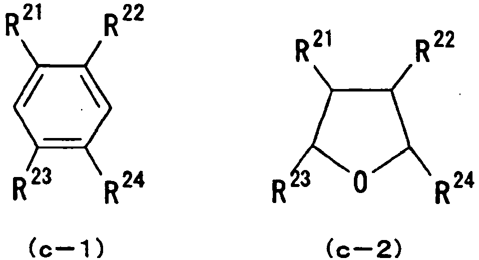

Specific examples of the crosslinking agent include: bifunctional monomers or oligomers such as diacrylates including bisphenol F-EO-modified diacrylate, bisphenol A-EO-modified diacrylate, tripropylene glycol diacrylate, polypropylene glycol diacrylate, polyethylene glycol diacrylate, and pentaerythritol diacrylate monostearate, and dimethacrylates and diallylates thereof;
trifunctional monomers or oligomers such as triacrylates including pentaerythritol triacrylate, trimethylolpropane triacrylate, trimethylolpropane PO-modified triacrylate, and trimethylolpropane EO-modified triacrylate, and trimethacrylates and triallylates thereof; and
tetrafunctional monomers or oligomers such as ditrimethylolpropane tetraacrylate and pentaerythritol tetraacrylate.

The crosslinking agent is obtained by causing one kind selected from allyl bromide, allyl alcohol, allylamine, methallyl bromide, methallyl alcohol, methallylamine, and the like, which serves as a functional group having an unsaturated group at an end thereof, to react with one kind selected from trimellitic acid, pyromellitic acid, tetrahydrofuran tetracarboxylic acid, 1,3,5-trihydroxybenzene, glycerin, pentaerythritol, 2,4,6-tris(chloromethyl)-1,3,5-trioxane, and the like, which serves as the main skeleton X.

The content of the crosslinking agent is preferably 0.5 to 10 parts by mass with respect to 1 part by mass of the reactive flame retardant.

The resin composition to be used in the present invention may contain an inorganic filler, reinforced fibers, various additives, or the like in addition to the above resin and flame retardant.

The incorporation of an inorganic filler improves the mechanical strength and dimensional stability of the resin product. In addition, the inorganic filler serves as a base substance for adsorbing a reactive flame retardant to uniformize the dispersion of the reactive flame retardant.

Any conventionally known inorganic filler can be used, and representative examples thereof include: metal powders of copper, iron, nickel, zinc, tin, stainless steel, aluminum, gold, silver, and the like; fumed silica; aluminum silicate; calcium silicate; silicic acid; water-containing calcium silicate; water-containing aluminum silicate; glass beads; carbon black; a quartz powder; isinglass; talc; mica; clay; titanium oxide; iron oxide; zinc oxide; calcium carbonate; magnesium carbonate; magnesium oxide; calcium oxide; magnesium sulfate; potassium titanate; and diatomaceous earth. Each of those inorganic fillers may be used alone, or two or more of them may be used in combination. In addition, each of those inorganic fillers may be treated with a conventionally known surface treatment agent.

The content of the inorganic filler is preferably 1 to 35 mass%, or more preferably 1 to 20 mass% with respect to the entirety of the product made of flame-retarded resin. A content of less than 1 mass% is not preferable because the mechanical strength and dimensional stability of the product made of flame-retarded resin are insufficient, and the adsorption of the reactive flame retardant is insufficient. A content in excess of 35 mass% is not preferable because the product made of flame-retarded resin becomes brittle.

Of the above inorganic fillers, a laminar clay composed of laminating silicate layers is particularly preferably used. Here, the term "laminar clay composed of laminating silicate layers" refers to a clay having a structure in which silicate layers each having a thickness of about 1 nm and a length of one side of about 100 nm are laminated. Accordingly, the laminar clay is dispersed into the resin in a nano order to form a hybrid structure with the resin. As a result, the heat resistance, mechanical strength, and the like of the product made of flame-retarded resin to be obtained are improved. The average particle size of the laminar clay is preferably 100 nm or less.

Examples of the laminar clay include montmorillonite, kaolinite, and mica. Of those, montmorillonite is preferable because of its excellent dispersibility. The surface of the laminar clay may be treated for improving dispersibility into a resin. Such laminar clay may be a commercially available one, and, for example, "Nanomer" (trade name, manufactured by NISSHOIWAI BENTONITE) or "Somasif" (trade name, manufactured by Co-op Chemical) can be used.

The content of the laminar clay is preferably 1 to 10 mass% with respect to the entirety of the product made of flame-retarded resin. The laminar clay may be used alone, or may be used in combination with another inorganic filler.

The incorporation of the reinforced fibers can improve the mechanical strength and dimensional stability of, for example, a molded product. Examples of the reinforced fibers include glass fibers, carbon fibers, and metal fibers. Glass fibers are preferably used in terms of strength and adhesiveness with the resin or with the inorganic filler. One kind of reinforced fibers may be used alone, or two or more kinds of fibers may be used in combination. The fibers may be treated with a conventionally known surface treatment agent such as a silane coupling agent.

In addition, the surfaces of the glass fibers are preferably treated and then coated with a resin. In this case, adhesiveness with a thermoplastic polymer can be additionally improved.

A conventionally known silane coupling agent can be used as the surface treatment agent, and specific examples thereof include silane coupling agents each having at least one alkoxy group chosen from the group consisting of a methoxy group and an ethoxy group and at least one reactive functional group selected from the group consisting of an amino group, a vinyl group, an acrylic group, a methacrylic group, an epoxy group, a mercapto group, a halogen atom, and an isocyanate group.

The resin for coating is not particularly limited, and examples thereof include a urethane resin and an epoxy resin.

The content of the reinforced fibers is preferably 5 to 40 mass%, or more preferably 10 to 35 mass% with respect to the entirety of the product made of flame-retarded resin. A content of less than 5 mass% is not preferable because the mechanical strength of the product made of flame-retarded resin reduces and the dimensional stability thereof becomes insufficient. A content in excess of 40 mass% is not preferable because it becomes difficult to process the resin.

The total content of the inorganic filler and the reinforced fibers is preferably 65 mass% or less, or more preferably 55 mass% or less with respect to the entirety of the product made of flame-retarded resin. A total content of the inorganic filler and the reinforced fibers in excess of 65 mass% is not preferable because the ratio of a resin component reduces to impair moldability or makes the resin product to be obtained brittle, thereby worsening physical properties.

The resin composition to be used in the present invention may be added with any one of common various addition components other than those described above such as a crystal nucleating agent, a colorant, an antioxidant, a release agent, a plasticizer, a heat stabilizer, a lubricant, and a UV inhibitor to the extent that physical properties such as heat resistance, weatherability, and impact resistance as objects of the present invention are not significantly impaired. In addition, as described below, a UV initiator or the like can be used when the resin and the reactive flame retardant are allowed to react with each other by means of ultraviolet light.

The colorant is not particularly limited, but is preferably one that does not show color fading when irradiated with a radiation to be described below. For example, an inorganic pigment such as blood red, iron black, carbon, or chrome yellow, or a metal complex such as phthalocyanine is preferably used.

The product made of flame-retarded resin of the present invention is obtained by way in which the resin composition is solidified and then the resin is reacted with the reactive flame retardant by way of heating or irradiation with a radiation.

The resin composition is solidified by means of a conventionally known method. For example, in the case of a resin composition containing a thermoplastic resin, the thermoplastic resin and a reactive flame retardant are melted and kneaded to produce a pellet. Then, the pellet can be molded by means of a conventionally known method such as injection molding, extrusion molding, vacuum molding, or inflation molding. The melting and kneading can be performed by means of a typical melting and kneading processing machine such as a monoaxial or biaxial extruder, a Banbury mixer, a kneader, or a mixing roll. A kneading temperature can be appropriately selected depending on the kind of the thermoplastic resin. For example, in the case of a polyamide-based resin, the kneading is preferably performed at 240 to 280°C. Molding conditions can be appropriately set and are not particularly limited. At this stage, crosslinking does not advance at all, so an extra spool portion at the time of molding can be recycled as a thermoplastic resin.

On the other hand, in the case of a thermosetting resin, as in the case of the foregoing, the thermosetting resin and a reactive flame retardant are melted and kneaded to produce a pellet. Then, the pellet can be molded by means of a conventionally known method such as injection molding, compression molding, or transfer molding.

In the case of preparing a coating film, the resin composition may be applied as it is. Alternatively, the resin composition may be appropriately diluted with a solvent or the like to prepare a solution or suspension that can be applied, and the solution or suspension may be dried by means of a conventionally known method to prepare a coating film. A coating method such as roller coating, spraying, immersion, or spin coating can be used for preparing a coating film, and a method to be used is not particularly limited.

In the resin composition, an unsaturated bond at an end of the reactive flame retardant reacts with the resin as a result of heating or irradiation with a radiation to cause a crosslinking reaction, so the flame retardant component is stably present in the resin.

When heating is employed as means for reacting the reactive flame retardant and the resin, the resin and the reactive flame retardant are reacted at a temperature higher than the temperature at which the resin is molded by preferably 5°C or higher, or more preferably 10°C or higher.

When a radiation is used as means for crosslinking, an electron beam, an α ray, a γ ray, an X-ray, ultraviolet light, or the like canbe used. The term "radiation" as used herein refers to a radiation in a broad sense, and specifically includes an electromagnetic wave such as an X-ray or ultraviolet light in addition to a particle beam such as an electron beam or an α ray.

The resin composition is preferably irradiated with an electron beam or a γ ray out of the foregoing. A conventionally known electron accelerator or the like can be used for irradiation with an electron beam, and an accelerating energy of 2.5 MeV or more is preferable. Irradiation equipment on the basis of a conventionally known cobalt 60 radiation source or the like can be used for irradiation with a γ ray.

Irradiation equipment on the basis of a conventionally known cobalt 60 radiation source or the like can be used for irradiation with a γ ray. A γ ray is preferable because it has stronger permeability than that of an electron beam, so irradiation can be performed uniformly. However, the γ ray has strong radiation intensity, so the dose of the ray must be controlled in order to avoid excessive irradiation.

The irradiation dose of a radiation is preferably 10 kGy or more, or more preferably 10 to 45 kGy. An irradiation dose in this range provides a resin product excellent in the above physical properties owing to crosslinking. An irradiation dose of less than 10 kGy is not preferable because the formation of a three-dimensional network structure due to crosslinking may be nonuniform and an unreacted crosslinking agent may bleed out. An irradiation dose in excess of 45 kGy is not preferable either because the internal strain of the resin product due to an oxidation decomposition product remains to cause deformation, contraction, and the like.

The product made of flame-retarded resin of the present invention thus produced is excellent in mechanical characteristics, electrical characteristics, dimensional stability, andmoldability in addition to heat resistance and flame retardancy basically necessary for a molded product. Therefore, the resin product can be suitably used for an electrical or electronic component where high levels of heat resistance and flame retardancy are required, and for an automobile part or an optical part such as: a member for supporting a contact of an electromagnetic switch, a breaker, or the like; a substrate such as a printed board; a package for an integrated circuit; or a housing for an electrical component.

Specific examples of such electrical or electronic component include: a receiving board; a distribution board; an electromagnetic switch; a breaker; a transformer; an electromagnetic contactor; a circuit protector; a relay; various sensors; various motors; and semiconductor devices such as a diode, a transistor, and an integrated circuit.

The resin product can be suitably used for an automobile part such as: a cooling fan; a bumper; a brake cover; an interior part such as a panel; a sliding part; a sensor; or a motor.

The resin product can be used not only as a molded product but also as a flame-retardant coating film for the molded product, fiber, or the like.

In addition, excellent heat resistance and excellent flame retardancy can be imparted when the resin product is used for, for example, sealing, covering, and insulating the above-described electronic or electrical component such as a semiconductor device. That is, for example, the resin composition is sealed to cure the resin, and the above-described reaction by heating or irradiation with a radiation is performed, whereby the resin product can be used as a flame-retardant sealing compound for sealing an electronic component or an electrical element such as a semiconductor chip or a ceramic capacitor. Sealing can be performed by means of casting, potting, transfer molding, injection molding, compression molding, or the like. An electronic or electrical component to be sealed is not particularly limited, and examples thereof include a liquid crystal, an integrated circuit, a transistor, a thyristor, a diode, and a capacitor.

As described above, according to the present invention, there can be provided: a non-halogen-based reactive flame retardant which is excellent in flame retardancy when added to a resin in a small amount and can be prevented from bleeding out or the like; and a product made of flame-retarded resin obtained with the same. Therefore, the product made of flame-retarded resin can find use in applications including: resin molded products such as an electrical component and an electronic component; sealing compounds for a semiconductor and the like; and coating films.

Hereinafter, the present invention will be described in more detail by way of examples. However, the present invention is not limited to the examples.

### A: Synthesis of reactive flame retardant

Hereinafter, Synthesis Examples 1 to 11 each correspond to the general formulae (I), Synthesis Examples 12 to 18 each correspond to the general formulae (II), Synthesis Examples 19 to 28 each correspond to the general formulae (III), and Synthesis Examples 29 to 35 each correspond to the general formulae (IV).

### [Synthesis of reactive flame retardants represented by general formulae (I)]

### Synthesis Example 1

Synthesis of Compound (Ia-1) represented by general formula (Ia) in which X¹ to X⁶ each represent -NH-, R¹ to R⁴ each represent CH₂=CHCH₂-, and R⁵ represents -p-C₆H₄-p-C₆H₄- (4,4'-biphenylene)

61.3 g (0.40 mol) of phosphorus oxychloride were added to 100 ml of dimethylacetamide (DMAc) purified by distillation. A solution prepared by dissolving 18.4 g (0.10 mol) of benzidine and 20.2 g (0.20 mol) of triethylamine into 150 ml of DMAc was added in drops to the solution at 0 to 5°C over 1 hour, and the whole was reacted at the temperature for 3 hours and then at room temperature for 3 hours. The solvent and excessive phosphorus oxychloride were distilled off at a temperature equal to or lower than 40°C while a decompression level was adjusted. Then, 150 ml of DMAc were added to the residue to dissolve a solid except triethylamine-hydrochloride salt.

A mixed liquid of 34.2 g (0.60 mol) of allylamine and 60.6 g (0.60 mol) of triethylamine was added in drops to the resultant at 0 to 5°C over 1 hour, and the whole was reacted at the temperature for 3 hours and then at room temperature for 6 hours. The solvent and an excessive reagent were distilled off at a temperature equal to or lower than 40°C while a decompression level was adjusted. Then, the residue was washed with water to remove triethylamine-hydrochloride salt. Thus, 48.6 g of the aimed product represented in the title were obtained (about 97% in yield).

The measurements of the compound in the infrared absorption spectrum, TOF-Mass spectrum, and NMR resulted in the followings. Thus, the measurements identified the structure of Compound (Ia-1) described above.

Infrared absorption spectrum (cm⁻¹): ν NH 3240, 3235, δ NH 1650, 1645, ν C=C 1635, ν ring 1604, 1496, ν P=O 1260
TOF-Mass spectrum (M/Z): 502, 503 (calculated molecular weight = 500.522)
¹H-NMR spectrum (δ, ppm): CH₂= 5.2 (8H), =CH- 6.1 (4H), -CH₂-3.7 (8H), H-N< 3.3 to 3.5 (6H), aromatic C-H 7.2 to 7.4 (8H)

### Synthesis Example 2

### Synthesis of Compound (Ia-2) represented by general formula (Ia) in which X¹ to X⁴ each represent -(CH₂=CHCH₂)N-, X⁵ and X⁶ each represent -NH-, R¹ to R⁴ each represent CH₂=CHCH₂-, and R⁵ represents -p-C₆H₄-O-p-C₆H₄-

56.8 g of the aimed product represented in the title were obtained (about 94% in yield) in the same manner as in Synthesis Example 1 except that 20.0 g (0. 10 mol) of 4,4'-diaminodiphenylether were used instead of benzidine and 58.2 g (0.60 mol) of diallylamine were used instead of allylamine.

The measurements of the compound in the infrared absorption spectrum, TOF-Mass spectrum, and NMR resulted in the followings. Thus, the measurements identified the structure of Compound (Ia-2) described above.

Infrared absorption spectrum (cm⁻¹): ν NH 3240, δ NH 1650, ν C=C 1635, ν ring 1604, 1496, ν P=O 1260

TOF-Mass spectrum (M/Z) : 606, 607 (calculated molecular weight = 604.770)

¹H-NMR spectrum (δ, ppm): CH₂= 5.15 to 5.20 (16H), =CH- 6.1 (8H), -CH₂- 3.65 to 3.70 (16H), H-N< 3.3 to 3.5 (2H), aromatic C-H 7.10 to 7.45 (8H)

### Synthesis Example 3

### Synthesis of Compound (Ia-3) represented by general formula (Ia) in which X¹ to X⁴ each represent -(CH₂=CHCH₂)N-, X⁵ and X⁶ each represent -NH-, R¹ to R⁴ each represent CH₂=CHCH₂-, and R⁵ represents -p-C₆H₄-CH₂-p-C₆H₄-

57.3 g of the aimed product represented in the title were obtained (about 95% in yield) in the same manner as in Synthesis Example 1 except that 19.8 g (0.10 mol) of bis (4-aminophenyl) methane were used instead of benzidine and 58.2 g (0.60 mol) of diallylamine were used instead of allylamine.

The measurements of the compound in the infrared absorption spectrum, TOF-Mass spectrum, and NMR resulted in the followings. Thus, the measurements identified the structure of Compound (Ia-3) described above.

Infrared absorption spectrum (cm⁻¹): ν NH 3235, δ NH 1645, ν C=C 1630, ν ring 1604, 1496, ν P=O 1265

TOF-Mass spectrum (M/Z) : 606, 607 (calculatedmolecularweight = 604.770)

¹H-NMR spectrum (δ, ppm) : CH₂= 5.15 to 5.20 (16H), =CH- 6.05 (8H), allyl-CH₂- 3.65 to 3.70 (16H), -CH₂- 3.05 (2H), H-N< 3.3 to 3.5 (2H), aromatic C-H 7.15 to 7.40 (8H)

### Synthesis Example 4

### Synthesis of Compound (Ia-4) represented by general formula (Ia) in which X¹ to X⁴ each represent -NH-, X⁵ and X⁶ each represent -(CH₂=CHCH₂)N-, R¹ to R⁴ each represent HO-C₆H₄-, and R⁵ represents -p-C₆H₄-C(CH₃)₂-p-C₆H₄-

A reaction was performed in the same manner as in Synthesis Example 1 except that 30.6 g (0.10 mol) of 2,2-bis[4-(N-allylamino)phenyl]propane were used instead of benzidine and 65. 4 g (0. 60 mol) of p-hydroxyaniline were used instead of allylamine. The solvent and a volatile component were distilled off at a temperature equal to or lower than 50°C while a decompression level was adjusted. Then, the residue was dissolved into 1, 000 ml of ethyl acetate, and the solution was mixed with a 0.05-mol/l aqueous solution of hydrochloric acid while being shaken. Then, excessive p-hydroxyaniline was extracted in an aqueous phase, and an ethyl acetate phase was dried with anhydrous sodium sulfate, filtered, evaporated to dryness under reduced pressure, and dried under reduced pressure. Thus, 72. 4 g of the aimed product represented in the title were obtained (about 94% in yield).

The measurements of the compound in the infrared absorption spectrum, TOF-Mass spectrum, and NMR resulted in the followings. Thus, the measurements identified the structure of Compound (Ia-4) described above.

Infrared absorption spectrum (cm⁻¹): ν NH 3240, δ NH 1650, ν C=C 1635, ν ring 1604, 1996, ν P=O 1260

TOF-Mass spectrum (M/Z) : 772, 773 (calculated molecular weight = 770.392)

¹H-NMR spectrum (δ, ppm) : CH₂= 5. 15 (4H), =CH- 6.10 (2H), HO-4.8 (4H), -CH₂- 3.70 (4H), CH₃- 1.45 (6H), H-N< 3.3 to 3.5 (4H), aromatic C-H 7.15 to 7.55 (24H)

### Synthesis Example 5

### Synthesis of Compound (Ia-5) represented by general formula (Ia) in which X¹ to X⁴ each represent -(CH₂=CHCH₂)N-, X⁵ and X⁶ each represent -NH-, R¹ to R⁴ each represent HO-C₆H₄-C₆H₄-, and R⁵ represents -p-C₆H₄-C (=O)-p-C₆H₄-

A reaction was performed in the same manner as in Synthesis Example 4 except that 21.2 g (0.10 mol) of 4, 4'-diaminobenzophenone were used instead of benzidine and 13.5 g (0.60 mol) of N-allyl-4-(4'-hydroxphenyl)aniline were used instead of allylamine. The solvent and a volatile component were distilled off at a temperature equal to or lower than 50°C while a decompression level was adjusted. Then, the residue was dissolved into 1,000 ml of ethyl acetate, and a dry hydrochloric acid gas was blown into the mixture. Then, the salt formed with hydrochloride was filtered out, and the residue was dried through the addition of anhydrous potassium carbonate, filtered, evaporated to dryness under reduced pressure, and dried under reduced pressure while attention was paid to carbon dioxide generated. Thus, 72.4 g of the aimed product represented in the title were obtained (about 94% in yield).

The measurements of the compound in the infrared absorption spectrum, TOF-Mass spectrum, and NMR resulted in the followings. Thus, the measurements identified the structure of Compound (Ia-5) described above.

Infrared absorption spectrum (cm⁻¹): ν NH 3240, δ NH 1650, ν C=C 1635, ν ring 1604, 1496, ν P=O 1260

TOF-Mass spectrum (M/Z): 1203, 1204 (calculated molecular weight = 1201.314)

¹H-NMR spectrum (δ, ppm): CH₂= 5.15 to 5.20 (8H), =CH- 6.05 (4H), HO- 4.8 (4H), -CH₂- 3.65 to 3.70 (8H), H-N< 3.45 (2H), aromatic C-H 7.15 to 7.40 (40H)

### Synthesis Example 6

### Synthesis of Compound (Ia-6) represented by general formula (Ia) in which X¹ to X⁴ each represent -(CH₂=CHCH₂)N-, X⁵ and X⁶ each represent -NH-, R¹ to R⁴ each represent α-C₁₀H₇ (an α-naphthyl group), and R⁵ represents -p-C₆H₄-SO₂-p-C₆H₄-

A reaction was performed in the same manner as in Synthesis Example 1 except that 24.8 g (0.10mol) of bis (p-aminophenyl) sulfone were used instead of benzidine and 109.8 g (0.60 mol) of N-allyl-α-naphthylamine were used instead of allylamine. The solvent and a volatile component were distilled off at a temperature equal to or lower than 50°C while a decompression level was adjusted. Then, the residue was dissolved into 1,000 ml of ethyl acetate, and a dry hydrochloric acid gas was blown into the mixture. Then, the salt formed with hydrochloride was filtered out, and the residue was dried through the addition of anhydrous potassium carbonate, filtered, evaporated to dryness under reduced pressure, and dried under reduced pressure while attention was paid to carbon dioxide generated. Thus, 98.4 g of the aimed product represented in the title were obtained (about 92% in yield).

The measurements of the compound in the infrared absorption spectrum, TOF-Mass spectrum, and NMR resulted in the followings. Thus, the measurements identified the structure of Compound (Ia-6) described above.

Infrared absorption spectrum (cm⁻¹): ν NH 3240, δ NH 1650, ν C=C 1635, ν ring 1604, 1496, ν P=O 1260

TOF-Mass spectrum (M/Z): 1071, 1072 (calculated molecular weight = 1069.226)

¹H-NMR spectrum (δ, ppm) : CH₂= 5.20 (8H), =CH- 6.05 (4H), -CH₂-3.65 to 3.70 (8H), H-N< 3.45 (2H), aromatic C-H 7.10 to 7.40 (36H)

### Synthesis Example 7

Synthesis of Compound (Ia-7) represented by general formula (Ia) in which X¹ to X⁴ each represent -(CH₂=CHCH₂)N-, X⁵ and X⁶ each represent -NH-, R¹ to R⁴ each represent CH₂=CHCH₂-, and R⁵ represents 2,6-C₁₀H₆< (a 2,6-naphtylene group)

60.9 g of the aimed product represented in the title were obtained (about 96% in yield) in the same manner as in Synthesis Example 1 except that 15.8 g (0.10 mol) of 2,6-diaminonaphthalene were used instead of benzidine and 58.2 g (0.60 mol) of diallylamine were used instead of allylamine.

The measurements of the compound in the infrared absorption spectrum, TOF-Mass spectrum, and NMR resulted in the followings. Thus, the measurements identified the structure of Compound (Ia-7) described above.

Infrared absorption spectrum (cm⁻¹) : ν NH 3240, δ NH 1650, ν C=C 1635, ν ring 1604, 1496, ν P=O 1260

TOF-Mass spectrum (M/Z) : 636, 637 (calculatedmolecularweight = 634.743)

¹H-NMR spectrum (δ, ppm): CH₂= 5.15 to 5.20 (16H), =CH- 6.05 (8H), -CH₂- 3.65 to 3.70 (16H), H-N< 3.45 (2H), aromatic C-H 7.15 to 7.40 (6H)

### Synthesis Example 8

### Synthesis of Compound (Ia-8) represented by general formula (Ia) in which X¹ and X³ each represent -NH-, X² and X⁴ each represent -O-, X⁵ and X⁶ each represent -NH-, R¹ and R³ each represent CH₂=CHCH₂-, R² and R⁴ each represent -C₆H₅, and R⁵ represents -p-C₆H₄-p-C₆H₄-(4,4'-biphenylene)

42.2 g (0.20 mol) of phenoxyphosphoryldichloride [C₆H₅OP(=O)Cl₂] were added to 100 ml of dimethylacetamide (DMAc) purified by distillation. A solution prepared by dissolving 18.4 g (0.10 mol) of 4,4'-diaminobiphenyl and 20.2 g (0.20 mol) of triethylamine into 150 ml of DMAc was added in drops to the solution at 0 to 5°C over 1 hour, and the whole was reacted at the temperature for 6 hours and then at room temperature for 12 hours. Next, a mixture of 17.1 g (0.30 mol) of allylamine and 20.2 g (0.20 mol) of triethylamine was added in drops to the resultant at room temperature over 1 hour, and the whole was reacted for additional 12 hours. The solvent and an excessive reagent were distilled off at a temperature equal to or lower than 40°C while a decompression level was adjusted. Then, the residue was washed with water to remove triethylamine-hydrochloridesalt. Thus, 52.3 g of the aimed product represented in the title were obtained (about 96% in yield).

The measurements of the compound in the infrared absorption spectrum, TOF-Mass spectrum, and NMR resulted in the followings. Thus, the measurements identified the structure of Compound (Ia-8) described above.

Infrared absorption spectrum (cm⁻¹): ν NH 3255, 3240, δ NH 1650, 1645, ν C=C 1630, ν ring 1603, 1495, ν P=O 1260

TOF-Mass spectrum (M/Z) : 546, 547 (calculatedmolecularweight = 544.569)

¹H-NMR spectrum (δ, ppm): CH₂= 5.0 (4H), =CH- 6.0 (2H), -CH₂₋3.5 (4H), H-N< 3.3, 3.2 (4H), aromatic C-H 7.1 to 7.6 (18H)

### Synthesis Example 9

### Synthesis of Compound (Ia-9) represented by general formula (Ia) in which X¹ and X² each represent -O-, X³ to X⁶ each represent -NH-, R¹ and R² each represent -C₆H₅, R³ and R⁴ each represent CH₂=CHCH₂-, and R⁵ represents -p-C₆H₄-CH₂-p-C₆H₄-

19.8g (0.10mol) of bis(4-aminophenyl)methane and 20.2 g (0.20 mol) of triethylamine were added to 100 ml of dimethylacetamide (DMAc) purified by distillation. A solution prepared by dissolving 26.9 g (0. 10 mol) of diphenoxyphosphorylchloride [(C₆H₅O)₂P(=O)Cl] into 50 ml of DMAc was added in drops to the resultant at 0 to 5°C over 1 hour, and the whole was reacted at the temperature for 6 hours and then at room temperature for 12 hours. Next, 6.0 g (0.10 mol) of phosphoryl chloride [P(=O)Cl₃] were added at a burst to the resultant at 0 to 5°C, and the whole was reacted at the temperature for hours. Next, a mixture of 17.1 g (0.30 mol) of allylamine and 20.2 g (0.20 mol) of triethylamine was added in drops to the resultant at room temperature over 1 hour, and the whole was reacted for additional 12 hours. The solvent and an excessive reagent were distilled off at a temperature equal to or lower than 40°C while a decompression level was adjusted. Then, the residue was washed with water to remove triethylamine-hydrochloride salt. Thus, 51.4 g of the aimed product represented in the title were obtained (about 92% in yield).

The measurements of the compound in the infrared absorption spectrum, TOF-Mass spectrum, and NMR resulted in the followings. Thus, the measurements identified the structure of Compound (Ia-9) described above.

Infrared absorption spectrum (cm⁻¹): ν NH 3255, 3240, δ NH 1650, 1645, ν C=C 1630, ν ring 1603, 1495, ν P=O 1260

TOF-Mass spectrum (M/Z) : 560, 561 (calculated molecular weight = 558.596)

¹H-NMR spectrum (δ, ppm): CH₂= 5.0 (4H), =CH- 6.0 (2H), allyl-CH₂- 3.4 (4H), H-N< 3.3 to 3.2 (4H), -CH₂- 3.0 (2H), aromatic C-H 7.1 to 7.5 (18H)

### Synthesis Example 10

Synthesis of Compound (Ia-10) represented by general formula (Ia) in which X¹ and X² each represent -O-, X³ and X⁴ each represent - (CH₂=CHCH₂)N-, X₅ and X⁶ each represent -(CH₂=CHCH₂)N-, R¹ to R⁴ each represent CH₂=CHCH₂-, and R⁵ represents -p-C₆H₄-O-p-C₆H₄-

28.0 g (0.10 mol) of bis [4- (N-allyl) aminophenyl] ether and 20.2 g (0.20 mol) of triethylamine were added to 100 ml of dimethylacetamide (DMAc) purified by distillation. A solution prepared by dissolving 18.1 g (0.10 mol) of diallyloxyphosphorylchloride [(CH₂=CHCH₂O)₂P(=O)Cl] into 50 ml of DMAc was added in drops to the resultant at 0 to 5°C over 1 hour, and the whole was reacted at the temperature for 6 hours and then at room temperature for 12 hours. Next, 6.0 g (0.10 mol) of phosphoryl chloride [P(=O)Cl₃] were added at a burst to the resultant at 0 to 5°C, and the whole was reacted at the temperature for hours. A mixture of 29.1 g (0.30 mol) of diallylamine and 20.2 g (0.20 mol) of triethylamine was added in drops to the resultant at room temperature over 1 hour, and the whole was reacted for additional 12 hours. The solvent and an excessive reagent were distilled off at a temperature equal to or lower than 40°C while a decompression level was adjusted. Then, the residue was washed with water to remove triethylamine-hydrochloride salt. Thus, 62.4 g of the aimed product represented in the title were obtained (about 92% in yield).

The measurements of the compound in the infrared absorption spectrum, TOF-Mass spectrum, and NMR resulted in the followings. Thus, the measurements identified the structure of Compound (Ia-10) described above.

Infrared absorption spectrum (cm⁻¹) : ν C=C 1630, ν ring 1603, 1495, ν P=O 1260, ν C-O-C 1180

TOF-Mass spectrum (M/Z) : 680, 681 (calculatedmolecularweight = 678.751)

¹H-NMR spectrum (δ, ppm): CH₂= 5.0 to 5.2 (16H), =CH- 6.0 to 6.1 (8H), -CH₂- 3.3 to 3.4 (16H), aromatic C-H 7.1 to 7.3 (8H)

### Synthesis Example 11

### Synthesis of Compound (Ia-11) represented by general formula (Ia) in which X¹ and X³ each represent -O-, X² and X⁴ to X⁶ each represent -NH-, R¹ and R³ each represent CH₂=CHCH₂-, R² and R⁴ each represent C₁₀H₇- (β-naphthyl), and R⁵ represents -p-C₆H₄-C(=O)-p-C₆H₄-

21. 2 g (0. 10 mol) of 4,4'-diaminobenzophenone and 20.2 g (0.20 mol) of triethylamine were added to 100 ml of dimethylacetamide (DMAc) purified by distillation. A solution prepared by dissolving 17.5 g (0.20 mol) of allyloxyphosphoryldichloride [(CH₂=CHCH₂O)P(=O)Cl₂] into 100 ml of DMAc was added in drops to the resultant at 0 to 5°C over 1 hour, and the whole was reacted at the temperature for 6 hours and then at room temperature for 12 hours. Next, a mixture of 43.0 g (0.30 mol) of β-naphthylamine and 20.2 g (0.20 mol) of triethylamine was added in drops to the resultant at 0 to 5°C over 1 hour, and the whole was reacted for additional 12 hours. The solvent and an excessive reagent were distilled off at a temperature equal to or lower than 40°C while a decompression level was adjusted. Then, 500 ml of ethyl acetate were added to filter an insoluble matter off. A dry hydrochloric acid gas was blown into the resultant while the resultant was shaken. Then, β-naphthylamine-hydrochloride salt produced was filtered out, and the solution was evaporated to dryness under reduced pressure. Thus, 51.4 g of the aimed product represented in the title were obtained (about 95% in yield).

The measurements of the compound in the infrared absorption spectrum, TOF-Mass spectrum, and NMR resulted in the followings. Thus, the measurements identified the structure of Compound (Ia-11) described above.

Infrared absorption spectrum (cm⁻¹): ν NH 3240, ν C=O 1730, δ NH 1640, ν C=C 1630, ν ring 1603, 1495, ν P=O 1260

TOF-Mass spectrum (M/Z) : 702, 703 (calculatedmolecularweight = 700.673)

¹H-NMR spectrum (δ, ppm): CH₂= 5.0 to 5.1 (4H), =CH- 6.0 to 6.1 (2H), -CH₂- 3.3 (4H), H-N< 3.3 to 3.5 (4H), aromatic C-H 7.1 to 7.3 (22H)

### [Synthesis of reactive flame retardants represented by general formulae (II)]

### Synthesis Example 12

Synthesis of Compound (IIa-1) represented by general formula (IIa) in which X⁷ and X⁸ each represent -NH-, R⁶ to R⁹ each represent CH₂=CHCH₂-, and R¹⁰ represents -p-C₆H₄-p-C₆H₄- (4,4'-biphenylene)

61.3 g (0.40 mol) of phosphorus oxychloride were added to 100 ml of dimethylacetamide (DMAc) purified by distillation. A solution prepared by dissolving 18.4 g (0.10 mol) of benzidine and 20.2 g (0.20 mol) of triethylamine into 150 ml of DMAc was added in drops to the solution at 0 to 5°C over 1 hour, and the whole was reacted at the temperature for 3 hours and then at room temperature for 3 hours. The solvent and excessive phosphorus oxychloride were distilled off at a temperature equal to or lower than 40°C while a decompression level was adjusted. Then, 150 ml of DMAc were added to the residue to dissolve a solid except triethylamine-hydrochloride salt.

A mixed liquid of 34.8 g (0.60 mol) of allyl alcohol and 60. 6 g (0.60 mol) of triethylamine was added in drops to the resultant at 0 to 5°C over 1 hour, and the whole was reacted at the temperature for 3 hours and then at room temperature for 12 hours. The solvent and an excessive reagent were distilled off at a temperature equal to or lower than 40°C while a decompression level was adjusted. Then, the residue was washed with water to remove triethylamine-hydrochloride salt. Thus, 47.9 g of the aimed product represented in the title were obtained (about 95% in yield).

The measurements of the compound in the infrared absorption spectrum, TOF-Mass spectrum, and NMR resulted in the followings. Thus, the measurements identified the structure of Compound (IIa-1) described above.

Infrared absorption spectrum (cm⁻¹): ν NH 3240, δ NH 1650, ν C=C 1630, ν ring 1603, 1495, ν P=O 1260

TOF-Mass spectrum (M/Z) : 506, 507 (calculatedmolecularweight = 504.462)

¹H-NMR spectrum (δ, ppm): CH₂= 5.1 (8H), =CH- 6.1 (4H), -CH₂₋3.6 (8H), H-N< 3.3 (2H), aromatic C-H 7.2 to 7.4 (8H)

### Synthesis Example 13

Synthesis of Compound (IIa-2) represented by general formula (IIa) in which X⁷ and X⁸ each represent -(CH₂=CHCH₂)N-, R⁶ to R⁹ each represent CH₂=CHCH₂-, and R¹⁰ represents -p-C₆H₄-O-p-C₆H₄-

55.9 g of the aimed product represented in the title were obtained (about 93% in yield) in the same manner as in Synthesis Example 12 except that 28.0 g (0.10 mol) of bis[4-(N-allyl)aminophenyl]ether were used instead of benzidine.

The measurements of the compound in the infrared absorption spectrum, TOF-Mass spectrum, and NMR resulted in the followings. Thus, the measurements identified the structure of Compound (IIa-2) described above.

Infrared absorption spectrum (cm⁻¹): ν C=C 1630, ν ring 1603, 1495, ν P=O 1260, ν C-O-C 1180

TOF-Mass spectrum (M/Z): 602, 603 (calculated molecular weight = 600.592)

¹H-NMR spectrum (δ, ppm): CH₂= 5.1 to 5.2 (12H), =CH- 6.1 to 6.2 (6H), -CH₂- 3.5 to 3.6 (12H), aromatic C-H 7.2 to 7.5 (8H)

### Synthesis Example 14

Synthesis of Compound (IIa-3) represented by general formula (IIa) in which X⁷ and X⁸ each represent -(CH₂=CHCH₂)N-, R⁶ to R⁹ each represent CH₂=CHCH₂-, and R¹⁰ represents -p-C₆H₄-CH₂-p-C₆H₄-

58.1 g of the aimed product represented in the title were obtained (about 97% in yield) in the same manner as in Synthesis Example 12 except that 27.8 g (0.10 mol) of bis [4-(N-allyl)aminophenyl]methane were used instead of benzidine.

The measurements of the compound in the infrared absorption spectrum, TOF-Mass spectrum, and NMR resulted in the followings. Thus, the measurements identified the structure of Compound (IIa-3) described above.

Infrared absorption spectrum (cm⁻¹): ν C=C 1635, 1630, ν ring 1603, 1495, ν P=O 1260, ν C-O-C 1180

TOF-Mass spectrum (M/Z) : 600, 601 (calculated molecular weight = 598.621)

¹H-NMR spectrum (δ, ppm): CH₂= 5.1 to 5.2 (12H), =CH- 6.1 to 6.2 (6H), allyl-CH₂- 3.5 to 3.6 (12H), -CH₂- 3.05 (2H), aromatic C-H 7.2 to 7.4 (8H)

### Synthesis Example 15

Synthesis of Compound (IIa-4) represented by general formula (IIa) in which X⁷ and X⁸ each represent -NH-, R⁶ to R⁹ each represent o-CH₂=CHCH₂-C₆H₅- (o-allylphenyl), and R¹⁰ represents -p-C₆H₄-C(CH₃)₂-p-C₆H₄-

A reaction was performed in the same manner as in Synthesis Example 12 except that 22.6 g (0.10 mol) of 2,2-bis(4-aminophenyl)propane were used instead of benzidine and 80. 5 g (0. 60 mol) of o-allylphenol were used instead of allyl alcohol. The solvent and a volatile component were distilled off while a decompression level was adjusted. Thus, 80. 8 g of the aimed product represented in the title were obtained (about 95% in yield).

The measurements of the compound in the infrared absorption spectrum, TOF-Mass spectrum, and NMR resulted in the followings. Thus, the measurements identified the structure of Compound (IIa-4) described above.

Infrared absorption spectrum (cm⁻¹): ν NH 3235, δ NH 1645, ν C=C 1630, ν ring 1604, 1496, v P=O 1260

TOF-Mass spectrum (M/Z) : 853, 854 (calculatedmolecularweight = 850.824)

¹H-NMR spectrum (δ, ppm): CH₂= 5.0 (8H), =CH- 5.8 (4H), -CH₂-3.3 (8H), CH₃- 1.45 (6H), H-N< 3.3 to 3.5 (2H), aromatic C-H 7.15 to 7.55 (8H)

### Synthesis Example 16

### Synthesis of Compound (IIa-5) represented by general formula (IIa) in which X⁷ and X⁸ each represent -NH-, R⁶ to R⁹ each represent CH₂=CHCH₂O-p-C₆H₄-, and R¹⁰ represents -p-C₆H₄-C(=O)-p-C₆H₄-

A reaction was performed in the same manner as in Synthesis Example 12 except that 21. 2 g (0.10 mol) of 4, 4 ' -diaminobenzeophenone were used instead of benzidine and 90.1 g (0.60 mol) of p-allyloxyphenol were used instead of allyl alcohol. The solvent and a volatile component were distilled off while a decompression level was adjusted. Thus, 86.5 g of the aimed product represented in the title were obtained (about 96% in yield).

The measurements of the compound in the infrared absorption spectrum, TOF-Mass spectrum, and NMR resulted in the followings. Thus, the measurements identified the structure of Compound (IIa-5) described above.

Infrared absorption spectrum (cm⁻¹): ν NH 3235, δ NH 1645, ν C=C 1630, ν ring 1604, 1496, ν P=O 1260

TOF-Mass spectrum (M/Z) : 903, 904 (calculated molecular weight = 900.864)

¹H-NMR spectrum (δ, ppm): CH₂=5.1 (8H), =CH- 5.9 (4H), -CH₂-3.7 (8H), H-N< 3.3 to 3.5 (2H), aromatic C-H 7.15 to 7.55 (8H)

### Synthesis Example 17

### Synthesis of Compound (IIa-6) represented by general formula (IIa) in which X⁷ and X⁸ each represent -(CH₂=CHCH₂)N-, R⁶ to R⁹ each represent α-C₁₀H₇- (α-naphthyl), and R¹⁰ represents -p-C₆H₄-SO₂-p-C₆H₄-

A reaction was performed in the same manner as in Synthesis Example 12 except that 32.8 g (0.10 mol) of bis[p-(N-allyl)aminophenyl]sulfone were used instead of benzidine and 86.5 g (0.60 mol) of α-naphthol were used instead of allyl alcohol. The solvent and a volatile component were distilled off while a decompression level was adjusted. Thus, 86. 5 g of the aimed product represented in the title were obtained (about 96% in yield).

The measurements of the compound in the infrared absorption spectrum, TOF-Mass spectrum, and NMR resulted in the followings. Thus, the measurements identified the structure of Compound (IIa-6) described above.

Infrared absorption spectrum (cm⁻¹): ν C=C 1635, ν ring 1603, 1495, ν P=O 1260, ν S=O 1320

TOF-Mass spectrum (M/Z) : 728, 729 (calculated molecular weight = 726.351)

¹H-NMR spectrum (δ, ppm): CH₂= 5.0 (4H), =CH- 5.9 (2H), -CH₂-3.5 (4H), aromatic C-H 7.10 to 7.75 (36H)

### Synthesis Example 18

### Synthesis of Compound (IIa-7) represented by general formula (IIa) in which X⁷ and X⁸ each represent -(CH₂=CHCH₂)N-, R⁶ to R⁹ each represent CH₂=CHCH₂-, and R¹⁰ represents 2, 6-C₁₀H₆< (2, 6-naphthylene)

A reaction was performed in the same manner as in Synthesis Example 12 except that 23.8 g (0.10 mol) of N,N'-diallyl-2,6-diaminonaphthalene were used instead of benzidine. The solvent and a volatile component were distilled off while a decompression level was adjusted. Thus, 53.1 g of the aimed product represented in the title were obtained (about 95% in yield).

The measurements of the compound in the infrared absorption spectrum, TOF-Mass spectrum, and NMR resulted in the followings. Thus, the measurements identified the structure of Compound (IIa-7) described above.

Infrared absorption spectrum (cm⁻¹): ν C=C 1640, 1635, ν ring 1603, 1495, ν P=O 1260

TOF-Mass spectrum (M/Z) : 560, 561 (calculated molecular weight = 558.554)

¹H-NMR spectrum (δ, ppm): CH₂= 5.0 to 5.2 (12H), =CH- 5.7 to 5.9 (6H), -CH₂- 3.2 to 3.5 (12H), aromatic C-H 7.10 to 7.75 (6H)

### [Synthesis of reactive flame retardants represented by general formulae (III)]

### Synthesis Example 19

### Synthesis of Compound (IIIa-1) represented by general formula (IIIa) in which X⁹ to X¹² each represent -NH-, R¹¹ to R¹⁴ each represent CH₂=CHCH₂-, and R¹⁵ represents -p-C₆H₄-p-C₆H₄- (4,4'-biphenylene)

61.3 g (0.40 mol) of phosphorus oxychloride were added to 100 ml of dimethylacetamide (DMAc) purified by distillation. A solution prepared by dissolving 18.6 g (0.10 mol) of 4,4'-biphenyl alcohol and 20.2 g (0.20 mol) of triethylamine into 150 ml of DMAc was added in drops to the solution at 0 to 5°C over 1 hour, and the whole was reacted at the temperature for 3 hours and then at room temperature for 3 hours. The solvent and excessive phosphorus oxychloride were distilled off at a temperature equal to or lower than 40°C while a decompression level was adjusted. Then, 150 ml of DMAc were added to the residue to dissolve a solid except triethylamine-hydrochloride salt.

A mixed liquid of 34.3 g (0.60 mol) of allylamine and 60.6 g (0.60 mol) of triethylamine was added in drops to the resultant at 0 to 5°C over 1 hour, and the whole was reacted at the temperature for 3 hours and then at room temperature for 12 hours. The solvent and an excessive reagent were distilled off at a temperature equal to or lower than 40°C while a decompression level was adjusted. Then, the residue was washed with water to remove triethylamine-hydrochloride salt. Thus, 47.7 g of the aimed product represented in the title were obtained (about 95% in yield).

The measurements of the compound in the infrared absorption spectrum, TOF-Mass spectrum, and NMR resulted in the followings. Thus, the measurements identified the structure of Compound (IIIa-1) described above.

Infrared absorption spectrum (cm⁻¹): ν NH 3240, δ NH 1650, ν C=C 1630, ν ring 1603, 1495, ν P=O 1260

TOF-Mass spectrum (M/Z) : 504, 505 (calculated molecular weight = 502.492)

¹H-NMR spectrum (δ, ppm): CH₂= 5.1 (8H), =CH- 6.1 (4H), -CH₂₋3.6 (8H), H-N< 3.3 (2H), aromatic C-H 7.1 to 7.3 (8H)

### Synthesis Example 20

### Synthesis of Compound (IIIa-2) represented by general formula (IIIa) in which X⁹ to X¹² each represent -(CH₂=CHCH₂)N-, R¹¹ to R¹⁴ each represent CH₂=CHCH₂-, and R¹⁵ represents -p-C₆H₄-O-p-C₆H₄-

63.8 g of the aimed product represented in the title were obtained (about 94% in yield) in the same manner as in Synthesis Example 19 except that 20.2 g (0.10mol) of bis(4-hydroxyphenyl) ether were used instead of 4,4'-biphenyl alcohol and 58.3 g (0.60 mol) of diallylamine were used instead of allylamine.

The measurements of the compound in the infrared absorption spectrum, TOF-Mass spectrum, and NMR resulted in the followings. Thus, the measurements identified the structure of Compound (IIIa-2) described above.

Infrared absorption spectrum (cm⁻¹) : ν C=C 1630, ν ring 1603, 1495, ν P=O 1260, ν C-O-C 1200

TOF-Mass spectrum (M/Z) : 680, 681 (calculated molecular weight = 678.751)

¹H-NMR spectrum (δ, ppm): CH₂= 5.1 to 5.2 (16H), =CH- 6.1 to 6.2 (8H), -CH₂- 3.4 to 3.6 (16H), aromatic C-H 7.1 to 7.5 (8H)

### Synthesis Example 21

### Synthesis of Compound (IIIa-3) represented by general formula (IIIa) in which X⁹ to X¹² each represent -(CH₂=CHCH₂)N-, R¹¹ to R¹⁴ each represent CH₂=CHCH₂-, and R¹⁵ represents -p-C₆H₄-CH₂-p-C₆H₄-

63.6 g of the aimed product represented in the title were obtained (about 94% in yield) in the same manner as in Synthesis Example 19 except that 20.0 g (0.10 mol) of bis(4-hydroxyphenyl)methane were used instead of 4,4'-biphenyl alcohol and 58.3 g (0.60 mol) of diallylamine were used instead of allylamine.

The measurements of the compound in the infrared absorption spectrum, TOF-Mass spectrum, and NMR resulted in the followings. Thus, the measurements identified the structure of Compound (IIIa-3) described above.

Infrared absorption spectrum (cm⁻¹): ν C=C 1635, ν ring 1605, 1495, ν P=O 1260

TOF-Mass spectrum (M/Z) : 678, 679 (calculated molecular weight = 676.778)

¹H-NMR spectrum (δ, ppm) : CH₂= 5.1 to 5.2 (16H), =CH- 6.1 to 6.2 (8H), allyl-CH₂- 3.4 to 3.6 (16H), -CH₂- 3.1 (2H), aromatic C-H 7.15 to 7.45 (8H)

### Synthesis Example 22

### Synthesis of Compound (IIIa-4) represented by general formula (IIIa) in which X⁹ to X¹² each represent -(CH₂=CHCH₂)N-, R¹¹ to R¹⁴ each represent HO-C₆H₄-, and R¹⁵ represents -p-C₆H₄-C(CH₃)₂-p-C₆H₄-

79.8 g of the aimed product represented in the title were obtained (about 94% in yield) in the same manner as in Synthesis Example 19 except that: 22.8 g (0.10 mol) of 2,2'-bis(4-hydroxyphenyl)propane were used instead of 4,4'-biphenyl alcohol and 79.9 g (0.60 mol) of p-hydroxy-N-allylaniline were used instead of allylamine; and an operation of washing with water involved a treatment with a 0.05-mol/l aqueous solution of hydrochloric acid.

The measurements of the compound in the infrared absorption spectrum, TOF-Mass spectrum, and NMR resulted in the followings. Thus, the measurements identified the structure of Compound (IIIa-4) described above.

Infrared absorption spectrum (cm⁻¹) : ν C=C 1635, ν ring 1605, 1495, ν P=O 1260

TOF-Mass spectrum (M/Z) : 851, 852 (calculated molecular weight = 848.967)

¹H-NMR spectrum (δ, ppm) : CH₂= 5.15 (8H), =CH- 6.1 to 6.2 (4H), -CH₂- 3.4 to 3. 6 (8H), CH₃- 1.4 (6H), aromatic C-H 7. 15 to 7.45 (24H)

### Synthesis Example 23

### Synthesis of Compound (IIIa-5) represented by general formula (IIIa) in which X⁹ to X¹² each represent -NH-, R¹¹ to R¹⁴ each represent CH₂=CHCH₂-O-C₆H₄-C₆H₄-, and R¹⁵ represents -p-C₆H₄-C(=O)-p-C₆H₄-

A reaction was performed in the same manner as in Synthesis Example 19 except that 21.4 g (0.10 mol) of 4,4'-dihydroxybenzophenone were used instead of 4,4'-biphenyl alcohol and 117.2 g (0.60 mol) of 4-(4'-allyloxyphenoxy)aniline were used instead of allylamine. The resultant was evaporated to dryness under reduced pressure while a decompression level was adjusted, and then ethyl acetate was added to prepare a solution. Then, a precipitate produced by blowing a dry hydrochloric acid gas was filtered out, and the residue was added with anhydrous potassium carbonate, filtered, and evaporated to dryness under reduced pressure while attention was paid to a carbon dioxide gas generated. Thus, 101.8 g of the aimed product represented in the title were obtained (about 94% in yield).

The measurements of the compound in the infrared absorption spectrum, TOF-Mass spectrum, and NMR resulted in the followings. Thus, the measurements identified the structure of Compound (IIIa-5) described above.

Infrared absorption spectrum (cm⁻¹): ν NH 3240, δ NH 1650, ν C=O 1750, ν C=C 1635, ν ring 1605, 1495, ν P=O 1260

TOF-Mass spectrum (M/Z): 1085, 1086 (calculated molecular weight = 1083.256)

¹H-NMR spectrum (δ, ppm): CH₂= 5.0 (8H), =CH- 6.1 (4H), -CH₂-3.3 (8H), H-N< 3.4 (4H), aromatic C-H 7.15 to 7.50 (40H)

### Synthesis Example 24

### Synthesis of Compound (IIIa-6) represented by general formula (IIIa) in which X⁹ to X¹² each represent -(CH₂=CHCH₂)N-, R¹¹ to R¹⁴ each represent α-C₁₀H₇- (α-naphthyl), and R¹⁵ represents -p-C₆H₄-SO₂-p-C₆H₄-

A reaction was performed in the same manner as in Synthesis Example 19 except that 25.0 g (0.10 mol) of bis(p-hydroxyphenyl)sulfone were used instead of 4,4'-biphenyl alcohol and 110.0g (0.60 mol) of N-allyl-α-naphthylamine were used instead of allylamine. The resultant was evaporated to dryness under reduced pressure while a decompression level was adjusted, and then ethyl acetate was added to prepare a solution. Then, a precipitate produced by blowing a dry hydrochloric acid gas was filtered out, and the residue was added with anhydrous potassium carbonate, filtered, and evaporated to dryness under reduced pressure while attention was paid to a carbon dioxide gas generated. Thus, 100.7 g of the aimed product represented in the title were obtained (about 94% in yield).

The measurements of the compound in the infrared absorption spectrum, TOF-Mass spectrum, and NMR resulted in the followings. Thus, the measurements identified the structure of Compound (IIIa-6) described above.

Infrared absorption spectrum (cm⁻¹): ν C=C 1635, ν ring 1605, 1495, ν P=0.1260, ν S=O 1320

TOF-Mass spectrum (M/Z): 1073, 1074 (calculated molecular weight = 1071.188)

¹H-NMR spectrum (5, ppm) : CH₂= 5.1 (8H), =CH- 6.2 (4H), -CH₂-3.5 (8H), aromatic C-H 7.15 to 7.55 (36H)

### Synthesis Example 25

### Synthesis of Compound (IIIa-7) represented by general formula (IIIa) in which X⁹ to X¹² each represent -(CH₂=CHCH₂)N-, R¹¹ to R¹⁴ each represent CH₂=CHCH₂-, and R¹⁵ represents 2, 6-C₁₀H₆< (2,6-naphthylene)

65.5 g of the aimed product represented in the title were obtained (about 94% in yield) in the same manner as in Synthesis Example 19 except that 16.0 g (0.10 mol) of naphthalene-2,6-diol were used instead of 4,4'-biphenyl alcohol and 58.3 g (0.60 mol) of diallylamine were used instead of allylamine.

The measurements of the compound in the infrared absorption spectrum, TOF-Mass spectrum, and NMR resulted in the followings. Thus, the measurements identified the structure of Compound (IIIa-7) described above.

Infrared absorption spectrum (cm⁻¹): ν C=C 1635, ν ring 1605, 1495, ν P=O 1260, ν S=O 1320

TOF-Mass spectrum (M/Z): 698, 699 (calculated molecular weight = 696.713)

¹H-NMR spectrum (δ, ppm): CH₂= 5.0 to 5.2 (16H), =CH- 6.1 to 6.2 (8H), -CH₂- 3.4 to 3.5 (16H), aromatic C-H 7.05 to 7.50 (6H)

### Synthesis Example 26

### Synthesis of Compound (IIIa-8) represented by general formula (IIIa) in which X⁹ and X¹¹ each represent -NH-, X¹⁰ and X¹² each represent -O-, R¹¹ and R¹³ each represent CH₂=CHCH₂-, R¹² and R¹⁴ each represent -C₆H₅, and R¹⁵ represents -p-C₆H₄-p-C₆H₄- (4,4'-biphenylene)

42.2 g (0.20 mol) of phenoxyphosphoryldichloride [C₆H₅OP(=O)Cl₂] were added to 100 ml of dimethylacetamide (DMAc) purified by distillation. A solution prepared by dissolving 18.6 g (0.10 mol) of 4,4'-biphenyl alcohol and 20.2 g (0.20 mol) of triethylamine into 150 ml of DMAc was added in drops to the solution at 0 to 5°C over 1 hour, and the whole was reacted at the temperature for 6 hours and then at room temperature for 12 hours. Next, a mixture of 17.1 g (0.30 mol) of allylamine and 20.2 g (0.20 mol) of triethylamine was added in drops to the resultant at room temperature over 1 hour, and the whole was reacted for additional 12 hours. The solvent and an excessive reagent were distilled off at a temperature equal to or lower than 40°C while a decompression level was adjusted. Then, the residue was washed with water to remove triethylamine-hydrochloridesalt. Thus, 54.8g of the aimed product represented in the title were obtained (about 95% in yield).

The measurements of the compound in the infrared absorption spectrum, TOF-Mass spectrum, and NMR resulted in the followings. Thus, the measurements identified the structure of Compound (IIIa-8) described above.

Infrared absorption spectrum (cm⁻¹): ν NH 3240, δ NH 1650, ν C=C 1630, ν ring 1603, 1495, ν P=O 1260

TOF-Mass spectrum (M/Z) : 578, 579 (calculatedmolecularweight = 576.529)

¹H-NMR spectrum (δ, ppm): CH₂= 5.1 (4H), =CH- 6.1 (2H), -CH₂-3.6 (4H), H-N< 3.2 (2H), aromatic C-H 7.1 to 7.6 (18H)

### Synthesis Example 27

### Synthesis of Compound (IIIa-9) represented by general formula (IIIa) in which X⁹ and X¹¹ each represent -(CH₂=CHCH₂)N-, X¹⁰ and X¹² each represent -O-, R¹¹ to R¹⁴ each represent CH₂=CHCH₂-, and R¹⁵ represents -p-C₆H₄-O-p-C₆H₄-

56.5 g of the aimed product represented in the title were obtained (about 94% in yield) in the same manner as in Synthesis Example 19 except that 27.0 g (0.20mol) of allylphosphoryldichloride [CH₂=CHCH₂O-P(=O)Cl₂] were used instead of phenoxyphosphoryldichloride, 20.2 g (0.10 mol) of bis (4-hydroxyphenyl)ether were used instead of 4,4'-biphenyl alcohol, and 58.3 g (0.60 mol) of diallylamine were used instead of allylamine.

The measurements of the compound in the infrared absorption spectrum, TOF-Mass spectrum, and NMR resulted in the followings. Thus, the measurements identified the structure of Compound (IIIa-9) described above.

Infrared absorption spectrum (cm⁻¹): ν C=C 1630, ν ring 1603, 1495, ν P=O 1260, ν C-O-C 1200

TOF-Mass spectrum (M/Z): 602, 603 (calculated molecular weight = 600.592)

¹H-NMR spectrum (δ, ppm): CH₂= 5.1 to 5.2 (12H), =CH- 6.1 to 6.2 (6H), -CH₂- 3.4 to 3.6 (12H), aromatic C-H 7.1 to 7.5 (8H)

### Synthesis Example 28

### Synthesis of Compound (IIIa-10) represented by general formula (IIIa) in which X⁹ and X¹⁰ each represent -O-, X¹¹ and X¹² each represent - (CH₂=CHCH₂)N-, R¹¹ to R¹⁴ each represent CH₂=CHCH₂-, and R¹⁵ represents -p-C₆H₄-CH₂-p-C₆H₄-

16.5 g (0.10 mol) of diallylphenoxyphosphoryldichloride [(CH₂=CHCH₂O)₂P(=O)Cl] were added to 100 ml of dimethylacetamide (DMAc) purified by distillation. A solution prepared by dissolving 20.0 g (0.10 mol) of bis(4-hydroxyphenyl)methane and 20.2 g (0.20 mol) of triethylamine into 150 ml of DMAc was added in drops to the solution at 0 to 5°C over 1 hour, and the whole was reacted at the temperature for 6 hours and then at room temperature for 12 hours. Next, a mixture of 46.0 g (0.30 mol) of phosphoryl chloride [P(=O)Cl₃] and 20.2 g (0.20 mol) of triethylamine was added in drops to the resultant at room temperature over 1 hour, and the whole was reacted for additional 12 hours. The solvent and an excessive reagent were distilled off at a temperature equal to or lower than 40°C while a decompression level was adjusted. Then, the residue was re-dissolved into 100 ml of DMAc again, a mixed liquid of 58.3 g (0.60 mol) of diallylamine and 20.2 g (0.20 mol) of triethylamine was added in drops to the solution at room temperature over 1 hour, and the whole was reacted for 12 hours. The subsequent treatment was the same as that of Synthesis Example 19. Thus, 63.6 g of the aimed product represented in the title were obtained (about 94% in yield).

The measurements of the compound in the infrared absorption spectrum, TOF-Mass spectrum, and NMR resulted in the followings. Thus, the measurements identified the structure of Compound (IIIa-10) described above.

Infrared absorption spectrum (cm⁻¹): ν C=C 1635, ν ring 1605, 1495, ν P=O 1260

TOF-Mass spectrum (M/Z) : 600, 601 (calculated molecular weight = 598.612)

¹H-NMR spectrum (δ, ppm): CH₂= 5.1 to 5.2 (12H), =CH- 6.1 to 6.2 (6H), allyl-CH₂- 3.4 to 3.6 (12H), -CH₂- 3.1 (2H), aromatic C-H 7.15 to 7.45 (8H)

### [Synthesis of reactive flame retardants represented by general formulae (IV)]

### Synthesis Example 29

### Synthesis of Compound (IVa-1) represented by general formula (IVa) in which R¹⁶ to R¹⁹ each represent CH₂=CHCH₂- and R²⁰ represents -p-C₆H₄-p-C₆H₄- (4,4'-biphenylene)

61.3 g (0.40 mol) of phosphorus oxychloride were added to 100 ml of dimethylacetamide (DMAC) purified by distillation. A solution prepared by dissolving 18.6 g (0.10 mol) of 4,4'-biphenyl alcohol and 20.2 g (0.20 mol) of triethylamine into 150 ml of DMAc was added in drops to the solution at 0 to 5°C over 1 hour, and the whole was reacted at the temperature for 3 hours and then at room temperature for 3 hours. The solvent and excessive phosphorus oxychloride were distilled off at a temperature equal to or lower than 40°C while a decompression level was adjusted. Then, 150 ml of DMAc were added to the residue to dissolve a solid except triethylamine-hydrochloride salt.

A mixed liquid of 34.8 g (0.60 mol) of allyl alcohol and 60.6 g (0.60 mol) of triethylamine was added in drops to the resultant at 0 to 5°C over 1 hour, and the whole was reacted at the temperature for 3 hours and then at room temperature for 12 hours. The solvent and an excessive reagent were distilled off at a temperature equal to or lower than 40°C while a decompression level was adjusted. Then, the residue was washed with water to remove triethylamine-hydrochloride salt. Thus, 39.3 g of the aimed product represented in the title were obtained (about 95% in yield).

The measurements of the compound in the infrared absorption spectrum, TOF-Mass spectrum, and NMR resulted in the followings. Thus, the measurements identified the structure of Compound (IVa-1) described above.

Infrared absorption spectrum (cm⁻¹) : ν C=C 1630, ν ring 1603, 1495, ν P=O 1260

TOF-Mass spectrum (M/Z) : 415, 416 (calculated molecular weight = 413.504)

¹H-NMR spectrum (δ, ppm): CH₂= 5.0 (8H), =CH- 6.0 (4H), -CH₂-3.5 (8H), aromatic C-H 7.1 to 7.4 (8H)

### Synthesis Example 30

### Synthesis of Compound (IVa-2) represented by general formula (IVa) in which R¹⁶ to R¹⁹ each represent CH₂=CHCH₂- and R²⁰ represents -p-C₆H₄-O-p-C₆H₄-

40.4 g of the aimed product represented in the title were obtained (about 94% in yield) in the same manner as in Synthesis Example 29 except that 20.2 g (0.10 mol) of bis (4-hydroxyphenyl)ether were used instead of 4,4'-biphenyl alcohol.

The measurements of the compound in the infrared absorption spectrum, TOF-Mass spectrum, and NMR resulted in the followings. Thus, the measurements identified the structure of Compound (IVa-2) described above.

Infrared absorption spectrum (cm⁻¹): ν C=C 1630, ν ring 1603, 1495, ν P=O 1260, ν C-O-C 1200

TOF-Mass spectrum (M/Z): 431, 432 (calculatedmolecularweight = 429.504)

¹H-NMR spectrum (δ, ppm): CH₂= 5.1 to 5.2 (8H), =CH- 6.1 to 6.2 (4H), -CH₂- 3.4 to 3.6 (8H), aromatic'C-H 7.1 to 7.5 (8H)

### Synthesis Example 31

### Synthesis of Compound (IVa-3) represented by general formula (IVa) in which R¹⁶ to R¹⁹ each represent CH₂=CHCH₂- and R²⁰ represents -p-C₆H₄-CH₂-p-C₆H₄-

40.2 g of the aimed product represented in the title were obtained (about 94% in yield) in the same manner as in Synthesis Example 29 except that 20.0 g (0.10 mol) of bis(4-hydroxyphenyl)methane were used instead of 4,4'-biphenyl alcohol.

The measurements of the compound in the infrared absorption spectrum, TOF-Mass spectrum, and NMR resulted in the followings. Thus, the measurements identified the structure of Compound (IVa-3) described above.

Infrared absorption spectrum (cm⁻¹): ν C=C 1635, ν ring 1605, 1495, ν P=O 1260

TOF-Mass spectrum (M/Z): 429, 430 (calculated molecular weight = 427.531)

¹H-NMR spectrum (δ, ppm): CH₂= 5.0 to 5.1 (8H), =CH- 6.0 to 6.1 (4H), allyl-CH₂- 3.2 to 3.4 (8H), -CH₂- 3.0 (2H), aromatic C-H 7.15 to 7.45 (8H)

### Synthesis Example 32

### Synthesis of Compound (IVa-4) represented by general formula (IVa) in which R¹⁶ to R¹⁹ each represent p-CH₂=CHCH₂O-C₆H₄- and R²⁰ represents -p-C₆H₄-C(CH₃)₂-P-C₆H₄-

88.0 g of the aimed product represented in the title were obtained (about 96% in yield) in the same manner as in Synthesis Example 29 except that 22.8 g (0.10 mol) of 2,2'-bis(4-hydroxyphenyl)propane were used instead of 4,4'-biphenyl alcohol and 90.1 g (0.60 mol) of p-allyloxyphenol were used instead of allyl alcohol.

The measurements of the compound in the infrared absorption spectrum, TOF-Mass spectrum, and NMR resulted in the followings. Thus, the measurements identified the structure of Compound (IVa-4) described above.

Infrared absorption spectrum (cm⁻¹): ν C=C 1635, ν ring 1605, 1495, ν P=O 1260

TOF-Mass spectrum (M/Z): 918, 919 (calculated molecular weight = 916.904)

¹H-NMR spectrum (δ, ppm): CH₂= 5.10 (8H), =CH- 6.2 to 6.4 (4H), -CH₂- 3.4 to 3.6 (8H), CH₃- 1.4 (6H), aromatic C-H 7.15 to 7. 45 (24H)

### Synthesis Example 33

### Synthesis of Compound (IVa-5) represented by general formula (IVa) in which R¹⁶ to R¹⁹ each represent o-CH₂=CHCH₂-C₆H₄- and R²⁰ represents -p-C₆H₄-C(=O)-p-C₆H₄-

101.8 g of the aimed product represented in the title were obtained (about 94% in yield) in the same manner as in Synthesis Example 29 except that 21.4 g (0.10 mol) of 4,4'-dihydroxybenzophenone were used instead of 4,4'-biphenyl alcohol and 80.5 g (0.60 mol) of o-allylphenol were used instead of allyl alcohol.

The measurements of the compound in the infrared absorption spectrum, TOF-Mass spectrum, and NMR resulted in the followings. Thus, the measurements identified the structure of Compound (IVa-5) described above.

Infrared absorption spectrum (cm⁻¹) : ν C=O 1750, ν C=C 1635, ν ring 1605, 1495, ν P=O 1260

TOF-Mass spectrum (M/Z) : 840, 841 (calculated molecular weight = 838.834)

¹H-NMR spectrum (δ, ppm) : CH₂= 5.2 (8H), =CH- 6.3 (4H), -CH₂-3.5 (8H), aromatic C-H 7.15 to 7.50 (24H)

### Synthesis Example 34

### Synthesis of Compound (IVa-6) represented by general formula (IVa) in which R¹⁶ to R¹⁹ each represent CH₂=CHCH₂- and R²⁰ represents -p-C₆H₄-SO₂-p-C₆H₄-

52.5 g of the aimed product represented in the title were obtained (about 92% in yield) in the same manner as in Synthesis Example 29 except that 25.0 g (0.10 mol) of bis(p-hydroxyphenyl)sulfone were used instead of 4,4'-biphenyl alcohol.

The measurements of the compound in the infrared absorption spectrum, TOF-Mass spectrum, and NMR resulted in the followings. Thus, the measurements identified the structure of Compound (IVa-6) described above.

Infrared absorption spectrum (cm⁻¹): ν C=C 1635, ν ring 1605, 1495, ν P=O 1260, ν S=O 1320

TOF-Mass spectrum (M/Z): 572, 573 (calculated molecular weight = 570.498)

¹H-NMR spectrum (δ, ppm): CH₂= 5.1 (8H), =CH- 6.2 (4H), -CH₂-3.5 (8H), aromatic C-H 7.15 to 7.65 (8H)

### Synthesis Example 35

### Synthesis of Compound (IVa-7) represented by general formula (IVa) in which R¹⁶ to R¹⁹ each represent CH₂=CHCH₂- and R²⁰ represents 2,6-C₁₀H₆< (2, 6-naphthylene)

44.7 g of the aimed product represented in the title were obtained (about 93% in yield) in the same manner as in Synthesis Example 29 except that 16.0 g (0.10 mol) of naphthalene-2,6-diol were used instead of 4,4'-biphenyl alcohol.

The measurements of the compound in the infrared absorption spectrum, TOF-Mass spectrum, and NMR resulted in the followings. Thus, the measurements identified the structure of Compound (IVa-7) described above.

Infrared absorption spectrum (cm⁻¹): ν C=C 1635, ν ring 1605, 1495, ν P=O 1260

TOF-Mass spectrum (M/Z): 482, 483 (calculated molecular weight = 480.395)

¹H-NMR spectrum (δ, ppm): CH₂= 5.1 (8H), =CH- 6.2 (4H), -CH₂-3.5 (8H), aromatic C-H 7.15 to 7.25 (6H)

### B: Production of the product made of flame-retarded resin

Hereinafter, Examples 1 to 10 are production examples of resin products using the reactive flame retardants represented by the general formulae (I) and Comparative Examples 1 to 11 are comparative examples corresponding thereto.

In addition, Examples 11 to 20 are production examples of resin products using the reactive flame retardants represented by the general formulae (II) and Comparative Examples 12 to 22 are comparative examples corresponding thereto.

In addition, Examples 21 to 30 are production examples of resin products using the reactive flame retardants represented by the general formulae (III) and Comparative Examples 23 to 33 are comparative examples corresponding thereto.

In addition, Examples 31 to 40 are production examples of resin products using the reactive flame retardants represented by the general formulae (IV) and Comparative Examples 34 to 44 are comparative examples corresponding thereto.

### [Production of resin products using reactive flame retardants represented by general formulae (I)]

### Example 1

61.8 parts by mass of 6, 6 nylon (manufacturedby UBE INDUSTRIES, LTD.: 2020B) as a thermoplastic resin, 22 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers, 1 part by mass of carbon black as a colorant, and 0.2 part by mass of an antioxidant (manufactured by Ciba Geigy: Irganox 1010) were added, and the whole was blended with 5 parts by mass of calcium carbonate as an inorganic filler and 10 parts by mass of Compound (Ia-1) described above as a reactive flame retardant. The mixture was kneaded by means of a side-flow type biaxial extruder (manufactured by Japan Steel Works, LTD.) at 280°C to produce a resin pellet, and then the pellet was dried at 105°C for 4 hours. After that, the pellet was molded by means of an injection molding machine (manufactured by FUNUC: α50C) under conditions including a resin temperature of 280°C and a die temperature of 80°C.

After that, the molded product was irradiated with 25 kGy of a γ ray from cobalt 60 as a radiation source to produce a resin product of Example 1.

### Example 2

62.8 parts bymass of 6, 6 nylon (manufactured by UBE INDUSTRIES, LTD.: 2020B) as a thermoplastic resin were added with 4 parts by mass of clay of about 0.05 µm in diameter as an inorganic filler, 1 part by mass of carbon black as a colorant, 8 parts by mass of Compound (Ia-7) described above (a multifunctional compound) and 4 parts by mass of Compound (Ia-8) described above (a bifunctional compound) as reactive flame retardants, and 0.2 part by mass of an antioxidant (manufactured by Ciba Geigy: Irganox 1010), and the whole was mixed. Then, 20 parts by mass of glass fibers with their surfaces treated with a silane coupling agent each having a fiber length of about 3 mm (manufactured by Asahi Fiber-Glass Co., Ltd. : 03.JAFT2Ak25) as reinforced fibers were mixed into a mixed resin systemmolten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 2.

### Example 3

The same amounts of an extender pigment, glass fibers, a colorant, and an antioxidant as those of Example 2 were added to produce a resin product of Example 3 except that 58.8 parts by mass of 6,6 nylon (manufactured by UBE INDUSTRIES, LTD.: 2020B) were used as a thermoplastic resin and 10 parts by mass of Compound (Ia-16) described above (a multifunctional compound) and 6 parts by mass of a non-reactive organophosphorus-based flame retardant (manufactured by Sanko Chemical Co., Ltd.: HCA-HQ) were used as flame retardants.

### Example 4

62.8 parts by mass of 6, 6 nylon (manufacturedby UBE INDUSTRIES, LTD.: 2020B) as a thermoplastic resin were added with 4 parts by mass of clay of about 0.05 µm in diameter as an inorganic filler, 1 part by mass of carbon black as a colorant, 10 parts by mass of Compound (Ia-14) described above (a multifunctional compound) as a reactive flame retardant, 2 parts by mass of a multifunctional cyclic compound (manufactured by Nippon Kasei Chemical Co., Ltd.: TAIC), and 0.2 part by mass of an antioxidant (manufactured by Ciba Geigy: Irganox 1010), and the whole was mixed. Then, 20 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin system molten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 4.

### Example 5

78 parts by mass of a polybutylene terephthalate resin (manufactured by Toray Industries, Inc.: TORAYCON 1401X06) as a thermoplastic resin, 12 parts by mass of Compound (Ia-3) described above and 5 parts by mass of a non-reactive organophosphorus-based flame retardant (manufactured by Sanko Chemical Co., Ltd.: HCA-HQ) as flame retardants, and 5 parts by mass of antimony oxide were kneaded at a kneading temperature of 245°C to produce a resin compound pellet, and then the pellet was dried at 130°C for 3 hours. A molded product was molded under the same conditions as those of Example 2 except that the cylinder temperature in the condition at the time of molding was changed to 250°C.

After that, the molded product was irradiated with an electron beam at an irradiation dose of 40 kGy at an accelerating voltage of 4.8 MeV by means of an accelerator manufactured by Sumitomo Heavy Industries, Ltd. to produce a resin product of Example 5.

### Example 6

A resin product of Example 6 was produced according to the same formulation as that of Example 1 and under the same conditions as those of Example 1 except that 8 parts by mass of Compound (Ia-15) described above (a tetrafunctional compound) and 2 parts by mass of trifunctional isocyanuric acid EO-modified triacrylate (manufactured by TOAGOSEI CO., LTD. : M-315) were used in combination as the flame retardants of Example 1.

### Example 7

A molded product was molded under the same conditions as those of Example 2 except that 2 parts by mass of a heat catalyst (manufactured by NOF CORPORATION: Nofmer BC) were additionally added to the system of Example 2.

After that, the molded product was reacted by heating at 245°C for 8 hours to produce a resin product of Example 7.

### Example 8

A molded product was molded under the same conditions as those of Example 2 except that 7 parts by mass of a UV initiator (Irganox 651 and Irganox 369 manufactured by Ciba Geigy were used in combination at a ratio of 2 : 1) were added to the system of Example 2.

After that, the molded product was irradiated with light with an illuminance of 150 mW/cm² at a wavelength of 365 nm by means of an ultra-high pressure mercury lamp for 2 minutes to produce a resin product of Example 8.

### Example 9

8 parts by mass of Compound (Ia-4) described above as a reactive flame retardant were added to a system obtained by dispersing 47 parts by mass of silica into 45 parts by mass of a thermosetting epoxy-based mold resin (manufactured by Nagase Chemical Co., Ltd., base compound XNR4012:100, curing agent XNH4012:50, accelerating agent FD400:1) to produce a mold molded product. After that, the molded product was reacted at 100°C for 1 hour to produce a resin product of Example 9 (a sealing compound).

### Example 10

6 parts by mass of Compound (Ia-4) described above as a reactive flame retardant were added to 94 parts by mass of an epoxy resin available for sealing a semiconductor (manufactured by Shin-Etsu Chemical Co., Ltd.: SEMICOAT 115) to produce a mold molded product. After that, the molded product was reacted at 150°C for 4 hours to produce a resin product of Example 10 (a sealing compound).

### Comparative Examples 1 to 10

Resin products of Comparative Examples 1 to 10 were produced in the same manners as in Examples 1 to 10 only except that the reactive flame retardant represented by the general formula (Ia) was not compounded in Examples 1 to 10.

### Comparative Example 11

A resin product of Comparative Example 11 was produced under the same conditions as those of Example 3 except that only 16 parts by mass of a non-reactive organophosphorus-based flame retardant (manufactured by Sanko Chemical Co., Ltd.: EPOCLEAN) were added as the flame retardant in Example 3.

### [Production of resin products using reactive flame retardants represented by general formulae (II)]

### Example 11

61. 8 parts by mass of 6, 6 nylon (manufactured by UBE INDUSTRIES, LTD.: 2020B) as a thermoplastic resin, 20 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers, 1 part by mass of carbon black as a colorant, and 0.2 part by mass of an antioxidant (manufactured by Ciba Geigy: Irganox 1010) were added, and the whole was compounded with 5 parts by mass of calcium carbonate as an inorganic filler and 12 parts by mass of Compound (IIa-1) described above as a reactive flame retardant. The mixture was kneaded by means of a side-flow type biaxial extruder (manufactured by Japan Steel Works, LTD.) at 280°C to produce a resin pellet, and then the pellet was dried at 105°C for 4 hours. After that, the pellet was molded by means of an injection molding machine (manufactured by FUNUC: α50C) under conditions including a resin temperature of 280°C and a die temperature of 80°C.

After that, the molded product was irradiated with 25 kGy of a γ ray from cobalt 60 as a radiation source to produce a resin product of Example 11.

### Example 12

60.8 parts bymass of 6, 6 nylon (manufacturedby UBE INDUSTRIES, LTD.: 2020B) as a thermoplastic resin were added with 4 parts by mass of clay of about 0.05 µm in diameter as an inorganic filler, 1 part by mass of carbon black as a colorant, 8 parts by mass of Compound (IIa-4) described above (a multifunctional compound) and 6 parts by mass of Compound (IIa-11) described above (a bifunctional compound) as reactive flame retardants, and 0.2 part by mass of an antioxidant (manufactured by Ciba Geigy: Irganox 1010), and the whole was mixed. Then, 20 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin systemmolten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 12.

### Example 13

The same amounts of an inorganic filler, glass fibers, a colorant, and an antioxidant as those of Example 12 were added to produce a resin product of Example 13 except that 58.8 parts by mass of 6,6 nylon (manufactured by UBE INDUSTRIES, LTD.: 2020B) were used as a thermoplastic resin and 10 parts by mass of Compound (IIa-7) described above (a multifunctional compound) and 6 parts by mass of a non-reactive organophosphorus-based flame retardant (manufactured by Sanko Chemical Co., Ltd.: HCA-HQ) were used as flame retardants.

### Example 14

59.8 parts by mass of 6, 6 nylon (manufactured by UBE INDUSTRIES, LTD.: 2020B) as a thermoplastic resin were added with 4 parts by mass of clay of about 0.05 µm in diameter as an inorganic filler, 1 part by mass of carbon black as a colorant, 8 parts by mass of Compound (IIa-4) described above (a multifunctional compound) as a reactive flame retardant, 2 parts by mass of a multifunctional cyclic compound (manufactured by Nippon Kasei Chemical Co., Ltd.: TAIC), and 0.2 part by mass of an antioxidant (manufactured by Ciba Geigy: Irganox 1010), and the whole was mixed. Then, 25 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin system molten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 14.

### Example 15

78 parts by mass of a polybutylene terephthalate resin (manufactured by Toray Industries, Inc.: TORAYCON 1401X06) as a thermoplastic resin, 12 parts by mass of Compound (IIa-9) described above and 5 parts by mass of a non-reactive organophosphorus-based flame retardant (manufactured by Sanko Chemical Co., Ltd.: HCA-HQ) as flame retardants, and 5 parts by mass of antimony oxide were kneaded at a kneading temperature of 245°C to produce a resin compound pellet, and then the pellet was dried at 130°C for 3 hours. A molded product was molded under the same conditions as those of Example 12 except that the cylinder temperature in the condition at the time of molding was changed to 250°C.

After that, the molded product was irradiated with an electron beam having an irradiation dose of 40 kGy at an accelerating voltage of 4.8 MeV by means of an accelerator manufactured by Sumitomo Heavy Industries, Ltd. to produce a resin product of Example 15.

### Example 16

A resin product of Example 16 was produced according to the same formulation as that of Example 11 and under the same conditions as those of Example 11 except that 8 parts by mass of Compound (IIa-6) described above (a tetrafunctional compound) and 4 parts by mass of trifunctional isocyanuric acid EO-modified triacrylate (manufactured by TOAGOSEI CO., LTD. : M-315) were used in combination as the flame retardants in Example 11.

### Example 17

A molded product was molded under the same conditions as those of Example 12 except that 2 parts by mass of a heat catalyst (manufactured by NOF CORPORATION: Nofmer BC) were additionally added to the system of Example 12.

After that, the molded product was reacted by heating at 245°C for 8 hours to produce a resin product of Example 17.

### Example 18

A molded product was molded under the same conditions as those of Example 12 except that 7 parts by mass of a UV initiator (Irganox 651 and Irganox 369 manufactured by Ciba Geigy were used in combination at a ratio of 2 : 1) were added to the system of Example 12.

After that, the molded product was irradiated with light with an illuminance of 150 mW/cm² at a wavelength of 365 nm by means of an ultra-high pressure mercury lamp for 2 minutes to produce a resin product of Example 18.

### Example 19

8 parts bymass of Compound (IIa-9) described above as a reactive flame retardant were added to a system obtained by dispersing 45 parts by mass of silica into 47 parts by mass of a thermosetting epoxy-based mold resin (manufactured by Nagase Chemical Co., Ltd., base compound XNR4012:100, curing agent XNH4012:50, accelerating agent FD400:1) to produce a mold molded product. After that, the molded product was reacted at 100°C for 1 hour to produce a resin product of Example 19 (a sealing compound).

### Example 20

6 parts by mass of Compound (IIa-12) described above as a reactive flame retardant were added to 94 parts by mass of an epoxy resin for sealing a semiconductor (manufactured by Shin-Etsu Chemical Co., Ltd.: SEMICOAT 115) to produce a mold molded product. After that, the molded product was reacted at 150°C for 4 hours to produce a resin product of Example 20 (a sealing compound).

### Comparative Examples 12 to 21

Resin products of Comparative Examples 12 to 21 were produced in the same manners as in Examples 11 to 20 only except that the reactive flame retardant represented by the general formula (IIa) was not compounded in Examples 11 to 20.

### Comparative Examples 1 to 10

### Comparative Example 22

A resin product of Comparative Example 22 was produced under the same conditions as those of Example 13 except that only 16 parts by mass of a non-reactive organophosphorus-based flame retardant (manufactured by Sanko Chemical Co., Ltd.: EPOCLEAN) were added as the flame retardant of Example 13.

### [Production of resin products using reactive flame retardants represented by general formulae (III)]

### Example 21

61. 8 parts bymass of 6, 6 nylon (manufactured by UBE INDUSTRIES, LTD.: 2020B) as a thermoplastic resin, 20 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers, 1 part by mass of carbon black as a colorant, and 0.2 part by mass of an antioxidant (manufactured by Ciba Geigy: Irganox 1010) were added, and the whole was compounded with 5 parts by mass of calcium carbonate as an inorganic filler and 12 parts by mass of Compound (IIIa-1) described above as a reactive flame retardant. The mixture was kneaded by means of a side-flow type biaxial extruder (manufactured by Japan Steel Works, LTD.) at 280°C to produce a resin pellet, and then the pellet was dried at 105°C for 4 hours. After that, the pellet was molded by means of an injection molding machine (manufactured by FUNUC: α50C) under conditions including a resin temperature of 280°C and a die temperature of 80°C.

After that, the molded product was irradiated with 25 kGy of a γ ray from cobalt 60 as a radiation source to produce a resin product of Example 21.

### Example 22

60.8 parts by mass of 6, 6 nylon (manufactured by UBE INDUSTRIES, LTD.: 2020B) as a thermoplastic resin were added with 4 parts by mass of clay of about 0.05 µm in diameter as an inorganic filler, 1 part by mass of carbon black as a colorant, 8 parts by mass of Compound (IIIa-4) described above (a multifunctional compound) and 6 parts by mass of Compound (IIIa-8) described above (a bifunctional compound) as reactive flame retardants, and 0.2 part by mass of an antioxidant (manufactured by Ciba Geigy: Irganox 1010), and the whole was mixed. Then, 20 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin systemmolten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 22.

### Example 23

The same amounts of an extender pigment, glass fibers, a colorant, and an antioxidant as those of Example 22 were added to produce a resin product of Example 23 under the same conditions as those of Example 22 except that 58.8 parts by mass of 6,6 nylon (manufactured by UBE INDUSTRIES, LTD.: 2020B) were used as a thermoplastic resin and 10 parts by mass of Compound (IIIa-7) described above (a multifunctional compound) and 6 parts by mass of a non-reactive organophosphorus-based flame retardant (manufactured by Sanko Chemical Co., Ltd.: HCA-HQ) were used as flame retardants.

### Example 24

59.8 parts bymass of 6, 6 nylon (manufacturedbyUBE INDUSTRIES, LTD.: 2020B) as a thermoplastic resin were added with 4 parts by mass of clay of about 0.05 µm in diameter as an inorganic filler, 1 part by mass of carbon black as a colorant, 8 parts by mass of Compound (IIIa-4) described above (a multifunctional compound) as a reactive flame retardant, 2 parts by mass of a multifunctional cyclic compound (manufactured by Nippon Kasei Chemical Co., Ltd.: TAIC), and 0.2 part by mass of an antioxidant (manufactured by Ciba Geigy: Irganox 1010), and the whole was mixed. Then, 25 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin system molten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 24.

### Example 25

78 parts by mass of a polybutylene terephthalate resin (manufactured by Toray Industries, Inc.: TORAYCON 1401X06) as a thermoplastic resin, 12 parts by mass of Compound (IIIa-9) described above and 5 parts by mass of a non-reactive organophosphorus-based flame retardant (manufactured by Sanko Chemical Co., Ltd.: HCA-HQ) as flame retardants, and 5 parts by mass of antimony oxide were kneaded at a kneading temperature of 245°C to produce a resin compound pellet, and then the pellet was dried at 130°C for 3 hours. A molded product was molded under the same conditions as those of Example 22 except that the cylinder temperature in the condition at the time of molding was changed to 250°C.

After that, the molded product was irradiated with an electron beam having an irradiation dose of 40 kGy at an accelerating voltage of 4.8 MeV by means of an accelerator manufactured by Sumitomo Heavy Industries, Ltd. to produce a resin product of Example 25.

### Example 26

A resin product of Example 26 was produced according to the same formulation as that of Example 21 and under the same conditions as those of Example 21 except that 8 parts by mass of Compound (IIIa-6) described above (a tetrafunctional compound) and 3 parts by mass of trifunctional isocyanuric acid EO-modified triacrylate (manufactured by TOAGOSEI CO., LTD. : M-315) were used in combination as the flame retardants of Example 21.

### Example 27

A molded product was molded under the same conditions as those of Example 22 except that 2 parts by mass of a heat catalyst (manufactured by NOF CORPORATION: Nofmer BC) were additionally added to the system of Example 22.

After that, the molded product was reacted by heating at 245°C for 8 hours to produce a resin product of Example 27.

### Example 28

A molded product was molded under the same conditions as those of Example 22 except that 7 parts by mass of a UV initiator (Irganox 651 and Irganox 369 manufactured by Ciba Geigy were used in combination at a ratio of 2 : 1) were added to the system of Example 22.

After that, the molded product was irradiated with light with an illuminance of 150 mW/cm² at a wavelength of 365 nm by means of an ultra-high pressure mercury lamp for 2 minutes to produce a resin product of Example 28.

### Example 29

8 parts by mass of Compound (IIIa-9) described above as a reactive flame retardant were added to a system obtained by dispersing 47 parts by mass of silica into 45 parts by mass of a thermosetting epoxy-based mold resin (manufactured by Nagase Chemical Co., Ltd., base compound XNR4012:100, curing agent XNH4012:50, accelerating agent FD400:1) to produce a mold molded product. After that, the molded product was reacted at 100°C for 1 hour to produce a resin product of Example 29 (a sealing compound).

### Example 30

6 parts by mass of Compound (IIIa-12) described above as a reactive flame retardant were added to 94 parts by mass of an epoxy resin for sealing a semiconductor (manufactured by Shin-Etsu Chemical Co., Ltd.: SEMICOAT 115) to produce a mold molded product. After that, the molded product was reacted at 150°C for 4 hours to produce a resin product of Example 30 (a sealing compound).

### Comparative Examples 23 to 32

Resin products of Comparative Examples 23 to 32 were produced in the same manners as in Examples 21 to 30 only except that the reactive flame retardant represented by the general formula (IIIa) was not compounded in Examples 21 to 30.

### Comparative Example 33

A resin product of Comparative Example 33 was produced under the same conditions as those of Example 23 except that only 16 parts by mass of a non-reactive organophosphorus-based flame retardant (manufactured by Sanko Chemical Co., Ltd.: EPOCLEAN) were added as the flame retardant in Example 23.

### [Production of resin products using reactive flame retardants represented by general formulae (IV)]

### Example 31

56. 8 parts bymass of 6, 6 nylon (manufacturedby UBE INDUSTRIES, LTD.: 2123B) as a thermoplastic resin, 25 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers, 1 part by mass of carbon black as a colorant, and 0.2 part by mass of an antioxidant (manufactured by Ciba Geigy: Irganox 1010) were added, and the whole was compounded with 5 parts by mass of calcium carbonate as an inorganic filler and 12 parts by mass of Compound (IVa-7) described above as a reactive flame retardant. The mixture was kneaded by means of a side-flow type biaxial extruder (manufactured by Japan Steel Works, LTD.) at 280°C to produce a resin pellet, and then the pellet was dried at 105°C for 4 hours. After that, the pellet was molded by means of an injection molding machine (manufactured by FUNUC: α50C) under conditions including a resin temperature of 280°C and a die temperature of 80°C.

After that, the molded product was irradiated with 25 kGy of a γ ray from cobalt 60 as a radiation source to produce a resin product of Example 31.

### Example 32

60.8 parts bymass of 6,6 nylon (manufacturedby UBE INDUSTRIES, LTD.: 2020B) as a thermoplastic resin were added with 4 parts by mass of clay of about 0.05 µm in diameter as an inorganic filler, 1 part by mass of carbon black as a colorant, 8 parts by mass of Compound (IVa-1) described above (a multifunctional compound) and 6 parts by mass of Compound (IVa-10) described above (a bifunctional compound) as reactive flame retardants, and 0.2 part by mass of an antioxidant (manufactured by Ciba Geigy: Irganox 1010), and the whole was mixed. Then, 20 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin systemmolten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 32.

### Example 33

The same amounts of an inorganic filler, glass fibers, a colorant, and an antioxidant as those of Example 32 were added to produce a resin product of Example 33 except that 57.8 parts by mass of 6,6 nylon (manufactured by UBE INDUSTRIES, LTD.: 2020B) were used as a thermoplastic resin and 12 parts by mass of Compound (IVa-2) described above (a multifunctional compound) and 6 parts by mass of a non-reactive organophosphorus-based flame retardant (manufactured by Sanko Chemical Co., Ltd.: HCA-HQ) were used as flame retardants.

### Example 34

59.8 parts by mass of 6, 6 nylon (manufactured by UBE INDUSTRIES, LTD.: 2020B) as a thermoplastic resin were added with 4 parts by mass of clay of about 0.05 µm in diameter as an inorganic filler, 1 part by mass of carbon black as a colorant, 8 parts by mass of Compound (IVa-7) described above (a multifunctional compound) as a reactive flame retardant, 2 parts by mass of a multifunctional cyclic compound (manufactured by Nippon Kasei Chemical Co., Ltd.: TAIC), and 0.2 part by mass of an antioxidant (manufactured by Ciba Geigy: Irganox 1010), and the whole was mixed. Then, 25 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin system molten from a side by means of a side-flow type biaxial extruder set at 280°C through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 30 kGy of a γ ray from cobalt 60 as a radiation source to produce a resin product of Example 34.

### Example 35

78 parts by mass of a polybutylene terephthalate resin (manufactured by Toray Industries, Inc.: TORAYCON 1401X06) as a thermoplastic resin, 12 parts by mass of Compound (IVa-6) described above and 5 parts by mass of a non-reactive organophosphorus-based flame retardant (manufactured by Sanko Chemical Co., Ltd.: HCA-HQ) as flame retardants, and 5 parts by mass of antimony oxide were kneaded at a kneading temperature of 245°C to produce a resin compound pellet, and then the pellet was dried at 130°C for 3 hours. A molded product was molded under the same conditions as those of Example 32 except that the cylinder temperature in the condition at the time of molding was changed to 250°C.

After that, the molded product was irradiated with an electron beam having an irradiation dose of 40 kGy at an accelerating voltage of 4.8 MeV by means of an accelerator manufactured by Sumitomo Heavy Industries, Ltd. to produce a resin product of Example 35.

### Example 36

A resin product of Example 36 was produced according to the same formulation as that of Example 31 and under the same conditions as those of Example 31 except that 8 parts by mass of Compound (IVa-1) described above (a tetrafunctional compound) and 3 parts by mass of trifunctional isocyanuric acid EO-modified triacrylate (manufactured by TOAGOSEI CO., LTD. : M-315) were used in combination as the flame retardants of Example 31.

### Example 37

A molded product was molded under the same conditions as those of Example 32 except that 2 parts by mass of a heat catalyst (manufactured by NOF CORPORATION: Nofmer BC) were additionally added to the system of Example 32.

After that, the molded product was reacted by heating at 245°C for 8 hours to produce a resin product of Example 37.

### Example 38

A molded product was molded under the same conditions as those of Example 32 except that 7 parts by mass of a UV initiator (Irganox 651 and Irganox 369 manufactured by Ciba Geigywere used in combination at a ratio of 2 : 1) were added to the system of Example 32.

After that, the molded product was irradiated with light with an illuminance of 150 mW/cm² at a wavelength of 365 nm by means of an ultra-high pressure mercury lamp for 2 minutes to produce a resin product of Example 38.

### Example 39

8 parts by mass of Compound (IVa-5) described above as a reactive flame retardant were added to a system obtained by dispersing 45 parts by mass of silica into 47 parts by mass of a thermosetting epoxy-based mold resin (manufactured by Nagase Chemical Co., Ltd., base compound XNR4012:100, curing agent XNH4012:50, accelerating agent FD400:1) to produce a mold molded product. After that, the molded product was reacted at 100°C for 1 hour to produce a resin product of Example 39 (a sealing compound).

### Example 40

6 parts bymass of Compound (IVa-4) described above as a reactive flame retardant were added to 94 parts by mass of an epoxy resin for sealing a semiconductor (manufactured by Shin-Etsu Chemical Co., Ltd.: SEMICOAT 115) to produce a mold molded product. After that, the molded product was reacted at 150°C for 4 hours to produce a resin product of Example 40 (a sealing compound).

### Comparative Examples 34 to 43

Resin products of Comparative Examples 34 to 43 were produced in the same manners as in Examples 31 to 40 only except that the reactive flame retardant represented by the general formula (IVa) was not compounded in Examples 31 to 40.

### Comparative Example 44

A resin product of Comparative Example 44 was produced under the same conditions as those of Example 33 except that only 16 parts by mass of a non-reactive organophosphorus-based flame retardant (manufactured by Sanko Chemical Co., Ltd.: EPOCLEAN) were added as the flame retardant of Example 33.

### C: Test examples of products made of flame-retarded resin

For each of the resin products of Examples 1 to 40 and Comparative Examples 1 to 44, a test piece (measuring 5 inches long by 1/2 inch wide by 3.2 mm thick) in conformance with UL-94 as a flame retardancy test and a glow-wire test piece (60 mm square, having a thickness of 1.6 mm) in conformance with an IEC60695-2 method (GWFI) were created, and the test pieces were subj ected to a UL 94 test, a glow-wire test (in conformance with IEC), and a solder heat resistance test. In addition, all the resin products were subjected to a bleed out test at 300°C for 3 hours.

In the UL 94 test, a test piece was vertically mounted and in contact with the flame of a Bunsen burner for 10 seconds to record a burning time. After being extinguished, the test piece was in contact with the flame for 10 seconds again to record a burning time. The total of the burning times, a glowing time after the second extinguishment, and the presence or absence of a dropped product for igniting cotton were used for determination.

In addition, the glow-wire test was performed by using a nichrome wire of 4 mm in diameter (composed of 80% of nickel and 20% of chromium) as a glow-wire that is bent to prevent its tip from splitting and a type K (Chromel-Alumel) of 0.5 mm in diameter as a thermo couple for measurement of temperature at a thermocouple pressing load of 1.0 ± 0.2 N and a temperature of 850°C. The measurement, in which a burning time after contact for 30 seconds is 30 seconds or less and in which tissue paper below a sample fails to ignite, was used as determination criteria of combustibility (GWFI).

In the solder heat resistance test, a rate of change in dimensions after immersion in a bath of molten solder at 350°C for 10 seconds was shown.

Tables 1 to 4 collectively show the results.

Table 1 shows test examples of the resin products using the reactive flame retardants represented by the general formulae (I)

### (Examples 1 to 10 and Comparative Examples 1 to 11).

In addition, Table 2 shows test examples of the resin products using the reactive flame retardants represented by the general formulae (II) (Examples 11 to 20 and Comparative Examples 12 to 22).

In addition, Table 3 shows test examples of the resin products using the reactive flame retardants represented by the general formulae (III) (Examples 21 to 30 and Comparative Examples 23 to 33).

In addition, Table 4 shows test examples of the resin products using the reactive flame retardants represented by the general formulae (IV) (Examples 31 to 40 and Comparative Examples 34 to 44).

**Table 1**

| | Flame retardancy (UL-94) | Kindler to reach clamp | Ignition of absorbent cotton due to dropped product | Glow-wire test | Bleed out after 3 hours at 300°C | Rate of change in dimensions in solder heat resistance test (%) |
|---|---|---|---|---|---|---|
| Example 1 | V-0 | Absent | Absent | Passed | Absent | 5 |
| Example 2 | V-0 | Absent | Absent | Passed | Absent | 4 |
| Example 3 | V-0 | Absent | Absent | Passed | Absent | 8 |
| Example 4 | V-0 | Absent | Absent | Passed | Absent | 3 |
| Example 5 | V-0 | Absent | Absent | Passed | Absent | 10 |
| Example 6 | V-0 | Absent | Absent | Passed | Absent | 7 |
| Example 7 | V-0 | Absent | Absent | Passed | Absent | 13 |
| Example 8 | V-0 | Absent | Absent | Passed | Absent | 8 |
| Example 9 | V-0 | Absent | Absent | Passed | Absent | 5 |
| Example 10 | V-0 | Absent | Absent | Passed | Absent | 19 |
| Comparative example 1 | HB | Present | Present | Failed | Absent | Deformed* |
| Comparative example 2 | HB | Present | Present | Failed | Absent | Deformed* |
| Comparative example 3 | HB | Present | Present | Failed | Absent | Deformed* |
| Comparative example 4 | HB | Present | Present | Failed | Absent | Deformed* |
| Comparative example 5 | HB | Present | Present | Failed | Absent | 35 |
| Comparative example 6 | HB | Present | Present | Failed | Absent | Deformed* |
| Comparative example 7 | HB | Present | Present | Failed | Absent | Deformed* |
| Comparative example 8 | HB | Present | Present | Failed | Absent | Deformed* |
| Comparative example 9 | HB | Present | Present | Failed | Absent | Deformed* |
| Comparative example 10 | HB | Present | Present | Failed | Absent | Deformed* |
| Comparative example 11 | V-2 | Absent | Present | Passed | Present | Deformed* |

| | | | | | | |
|---|---|---|---|---|---|---|
| Deformed*: Deformed immediately after immersion | | | | | | |

**Table 2**

| | Flame retardancy (UL-94) | Kindler to reach clamp | Ignition of absorbent cotton due to dropped product | Glow-w ire test | Bleed out after 3 hours at 300°C | Rate of change in dimensions in solder heat resistance test (%) |
|---|---|---|---|---|---|---|
| Example 11 | V-0 | Absent | Absent | Passed | Absent | 6 |
| Example 12 | V-0 | Absent | Absent | Passed | Absent | 4 |
| Example 13 | V-0 | Absent | Absent | Passed | Absent | 9 |
| Example 14 | V-0 | Absent | Absent | Passed | Absent | 3 |
| Example 15 | V-0 | Absent | Absent | Passed | Absent | 11 |
| Example 16 | V-0 | Absent | Absent | Passed | Absent | 12 |
| Example 17 | V-0 | Absent | Absent | Passed | Absent | 16 |
| Example 18 | V-0 | Absent | Absent | Passed | Absent | 18 |
| Example 19 | V-0 | Absent | Absent | Passed | Absent | 4 |
| Example 20 | V-0 | Absent | Absent | Passed | Absent | 19 |
| Comparative example 12 | HB | Present | Present | Failed | Absent | Deformed* |
| Comparative example 13 | HB | Present | Present | Failed | Absent | Deformed* |
| Comparative example 14 | HB | Present | Present | Failed | Absent | Deformed* |
| Comparative example 15 | HB | Present | Present | Failed | Absent | Deformed* |
| Comparative example 16 | HB | Present | Present | Failed | Absent | 35 |
| Comparative example 17 | HB | Present | Present | Failed | Absent | Deformed* |
| Comparative example 18 | HB | Present | Present | Failed | Absent | Deformed* |
| Comparative example 19 | HB | Present | Present | Failed | Absent | Deformed* |
| Comparative example 20 | HB | Present | Present | Failed | Absent | Deformed* |
| Comparative example 21 | HB | Present | Present | Failed | Absent | Deformed* |
| Comparative example 22 | V-2 | Absent | Present | Passed | Present | Deformed* |

| | | | | | | |
|---|---|---|---|---|---|---|
| Deformed*: Deformed immediately after immersion | | | | | | |

**Table 3**

| | Flame retardanc y (UL-94) | Kindler to reach clamp | Ignition of absorbent cotton due to dropped product | Glow-wi re test | Bleed out after 3 hours at 300°C | Rate of change in dimensions in solder heat resistance test (%) |
|---|---|---|---|---|---|---|
| Example 21 | V-0 | Absent | Absent | Passed | Absent | 6 |
| Example 22 | V-0 | Absent | Absent | Passed | Absent | 4 |
| Example 23 | V-0 | Absent | Absent | Passed | Absent | 9 |
| Example 24 | V-0 | Absent | Absent | Passed | Absent | 3 |
| Example 25 | V-0 | Absent | Absent | Passed | Absent | 11 |
| Example 26 | V-0 | Absent | Absent | Passed | Absent | 12 |
| Example 27 | V-0 | Absent | Absent | Passed | Absent | 16 |
| Example 28 | V-0 | Absent | Absent | Passed | Absent | 18 |
| Example 29 | V-0 | Absent | Absent | Passed | Absent | 4 |
| Example 30 | V-0 | Absent | Absent | Passed | Absent | 19 |
| Comparative example 23 | HB | Present | Present | Failed | Absent | Deformed* |
| Comparative example 24 | HB | Present | Present | Failed | Absent | Deformed* |
| Comparative example 25 | HB | Present | Present | Failed | Absent | Deformed* |
| Comparative example 26 | HB | Present | Present | Failed | Absent | Deformed* |
| Comparative example 27 | HB | Present | Present | Failed | Absent | 35 |
| Comparative example 28 | HB | Present | Present | Failed | Absent | Deformed* |
| Comparative example 29 | HB | Present | Present | Failed | Absent | Deformed* |
| Comparative example 30 | HB | Present | Present | Failed | Absent | Deformed* |
| Comparative example 31 | HB | Present | Present | Failed | Absent | Deformed* |
| Comparative example 32 | HB | Present | Present | Failed | Absent | Deformed* |
| Comparative example 33 | V-2 | Absent | Present | Passed | Present | Deformed* |

| | | | | | | |
|---|---|---|---|---|---|---|
| Deformed*: Deformed immediately after immersion | | | | | | |

**Table 4**

| | Flame retardancy (UL-94) | Kindler to reach clamp | Ignition of absorbent cotton due to dropped product | Glow-w ire test | Bleed out after 3 hours at 300°C | Rate of change in dimensions in solder heat resistance test (%) |
|---|---|---|---|---|---|---|
| Example 31 | V-0 | Absent | Absent | Passed | Absent | 6 |
| Example 32 | V-0 | Absent | Absent | Passed | Absent | 6 |
| Example 33 | V-0 | Absent | Absent | Passed | Absent | 8 |
| Example 34 | V-0 | Absent | Absent | Passed | Absent | 2 |
| Example 35 | V-0 | Absent | Absent | Passed | Absent | 11 |
| Example 36 | V-0 | Absent | Absent | Passed | Absent | 11 |
| Example 37 | V-0 | Absent | Absent | Passed | Absent | 15 |
| Example 38 | V-0 | Absent | Absent | Passed | Absent | 18 |
| Example 39 | V-0 | Absent | Absent | Passed | Absent | 5 |
| Example 40 | V-0 | Absent | Absent | Passed | Absent | 19 |
| Comparative example 34 | HB | Present | Present | Failed | Absent | Deformed* |
| Comparative example 35 | HB | Present | Present | Failed | Absent | Deformed* |
| Comparative example 36 | HB | Present | Present | Failed | Absent | Deformed* |
| Comparative example 37 | HB | Present | Present | Failed | Absent | Deformed* |
| Comparative example 38 | HB | Present | Present | Failed | Absent | 35 |
| Comparative example 39 | HB | Present | Present | Failed | Absent | Deformed* |
| Comparative example 40 | HB | Present | Present | Failed | Absent | Deformed* |
| Comparative example 41 | HB | Present | Present | Failed | Absent | Deformed* |
| Comparative example 42 | HB | Present | Present | Failed | Absent | Deformed* |
| Comparative example 43 | HB | Present | Present | Failed | Absent | Deformed* |
| Comparative example 44 | V-2 | Absent | Present | Passed | Present | Deformed* |

| | | | | | | |
|---|---|---|---|---|---|---|
| Deformed*: Deformed immediately after immersion | | | | | | |

As can be seen from the results shown in Tables 1 to 4, each of all the resin products of Examples had flame retardancy of V-0 (that is, each resin product was excellent in flame retardancy) and passed the glow-wire test. Furthermore, in each of all the resin products of Examples, a rate of change in dimensions after the solder heat resistance test was as small as 19% or less. In addition, a flame retardant was not observed to bleed out even after 3 hours at 300°C.

On the other hand, each of all the resin products of Comparative Examples 1 to 10, Comparative Examples 12 to 21, Comparative Examples 23 to 32, and Comparative Examples 34 to 43 not containing any reactive flame retardant of the present invention had flame retardancy of HB (that is, insufficient flame retardancy), failed the glow-wire test, and inferior in rate of change in dimensions after the solder heat resistance test to those of Examples.

In addition, each of all the resin products of Comparative Examples 11, 22, 33, and 44 each using only a non-reactive organophosphorus-based flame retardant as a flame retardant had flame retardancy of V-2 (that is, insufficient flame retardancy), and was observed to bleed out after 3 hours at 300°C.

### INDUSTRIAL APPLICABILITY

The present invention can be suitably used as a non-halogen-based flame retardant and a non-halogen-based product made of flame-retarded resin each containing no halogen, and is capable of finding use in applications including: resin molded products such as an electrical component and an electronic component; sealing compounds for a semiconductor and the like; and coating films.

## Claims

1. A reactive flame retardant that has reactivity with a resin and binds with the resin by virtue of the reactivity to impart flame retardancy, the reactive flame retardant being **characterized by** comprising an organophosphorus compound represented by the following general formula (Ia) or (Ib) : 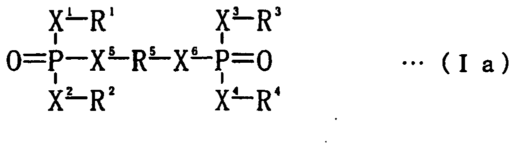 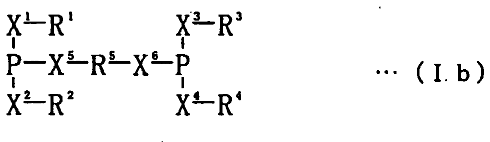 where, in the general formula (Ia) or (Ib) : R¹ to R⁴ each represent CH₂=CY¹-Y²- or a monofunctional aromatic hydrocarbon-based group which may contain a hetero atom; R⁵ represents a bifunctional aromatic hydrocarbon-based group which may contain a hetero atom; X¹ to X⁴ each represent a group selected from -O-, -NH-, and -(CH₂=CY¹-Y²)N- and at least one of X¹ to X⁴ contains -NH- or -(CH₂=CY¹-Y²)N-; X⁵ and X⁶ each represent -NH- or -(CH₂=CY¹-Y²)N-; at least one of R¹ to R⁴ and X¹ to X⁶ contains CH₂=CY¹-Y²-; Y¹ represents hydrogen or a methyl group; Y² represents an alkylene group having 1 to 5 carbon atom(s) or --COO-Y³-; and Y³ represents an alkylene group having 2 to 5 carbon atoms.

2. A reactive flame retardant that has reactivity with a resin and binds with the resin by virtue of the reactivity to impart flame retardancy, the reactive flame retardant being **characterized by** comprising an organophosphorus compound represented by the following general formula (IIa) or (IIb): 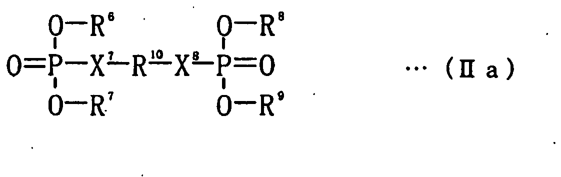 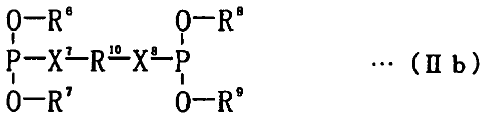 where, in the general formula (IIa) or (IIb) : R⁶ to R⁹ each represent CH₂=CY⁴-Y⁵- or a monofunctional aromatic hydrocarbon-based group which may contain a heteroatom; R¹⁰ represents a bifunctional aromatic hydrocarbon-based group which may contain a hetero atom; X⁷ and X⁸ each represent -NH- or -(CH₂=CY⁴-Y⁵)N-; at least one of R⁶ to R⁹ and X⁷ and X⁸ contains CH₂=CY⁴-Y⁵-; Y⁴ represents hydrogen or a methyl group; Y⁵ represents an alkylene group having 1 to 5 carbon atom(s) or -COO-Y⁶-; and Y⁶ represents an alkylene group having 2 to 5 carbon atoms.

3. A reactive flame retardant that has reactivity with a resin and binds with the resin by virtue of the reactivity to impart flame retardancy, the reactive flame retardant being **characterized by** comprising an organophosphorus compound represented by the following general formula (IIIa) or (IIIb): 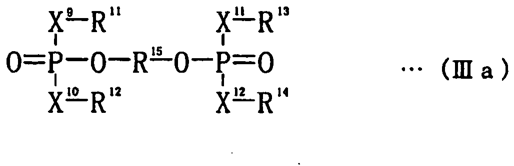 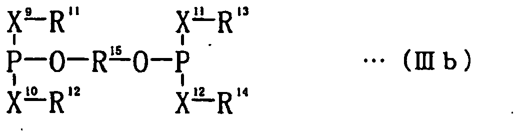 where, in the general formula (IIIa) or (IIIb): R¹¹ to R¹⁴ each represent CH₂=CY⁷-Y⁸- or a monofunctional aromatic hydrocarbon-based group which may contain a heteroatom; R¹⁵ represents bifunctional aromatic hydrocarbon-based group which may contain a hetero atom; X⁹ to X¹² each represent a group selected from -O-, -NH-, and -(CH₂=CY⁷-Y⁸)N- and at least one of X⁹ to X¹² contains -NH- or - (CH₂=CY⁷-Y⁸)N-; at least one of R¹¹ to R¹⁴ and X⁹ to X¹² contains CH₂=CY⁷-Y⁸-; Y⁷ represents hydrogen or a methyl group; Y⁸ represents an alkylene group having 1 to 5 carbon atom(s) or -COO-Y⁹-; and Y⁹ represents an alkylene group having 2 to 5 carbon atoms.

4. A reactive flame retardant that has reactivity with a resin and binds with the resin by virtue of the reactivity to impart flame retardancy, the reactive flame retardant being **characterized by** comprising an organophosphorus compound represented by the following general formula (IVa) or (IVb): 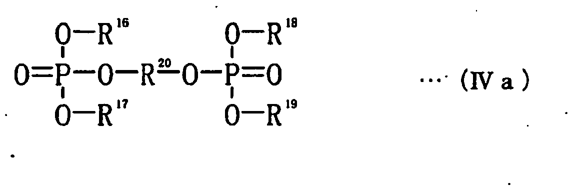 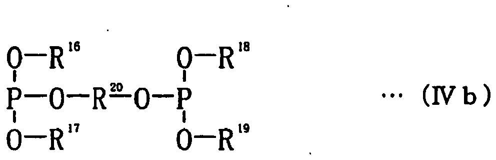 where, in the general formula (IVa) or (IVb): R¹⁶ to R¹⁹ each represent CH₂=CY¹⁰-Y¹¹- or a monofunctional aromatic hydrocarbon-based group which may contain a hetero atom; at least one of R¹⁶ to R¹⁹ contains CH₂=CY¹⁰-Y¹¹-; R²⁰ represents a bifunctional aromatic hydrocarbon-based group which may contain a hetero atom; Y¹⁰ represents hydrogen or a methyl group; Y¹¹ represents an alkylene group having 1 to 5 carbon atom(s) or -COO-Y¹²-; and Y¹² represents an alkylene group having 2 to 5 carbon atoms.

5. A product made of flame-retarded resin obtained by solidifying a resin composition which contains the reactive flame retardant according to any one of claims 1 to 4 and a resin and then reacting the resin with the reactive flame retardant by heating or irradiation with a radiation, the product made of flame-retarded resin being **characterized by** comprising 1 to 20 mass% of the reactive flame retardant with respect to an entirety of the product made of flame-retarded resin.

6. A product made of flame-retarded resin according to claim 5, wherein the resin composition contains two or more kinds of the reactive flame retardants at least one of which is multifunctional.

7. A product made of flame-retarded resin according to claim 5 or 6, wherein:
the resin composition further contains a flame retardant other than the reactive flame retardant; and
the flame retardant other than the reactive flame retardant comprises a cyclic nitrogen-containing compound having at least one unsaturated group at an end thereof.

8. A product made of flame-retarded resin according to any one of claims 5 to 7, wherein:
the resin composition further contains a flame retardant other than the reactive flame retardant; and
the flame retardant other than the reactive flame retardant comprises an additive-type flame retardant having no reactivity.

9. A product made of flame-retarded resin according to any one of claims 5 to 8, wherein:
the resin composition further contains a crosslinking agent having no flame retardancy but having reactivity with the resin; and
the crosslinking agent comprises a multifunctional monomer or oligomer having an unsaturated group at an end of main skeleton thereof.

10. A product made of flame-retarded resin according to any one of claims 5 to 9, which comprises 1 to 35 mass% of an inorganic filler with respect to the entirety of the product made of flame-retarded resin.

11. A product made of flame-retarded resin according to claim 10, which comprises, as the inorganic filler, 1 to 10 mass% of a laminar clay composed of laminating silicate layers with respect to the entirety of the product made of flame-retarded resin.

12. A product made of flame-retarded resin according to any one of claims 5 to 11, which comprises 5 to 40 mass% of reinforced fibers with respect to the entirety of the product made of flame-retarded resin.

13. A product made of flame-retarded resin according to any one of claims 5 to 12, which is obtained by a reaction between the resin and the reactive flame retardant through irradiation with an electron beam or γ ray at a dose of 10 kGy or more.

14. A product made of flame-retarded resin according to any one of claims 5 to 12, which is obtained by a reaction between the resin and the reactive flame retardant at a temperature higher than a temperature at which the resin composition is molded by 5°C or higher.

15. A product made of flame-retarded resin according to any one of claims 5 to 14, which is one selected from a molded product, a coating film, and a sealing compound.

16. A product made of flame-retarded resin according to any one of claims 5 to 15, which is used as an electrical component or an electronic component.

## Patentansprüche

1. Reaktives Flammschutzmittel, das dazu befähigt ist, mit einem Harz zu reagieren, und aufgrund dieser Reaktivität eine Bindung mit dem Harz eingeht, um diesem Flammschutzeigenschaften zu verleihen, wobei das reaktive Flammschutzmittel **dadurch gekennzeichnet ist, dass** es eine phosphororganische Verbindung umfasst, die der folgenden allgemeinen Formel (Ia) oder (Ib) entspricht: 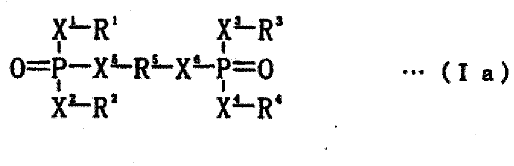 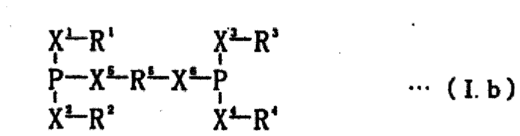 wobei in der allgemeinen Formel (Ia) oder (Ib): R¹ bis R⁴ jeweils CH₂=CY¹-Y²- oder eine monofunktionelle aromatische kohlenwasserstoffbasierte Gruppe darstellen, welche ein Heteroatom enthalten kann; R⁵ eine bifunktionelle aromatische kohlenwasserstoffbasierte Gruppe darstellt, die ein Heteroatom enthalten kann; X¹ bis X⁴ jeweils eine Gruppe darstellen, die aus -O-, -NH- und -(CH₂=CY¹-Y²)N- ausgewählt ist, und von X¹ bis X⁴ mindestens eines -NH- oder -(CH₂=CY¹-Y²)N- enthält; X⁵ und X⁶ jeweils -NH- oder -(CH₂=CY¹-Y²)N- darstellen; von R¹ bis R⁴ und X¹ bis X⁶ mindestens eines CH₂=CY¹-Y²-enthält; Y¹ für Wasserstoff oder eine Methylgruppe steht; Y² eine Alkylengruppe mit 1 bis 5 Kohlenstoffatomen oder -COO-Y³- darstellt; und Y³ eine Alkylengruppe mit 2 bis 5 Kohlenstoffatomen darstellt.

2. Reaktives Flammschutzmittel, das dazu befähigt ist, mit einem Harz zu reagieren, und aufgrund dieser Reaktivität eine Bindung mit dem Harz eingeht, um diesem Flammschutzeigenschaften zu verleihen, wobei das reaktive Flammschutzmittel **dadurch gekennzeichnet ist, dass** es eine phosphororganische Verbindung umfasst, die der folgenden allgemeinen Formel (IIa) oder (IIb) entspricht: 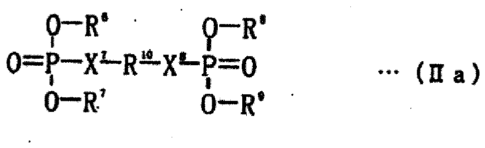 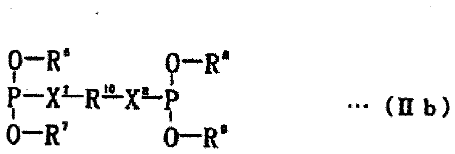 wobei in der allgemeinen Formel (IIa) oder (IIb): R⁶ bis R⁹ jeweils CH₂=CY⁴-Y⁵- oder eine monofunktionelle aromatische kohlenwasserstoffbasierte Gruppe darstellen, welche ein Heteroatom enthalten kann; R¹⁰ eine bifunktionelle aromatische kohlenwasserstoffbasierte Gruppe darstellt, die ein Heteroatom enthalten kann; X⁷ und X⁸ jeweils -NH- oder -(CH₂=CY⁴-Y⁵)N- darstellen; von R⁶ bis R⁹ und X⁷ und X⁸ mindestens eines CH₂=CY⁴-Y⁵- enthält; Y⁴ für Wasserstoff oder eine Methylgruppe steht; Y⁵ eine Alkylengruppe mit 1 bis 5 Kohlenstoffatomen oder -COO-Y⁶- darstellt; und Y⁶ eine Alkylengruppe mit 2 bis 5 Kohlenstoffatomen darstellt.

3. Reaktives Flammschutzmittel, das dazu befähigt ist, mit einem Harz zu reagieren, und aufgrund dieser Reaktivität eine Bindung mit dem Harz eingeht, um diesem Flammschutzeigenschaften zu verleihen, wobei das reaktive Flammschutzmittel **dadurch gekennzeichnet ist, dass** es eine phosphororganische Verbindung umfasst, die der folgenden allgemeinen Formel (IIIa) oder (IIIb) entspricht: 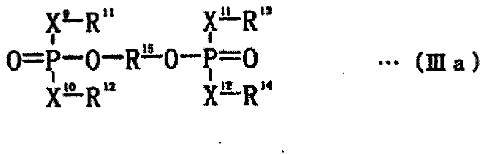 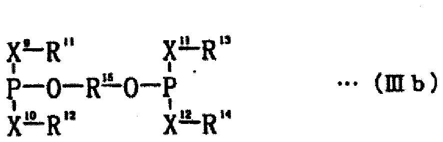 wobei in der allgemeinen Formel (IIIa) oder (IIIb): R¹¹ bis R¹⁴ jeweils CH₂=CY⁷-Y⁸- oder eine monofunktionelle aromatische kohlenwasserstoffbasierte Gruppe darstellen, welche ein Heteroatom enthalten kann; R¹⁵ eine bifunktionelle aromatische kohlenwasserstoffbasierte Gruppe darstellt, die ein Heteroatom enthalten kann; X⁹ bis X¹² jeweils eine Gruppe darstellen, die aus -O-, -NH- und -(CH₂=CY⁷-Y⁸)N- ausgewählt ist, und von X⁹ bis X¹² mindestens eines -NH- oder -(CH₂=CY⁷-Y⁸)N- enthält; von R¹¹ bis R¹⁴ und X⁹ bis X¹² mindestens eines CH₂=CY⁷-Y⁸- enthält; Y⁷ für Wasserstoff oder eine Methylgruppe steht; Y⁸ eine Alkylengruppe mit 1 bis 5 Kohlenstoffatomen oder -COO-Y⁹- darstellt; und Y⁹ eine Alkylengruppe mit 2 bis 5 Kohlenstoffatomen darstellt.

4. Reaktives Flammschutzmittel, das dazu befähigt ist, mit einem Harz zu reagieren, und aufgrund dieser Reaktivität eine Bindung mit dem Harz eingeht, um diesem Flammschutzeigenschaften zu verleihen, wobei das reaktive Flammschutzmittel **dadurch gekennzeichnet ist, dass** es eine phosphororganische Verbindung umfasst, die der folgenden allgemeinen Formel (IVa) oder (IVb) entspricht: 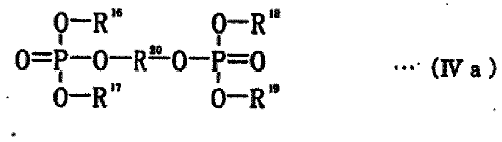 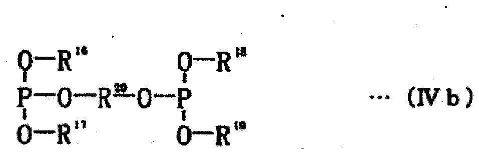 wobei in der allgemeinen Formel (IVa) oder (IVb): R¹⁶ bis R¹⁹ jeweils CH₂=CY¹⁰-Y¹¹- oder eine monofunktionelle aromatische kohlenwasserstoffbasierte Gruppe darstellen, welche ein Heteroatom enthalten kann; von R¹⁶ bis R¹⁹ mindestens eines CH₂=CY¹⁰-Y¹¹- enthält; R²⁰ eine bifunktionelle aromatische kohlenwasserstoffbasierte Gruppe darstellt, die ein Heteroatom enthalten kann; Y¹⁰ für Wasserstoff oder eine Methylgruppe steht; Y¹¹ eine Alkylengruppe mit 1 bis 5 Kohlenstoffatomen oder -COO-Y¹²- darstellt; und Y¹² eine Alkylengruppe mit 2 bis 5 Kohlenstoffatomen darstellt.

5. Produkt, welches aus flammgeschütztem Harz hergestellt ist, wobei durch Verfestigung einer Harzzusammensetzung erhalten wurde, die das reaktive Flammschutzmittel nach einem beliebigen der Ansprüche 1 bis 4 sowie ein Harz enthält, woraufhin das Harz mit dem reaktiven Flammschutzmittel durch Erwärmen oder Bestrahlen mit einer Strahlung zur Reaktion gebracht wurde, wobei das Produkt, welches aus flammgeschütztem Harz hergestellt ist, **dadurch gekennzeichnet ist, dass** es 1 bis 20 Massen-% von dem reaktiven Flammschutzmittel umfasst, unter Bezugnahme auf die Gesamtheit des Produktes, welches aus flammgeschütztem Harz hergestellt ist.

6. Produkt, welches aus flammgeschütztem Harz nach Anspruch 5 hergestellt ist, wobei die Harzzusammensetzung zwei oder mehr Arten von reaktiven Flammschutzmitteln enthält, von denen mindestens eines multifunktionell ist.

7. Produkt, welches aus flammgeschütztem Harz hergestellt ist, nach Anspruch 5 oder 6, wobei:
die Harzzusammensetzung weiterhin ein Flammschutzmittel enthält, welches sich von dem reaktiven Flammschutzmittel unterscheidet; und
das Flammschutzmittel, welches sich von dem reaktiven Flammschutzmittel unterscheidet, eine zyklische stickstoffhaltige Verbindung umfasst, die an ihrem Ende mindestens eine ungesättigte Gruppe aufweist.

8. Produkt, welches aus flammgeschütztem Harz hergestellt ist, nach einem beliebigen der Ansprüche 5 bis 7, wobei:
die Harzzusammensetzung weiterhin ein Flammschutzmittel enthält, welches sich von dem reaktiven Flammschutzmittel unterscheidet; und
das Flammschutzmittel, welches sich von dem reaktiven Flammschutzmittel unterscheidet, ein additivartiges Flammschutzmittel umfasst, das keine Reaktivität aufweist.

9. Produkt, welches aus flammgeschütztem Harz hergestellt ist, nach einem beliebigen der Ansprüche 5 bis 8, wobei:
die Harzzusammensetzung weiterhin ein Quervernetzungsmittel enthält, das keine Flammschutzwirkung hat, aber dazu befähigt ist, mit dem Harz zu reagieren; und
das Quervernetzungsmittel ein multifunktionelles Monomer oder Oligomer umfasst, welches an einem Ende seines Hauptgerüstes eine ungesättigte Gruppe aufweist.

10. Produkt, welches aus flammgeschütztem Harz hergestellt ist, nach einem beliebigen der Ansprüche 5 bis 9, wobei es 1 bis 35 Massen-% eines anorganischen Füllstoffs umfasst, unter Bezugnahme auf die Gesamtheit des Produktes, welches aus flammgeschütztem Harz hergestellt ist.

11. Produkt, welches aus flammgeschütztem Harz hergestellt ist, nach Anspruch 10, wobei es als anorganischen Füllstoff 1 bis 10 Massen-% eines schichtartigen Tons umfasst, welcher sich aus verbindenden Silikatschichten zusammensetzt, unter Bezugnahme auf die Gesamtheit des Produktes, welches aus flammgeschütztem Harz hergestellt ist.

12. Produkt, welches aus flammgeschütztem Harz hergestellt ist, nach einem beliebigen der Ansprüche 5 bis 11, wobei es 5 bis 40 Massen-% an verstärkten Fasern umfasst, unter Bezugnahme auf die Gesamtheit des Produktes, welches aus flammgeschütztem Harz hergestellt ist.

13. Produkt, welches aus flammgeschütztem Harz hergestellt ist, nach einem beliebigen der Ansprüche 5 bis 12, wobei es erhalten wird, indem das Harz und das reaktive Flammschutzmittel durch eine Bestrahlung mit einem Elektronenstrahl oder γ-Strahl mit einer Dosis von mindestens 10 kGy zur Reaktion gebracht werden.

14. Produkt, welches aus flammgeschütztem Harz hergestellt ist, nach einem beliebigen der Ansprüche 5 bis 12, wobei es erhalten wird, indem das Harz und das reaktive Flammschutzmittel bei einer Temperatur, die um mindestens 5 °C über der Temperatur liegt, bei welcher die Harzzusammensetzung geformt wird, zur Reaktion gebracht werden.

15. Produkt, welches aus flammgeschütztem Harz hergestellt ist, nach einem beliebigen der Ansprüche 5 bis 14, wobei es aus einem geformten Produkt, einer Beschichtungsfolie und einer Versiegelungsverbindung ausgewählt ist.

16. Produkt, welches aus flammgeschütztem Harz hergestellt ist, nach einem beliebigen der Ansprüche 5 bis 15, wobei es als elektrisches Bauteil oder als elektronisches Bauteil verwendet wird.

## Revendications

1. Ignifugeant réactif qui présente une réactivité avec une résine et se lie à la résine grâce à la réactivité pour transmettre une ininflammabilité, l'ignifugeant réactif étant **caractérisé en ce qu'**il comprend un composé organophosphoré représenté par la formule générale (la) ou (Ib) suivante : 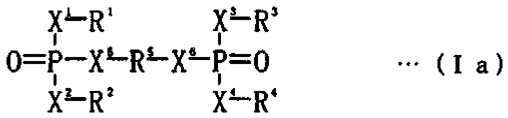 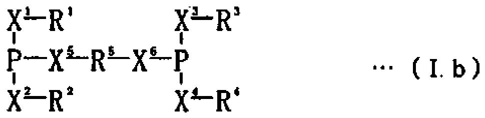 où, dans la formule générale (la) ou (Ib) : R¹ à R⁴ représentent chacun CH₂=CY¹-Y²- ou un groupe à base d'hydrocarbure aromatique monofonctionnel qui peut contenir un hétéroatome ; R⁵ représente un groupe à base d'hydrocarbure aromatique bifonctionnel qui peut contenir un hétéroatome ; X¹ à X⁴ représentent chacun un groupe choisi parmi -O-, -NH- et -(CH₂=CY¹-Y²)N- et au moins l'un de X¹ à X⁴ contient -NH- ou -(CH₂=CY¹-Y²)N- ; X⁵ et X⁶ représentent chacun -NH- ou -(CH₂=CY¹-Y²)N- ; au moins l'un de R¹ à R⁴ et X¹ à X⁶ contient CH₂=CY¹-Y²- ; Y¹ représente un hydrogène ou un groupe méthyle ; Y² représente un groupe alkylène ayant 1 à 5 atomes de carbone ou -COO-Y³- ; et Y³ représente un groupe alkylène ayant 2 à 5 atomes de carbone.

2. Ignifugeant réactif qui présente une réactivité avec une résine et se lie à la résine grâce à la réactivité pour transmettre une ininflammabilité, l'ignifugeant réactif étant **caractérisé en ce qu'**il comprend un composé organophosphoré représenté par la formule générale (IIa) ou (IIb) suivante : 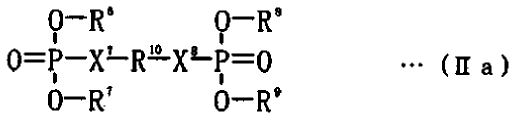 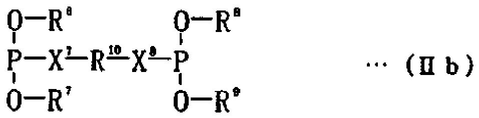 où, dans la formule générale (IIa) ou (IIb), R⁶ à R⁹ représentent chacun CH₂=CY⁴-Y⁵- ou un groupe à base d'hydrocarbure aromatique monofonctionnel qui peut contenir un hétéroatome ; R¹⁰ représente un groupe à base d'hydrocarbure aromatique bifonctionnel qui peut contenir un hétéroatome ; X⁷ et X⁸ représentent chacun -NH- ou -(CH₂=CY⁴-Y⁵)N- ; au moins l'un de R⁶ à R⁹ et X⁷ et X⁸ contient CH₂=CY⁴-Y⁵- ; Y⁴ représente un hydrogène ou un groupe méthyle ; Y⁵ représente un groupe alkylène ayant 1 à 5 atomes de carbone ou -COO-Y⁶- ; et Y⁶ représente un groupe alkylène ayant 2 à 5 atomes de carbone.

3. Ignifugeant réactif qui présente une réactivité avec une résine et se lie à la résine grâce à la réactivité pour transmettre une ininflammabilité, l'ignifugeant réactif étant **caractérisé en ce qu'**il comprend un composé organophosphoré représenté par la formule générale (IIIa) ou (IIIb) suivante : 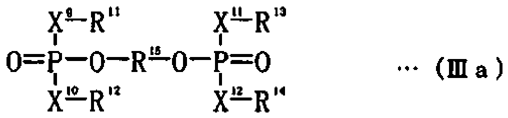 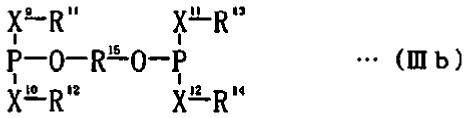 où, dans la formule générale (IIIa) ou (IIIb), R¹¹ à R¹⁴ représentent chacun CH₂=CY⁷-Y⁸- ou un groupe à base d'hydrocarbure aromatique monofonctionnel qui peut contenir un hétéroatome ; R¹⁵ représente un groupe à base d'hydrocarbure aromatique bifonctionnel qui peut contenir un hétéroatome ; X⁹ à X¹² représentent chacun un groupe choisi parmi -O-, -NH- et -(CH₂=CY⁷-Y⁸)N- et au moins l'un de X⁹ à X¹² contient -NH- ou -(CH₂=CY⁷-Y⁸)N-; au moins l'un de R¹¹ à R¹⁴ et X⁹ à X¹² contient CH₂=CY⁷-Y⁸- ; Y⁷ représente un hydrogène ou un groupe méthyle ; Y⁸ représente un groupe alkylène ayant 1 à 5 atomes de carbone ou -COO-Y⁹- ; et Y⁹ représente un groupe alkylène ayant 2 à 5 atomes de carbone.

4. Ignifugeant réactif qui présente une réactivité avec une résine et se lie à la résine grâce à la réactivité pour transmettre une ininflammabilité, l'ignifugeant réactif étant **caractérisé en ce qu'**il comprend un composé organophosphoré représenté par la formule générale (IVa) ou (IVb) suivante : 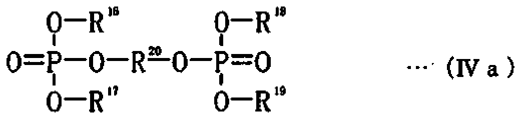 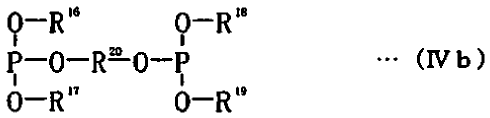 où, dans la formule générale (IVa) ou (IVb), R¹⁶ à R¹⁹ représentent chacun CH₂=CY¹⁰-Y¹¹- ou un groupe à base d'hydrocarbure aromatique monofonctionnel qui peut contenir un hétéroatome ; au moins l'un de R¹⁶ à R¹⁹ contient CH₂=CY¹⁰-Y¹¹- ; R²⁰ représente un groupe à base d'hydrocarbure aromatique bifonctionnel qui peut contenir un hétéroatome ; Y¹⁰ représente un hydrogène ou un groupe méthyle ; Y¹¹ représente un groupe alkylène ayant 1 à 5 atomes de carbone ou -COO-Y¹²- ; et Y¹² représente un groupe alkylène ayant 2 à 5 atomes de carbone.

5. Produit constitué de résine ignifugée obtenu en solidifiant une composition de résine qui contient l'ignifugeant réactif selon l'une quelconque des revendications 1 à 4 et une résine puis en faisant réagir la résine avec l'ignifugeant réactif par chauffage ou irradiation avec un rayonnement, le produit constitué de résine ignifugée étant **caractérisé en ce qu'**il comprend 1 à 20 % en masse de l'ignifugeant réactif par rapport à une totalité du produit constitué de résine ignifugée.

6. Produit constitué de résine ignifugée selon la revendication 5, dans lequel la composition de résine contient deux types de l'ignifugeant réactif ou plus, dont au moins un est multifonctionnel.

7. Produit constitué de résine ignifugée selon la revendication 5 ou 6, dans lequel :
la composition de résine contient en outre un ignifugeant autre que l'ignifugeant réactif ; et
l'ignifugeant autre que l'ignifugeant réactif comprend un composé cyclique contenant de l'azote ayant au moins un groupe insaturé à une de ses extrémités.

8. Produit constitué de résine ignifugée selon l'une quelconque des revendications 5 à 7, dans lequel :
la composition de résine contient en outre un ignifugeant autre que l'ignifugeant réactif ; et
l'ignifugeant autre que l'ignifugeant réactif comprend un ignifugeant de type additif ne présentant aucune réactivité.

9. Produit constitué de résine ignifugée selon l'une quelconque des revendications 5 à 8, dans lequel :
la composition de résine contient en outre un agent de réticulation ne présentant aucune ininflammabilité mais présentant une réactivité avec la résine ; et
l'agent de réticulation comprend un monomère ou oligomère multifonctionnel ayant un groupe insaturé à une extrémité de son squelette principal.

10. Produit constitué de résine ignifugée selon l'une quelconque des revendications 5 à 9, qui comprend 1 à 35 % en masse d'une charge inorganique par rapport à la totalité du produit constitué de résine ignifugée.

11. Produit constitué de résine ignifugée selon la revendication 10, qui comprend, en tant que charge inorganique, 1 à 10 % en masse d'une argile laminaire composée de couches de silicate de stratification par rapport à la totalité du produit constitué de résine ignifugée.

12. Produit constitué de résine ignifugée selon l'une quelconque des revendications 5 à 11, qui comprend 5 à 40 % en masse de fibres renforcées par rapport à la totalité du produit constitué de résine ignifugée.

13. Produit constitué de résine ignifugée selon l'une quelconque des revendications 5 à 12, qui est obtenu par une réaction entre la résine et l'ignifugeant réactif par irradiation avec un faisceau d'électrons ou un rayon γ à une dose de 10 kGy ou plus.

14. Produit constitué de résine ignifugée selon l'une quelconque des revendications 5 à 12, qui est obtenu par une réaction entre la résine et l'ignifugeant réactif à une température supérieure à une température à laquelle la composition de résine est moulée de 5 °C ou plus.

15. Produit constitué de résine ignifugée selon l'une quelconque des revendications 5 à 14, qui est choisi parmi un produit moulé, un film de revêtement et un composé d'étanchéité.

16. Produit constitué de résine ignifugée selon l'une quelconque des revendications 5 à 15, qui est utilisé comme composant électrique ou composant électronique.
